# EUROPEAN PATENT APPLICATION

(11) **EP 4 700 651 A1**
(43) Date of publication of application: **25.02.2026**
(21) Application number: 24792777.5
(22) Date of filing: 19.04.2024
(51) Int. Cl.: G06N 3/008, A63H 11/00, G06Q 50/10

(54) **ELECTRONIC DEVICE, ACTION CONTROL SYSTEM, AND CONTROL SYSTEM**

(30) Priority: 20.04.2023 JP 2023069277; 21.04.2023 JP 2023069925; 21.04.2023 JP 2023069926; 21.04.2023 JP 2023069943; 21.04.2023 JP 2023070214; 21.04.2023 JP 2023070215; 21.04.2023 JP 2023070216; 21.04.2023 JP 2023070278; 21.04.2023 JP 2023070279; 28.04.2023 JP 2023074835; 28.04.2023 JP 2023074851; 08.06.2023 JP 2023095024
(71) Applicant: SoftBank Group Corp., Tokyo 105-7537 (JP)
(72) Inventor: SON, Masayoshi, Tokyo 105-7537 (JP); HASUMI, Kazutaka, Tokyo 105-7537 (JP)
(74) Representative: SSM Sandmair
(86) International application number: PCT/JP2024/015660
(87) International publication number: WO 2024/219506

(57) **Abstract**

An electronic device according to an embodiment includes a storage unit that stores, as data for deciding an emotion of each user, a relationship among an expression, a voice, a gesture, biometric information, and the emotion, for each user as a database.

## Description

### Field

The disclosed embodiments relate to an electronic device, an action control system, and a control system.

### Background

There is a conventionally disclosed technique of deciding an appropriate action of a robot in accordance with a state of a user (refer to Patent Literature 1, for example). Patent Literature 1 discloses an aspect in which user's reaction when the robot executes a specific action is recognized, and in a case where an action of the robot with respect to the recognized reaction of the user cannot be decided, information related to an action suitable for the recognized state of the user is received from the server to update the action of the robot.

### Citation List

### Patent Literature

Patent Literature 1: JP 6053847 A

### Summary

### Technical Problem

However, the known technology has room for improvement in executing an appropriate action corresponding to the action of the user.

The present invention has been made in view of the above, and aims to provide an electronic device, an action control system, and a control system capable of executing an appropriate action.

### Solution to Problem

According to a first embodiment, an electronic device is provided. The electronic device includes: a storage unit that stores, as data for deciding an emotion of each user, a relationship among an expression, a voice, a gesture, biometric information, and the emotion, for each user as a database.

According to a first embodiment, an electronic device is provided. The electronic device includes: an estimation unit that estimates the emotion of the user based on sensor information and a state of the user.

According to a first embodiment, an electronic device is provided. The electronic device includes: a prediction unit that predicts a future emotional state of the user from a change in a past emotional state of the user based on an emotion prediction model.

According to a first embodiment, an electronic device is provided. The electronic device includes: a prediction unit that analyzes emotions of a plurality of users existing in a same space and predicts an event to be caused by interaction between the users based on the analyzed emotions of each of the users.

According to a first embodiment, An action control system is provided. The action control system includes: an output controller that controls an electronic device having a text generation model to perform an action that promotes a positive emotional experience for the user by using an emotion database unique to each user.

According to a first embodiment, an electronic device is provided. The electronic device includes: a control unit that recognizes an action of a user, decides its own action using history data being updated based on the recognized action of the user and information related to the user, and controls a control target based on the decided own action.

According to a first embodiment, an electronic device is provided. The electronic device includes: a control unit that recognizes an action of a user, decides its own action based on the recognized action of the user and information related to the user, stored in a storing unit and that has undergone predetermined privacy protection measures and security measures, and controls a control target based on the decided own action.

According to a first embodiment, an electronic device is provided. The electronic device includes: a sensing unit that senses an emotional state of a user; and
a power control unit that controls power consumption based on the sensed emotional state of the user.

According to a first embodiment, an electronic device is provided. The electronic device includes: an emotion recognition unit that recognizes an emotion of a user based on an emotion recognition model generated for each user using information related to an operation of the user as input data.

According to a first embodiment, A control system, being a control system that controls an action of an electronic device is provided. The control system includes: a recognition unit that recognizes a state of a user;
an estimation unit that estimates an emotion of the user based on the state of the user recognized by the recognition unit; and
a control unit that controls a control target so as to express an emotion corresponding to the emotion of the user estimated by the estimation unit in alignment with the state of the user recognized by the recognition unit.

According to a first embodiment, an electronic device is provided. The electronic device includes: a recording control unit that processes at least part of information continuously detected by a sensor to generate information, and records the generated information; and
an operation decision unit that decides an operation of the electronic device for controlling an emotion value representing an emotion of the electronic device, based on the emotion value or information detected by the sensor. Advantageous Effects of Invention

According to an aspect of the embodiment, an appropriate action can be executed.

### Brief Description of Drawings

FIG. 1 is a diagram schematically illustrating an example of a control system according to the present embodiment.
FIG. 2 is a diagram schematically illustrating a functional configuration of a robot.
FIG. 3 is a diagram schematically illustrating an example of an operation flow related to an operation of deciding an action of the robot.
FIG. 4 is a diagram schematically illustrating an example of a hardware configuration of a computer that functions as a robot and a server.
FIG. 5 is a diagram illustrating an emotion map on which a plurality of emotions is mapped.
FIG. 6 is a diagram illustrating another example of the emotion map.
FIG. 7 is a diagram illustrating an example of an emotion table.
FIG. 8 is a diagram illustrating an example of the emotion table.
FIG. 9 includes (A) being an external view of a stuffed toy according to another embodiment, and (B) being an internal structural view of the stuffed toy.
FIG. 10 is a rear-front view of a stuffed toy according to another embodiment.
FIG. 11 is a diagram schematically illustrating a functional configuration of a robot.
FIG. 12 is a diagram schematically illustrating an example of an operation flow related to an operation of deciding an action of the robot.
FIG. 13 is a diagram schematically illustrating an example of a system 5 according to the present embodiment.
FIG. 14 is a diagram schematically illustrating a functional configuration of a robot 100.
FIG. 15 schematically illustrates an example of an operation flow performed by the robot 100.
FIG. 16 is a diagram schematically illustrating an example of a hardware configuration of a computer 1200.
FIG. 17 is a diagram schematically illustrating a functional configuration of a robot.
FIG. 18 is a diagram schematically illustrating an example of an operation flow related to an operation of deciding an action of the robot.
FIG. 19 is a diagram schematically illustrating a functional configuration of the robot 100.
FIG. 20 is a diagram schematically illustrating a data structure of character data 225.

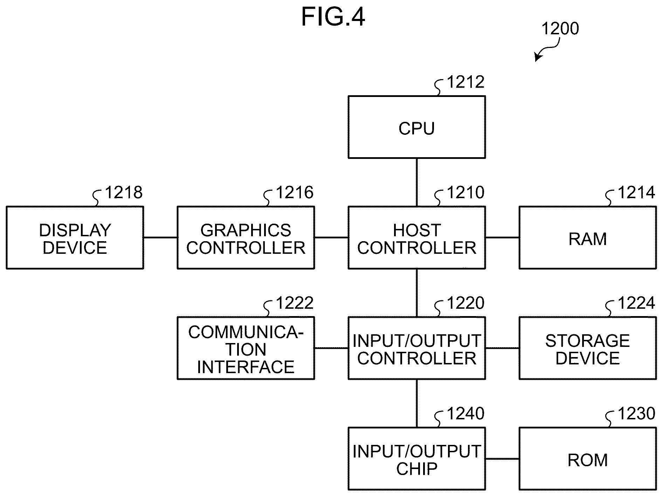

FIG. 4 is a diagram schematically illustrating an example of an operation flow related to setting of a character.

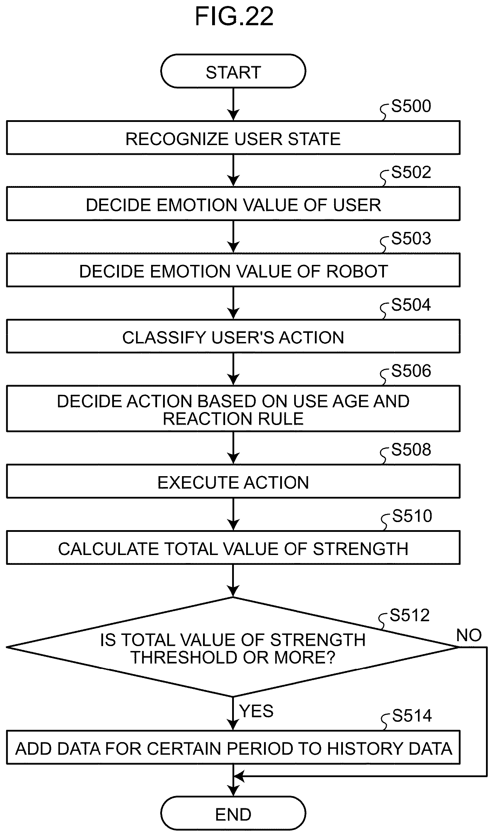

FIG. 22 is a diagram schematically illustrating an example of an operation flow performed by the robot 100.

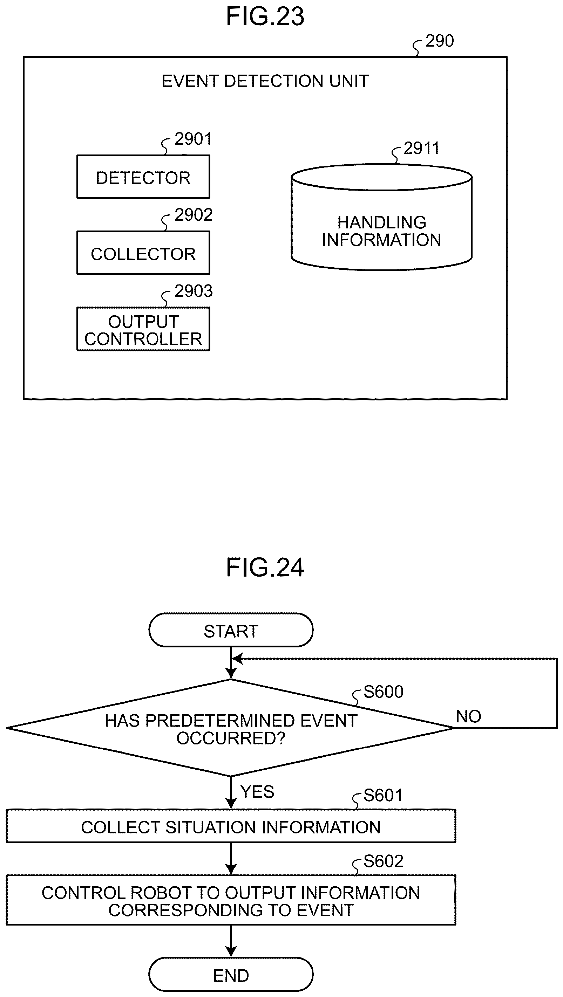

FIG. 23 is a diagram schematically illustrating a functional configuration of an event detection unit 290.
FIG. 24 is a diagram schematically illustrating an example of an operation flow performed by the event detection unit 290.

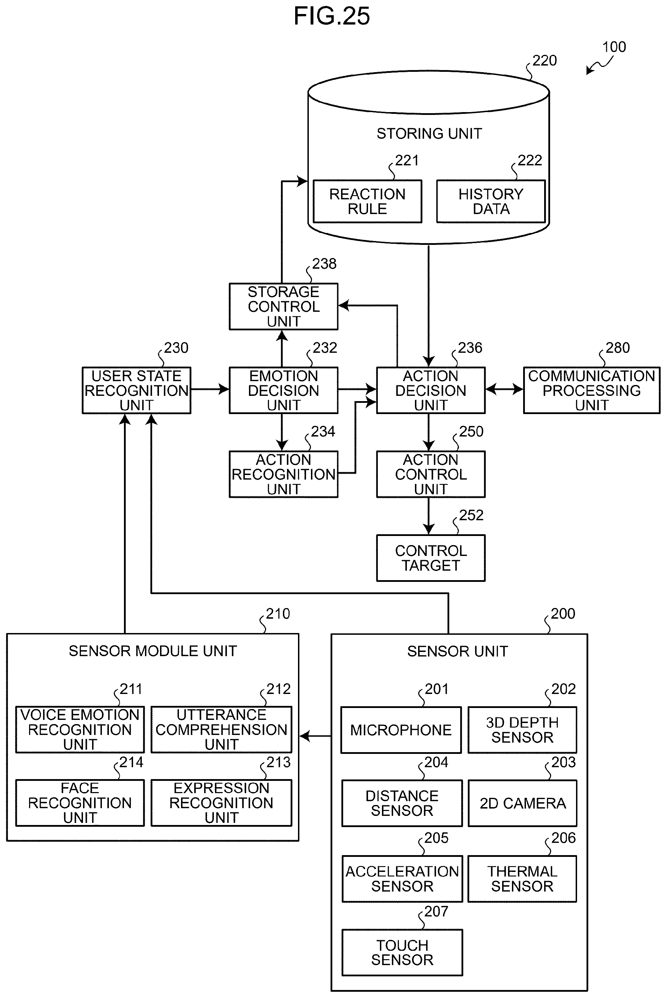

FIG. 25 is a diagram schematically illustrating a functional configuration of a robot.

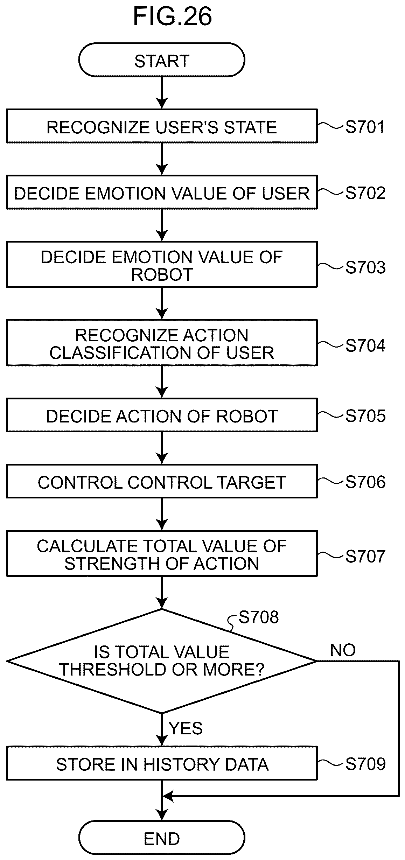

FIG. 26 is a diagram schematically illustrating an example of an operation flow related to an operation of deciding an action of the robot.

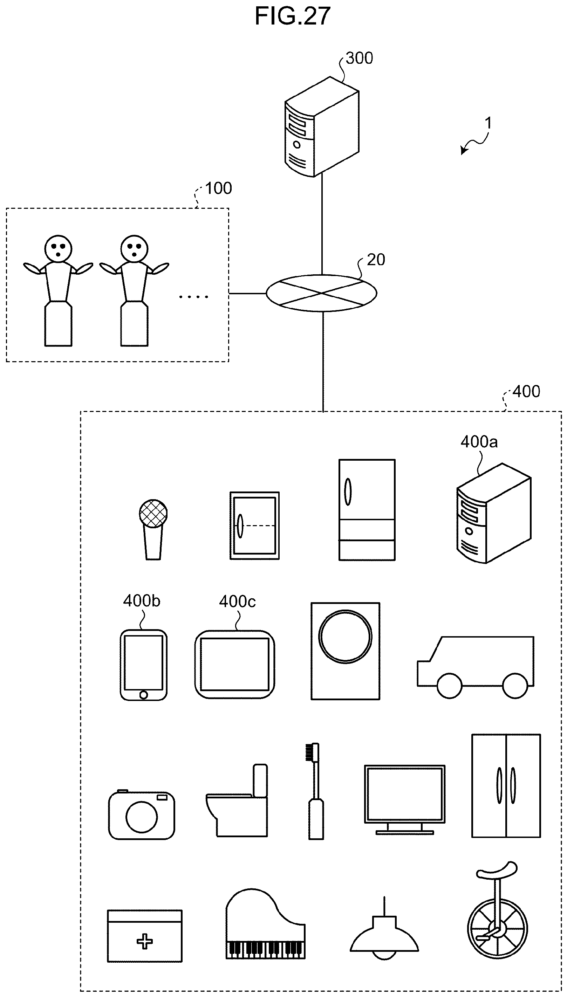

FIG. 27 is a diagram schematically illustrating an example of a control system according to the present embodiment.

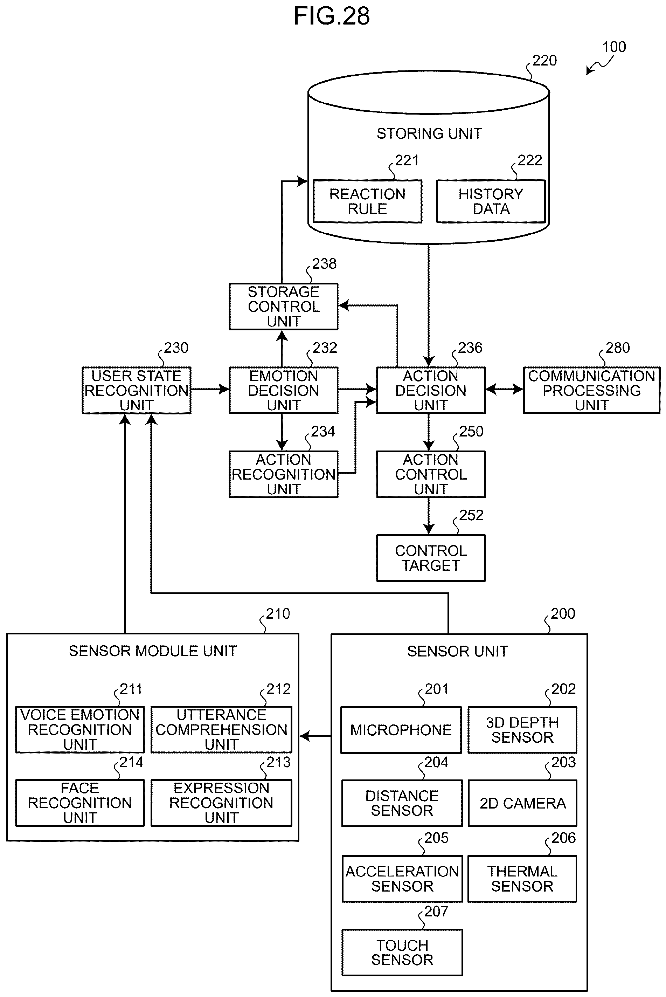

FIG. 28 is a diagram schematically illustrating a functional configuration of the robot.

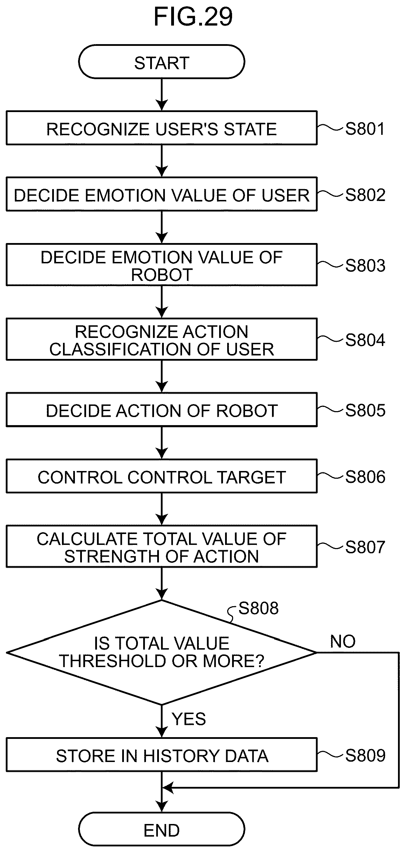

FIG. 29 is a diagram schematically illustrating an example of an operation flow related to an operation of deciding an action of the robot.

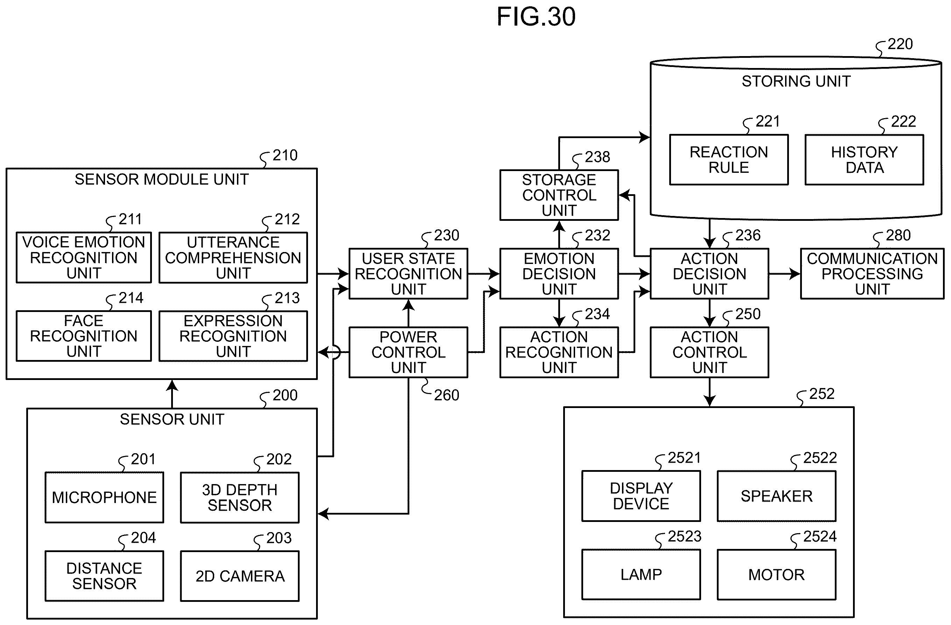

FIG. 30 is a diagram schematically illustrating a functional configuration of the robot 100.

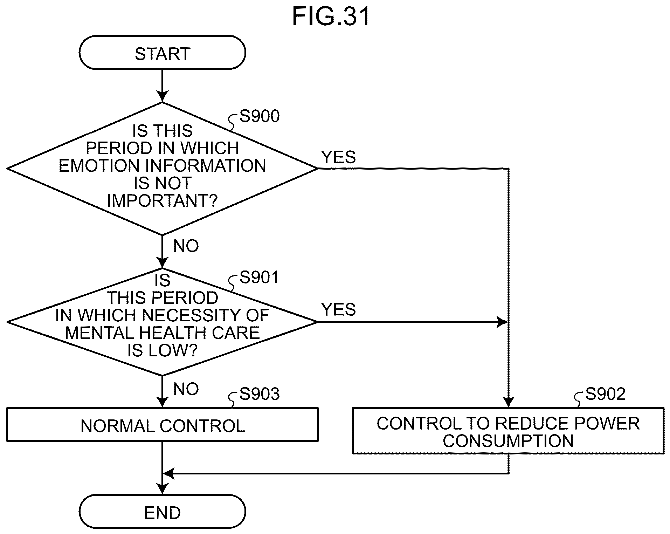

FIG. 31 is a diagram schematically illustrating an example of an operation flow related to power control of the robot 100.

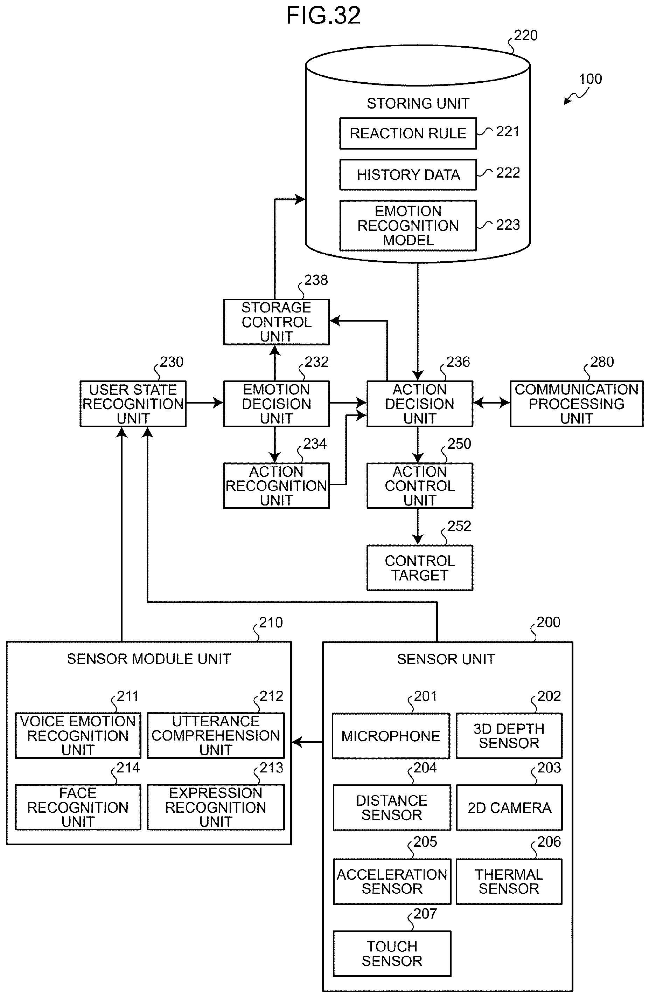

FIG. 32 is a diagram schematically illustrating a functional configuration of the robot.

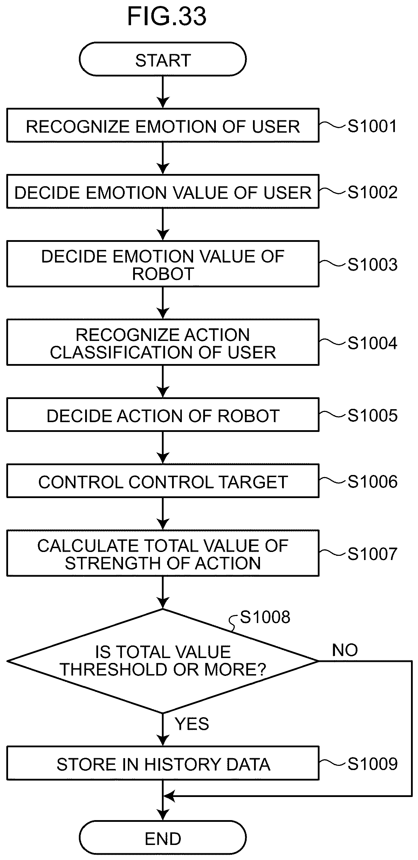

FIG. 33 is a diagram schematically illustrating an example of an operation flow related to an operation of deciding an action of the robot.

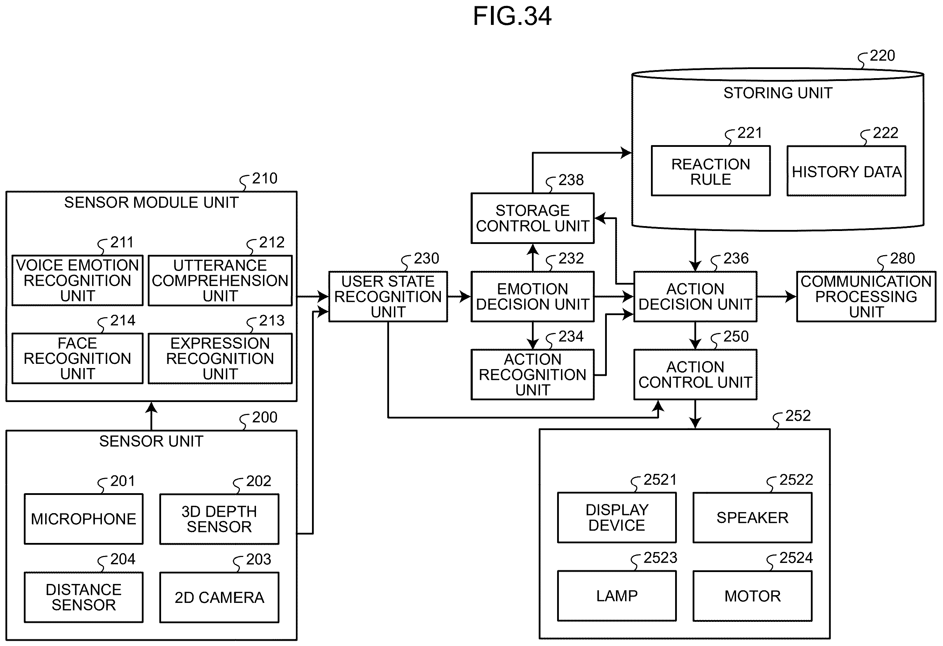

FIG. 34 is a diagram schematically illustrating a functional configuration of the robot 100.

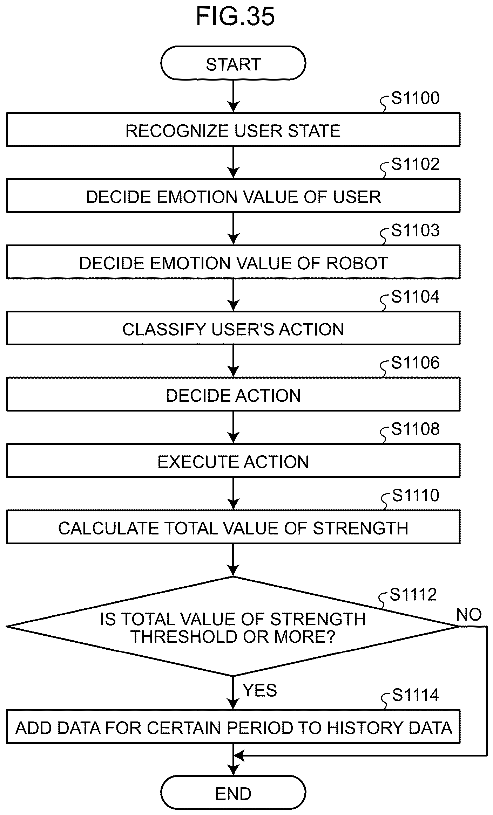

FIG. 35 is a diagram schematically illustrating an example of an operation flow performed by the robot 100.

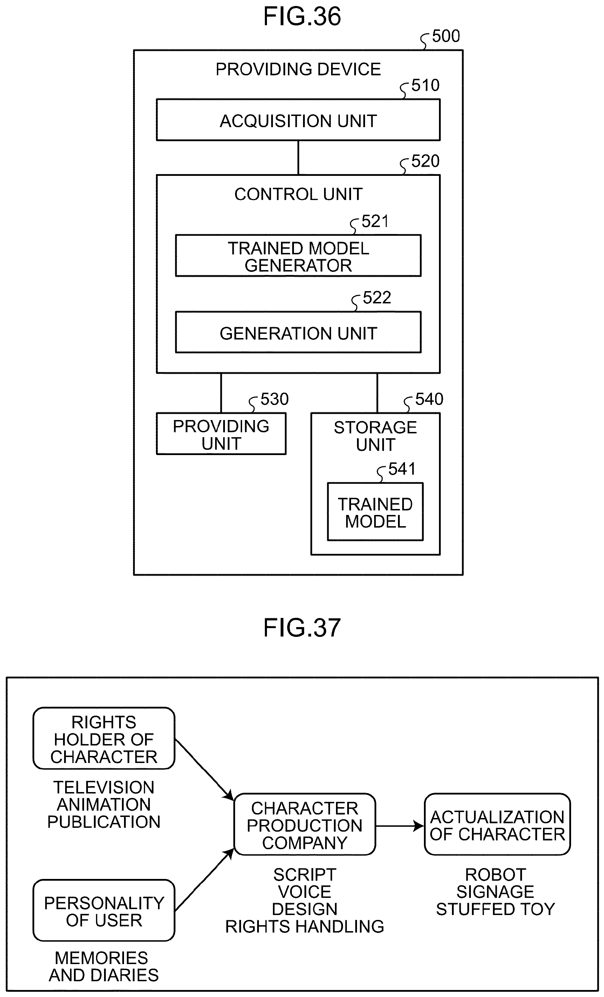

FIG. 36 is a block diagram illustrating an example of a configuration of a providing device 500.
FIG. 37 is a diagram for illustrating an example of the providing device 500.

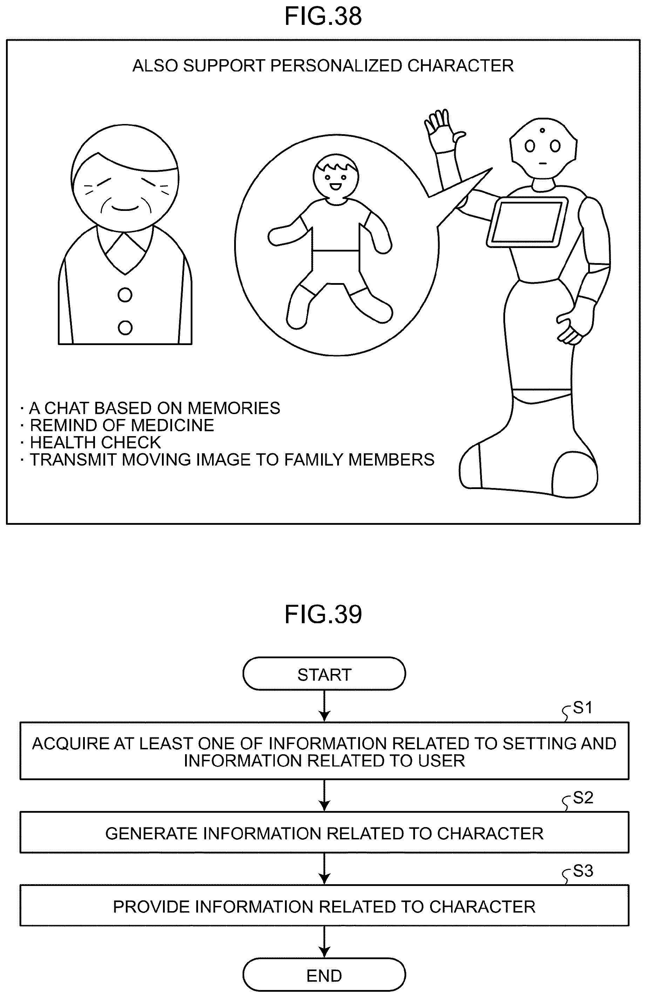

FIG. 38 is a diagram for illustrating an example of the providing device 500.
FIG. 39 is a flowchart illustrating an example of a flow of processing of the providing device 500.

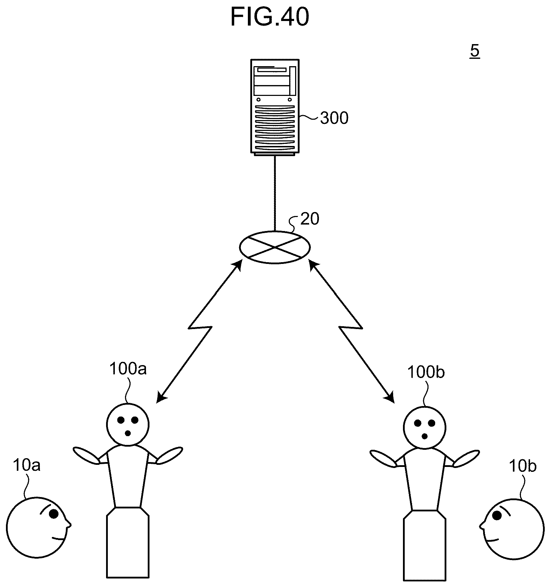

FIG. 40 is a diagram schematically illustrating an example of the system 5 according to the present embodiment.

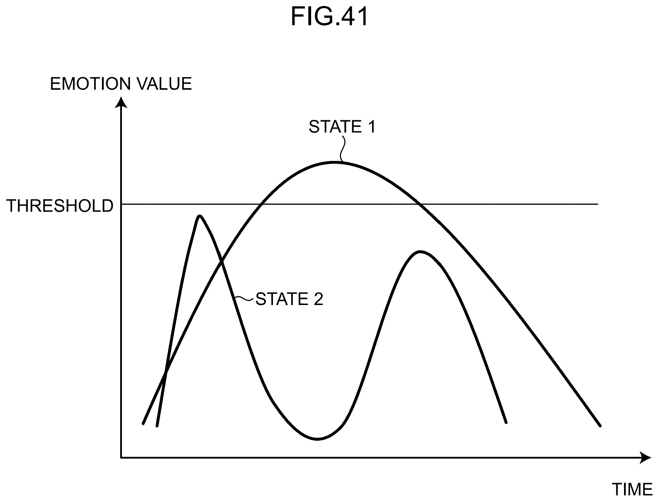

FIG. 41 is a diagram illustrating an example of an emotion value change.

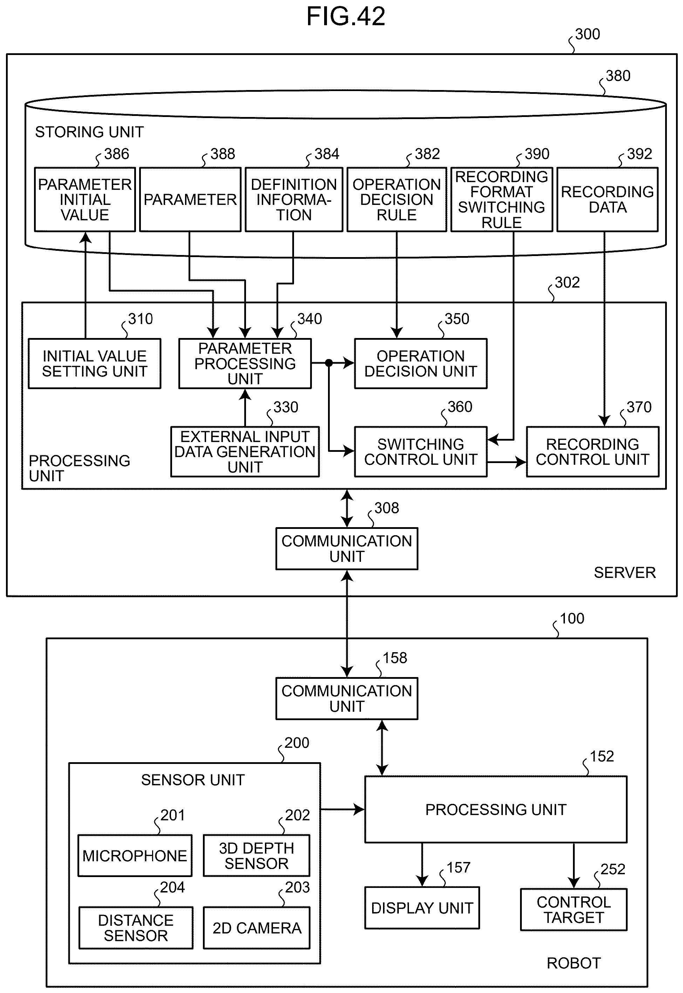

FIG. 42 is a diagram schematically illustrating a block configuration of a server 300 and the robot 100.

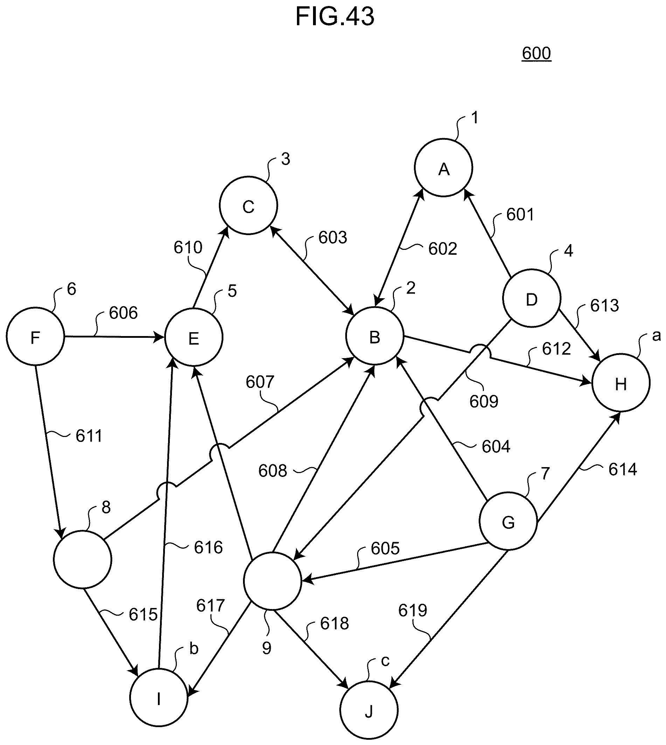

FIG. 43 is a diagram schematically illustrating a neural network 600.

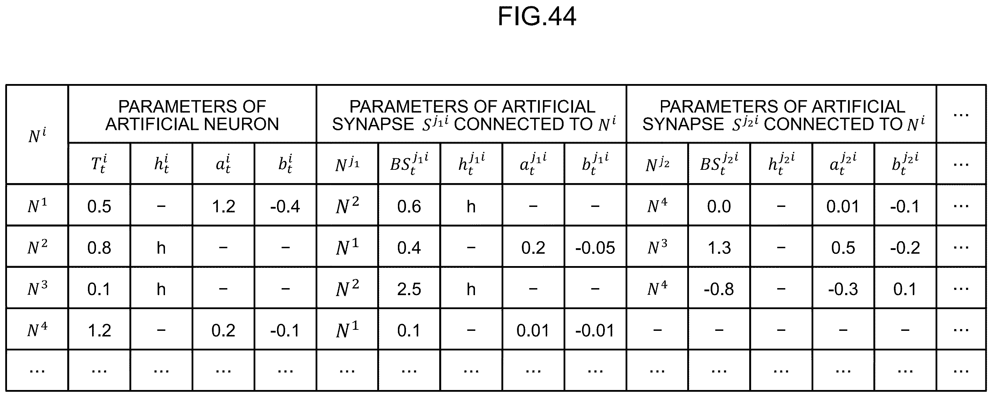

FIG. 44 is a diagram schematically illustrating parameters of a neural network in a form of a table.

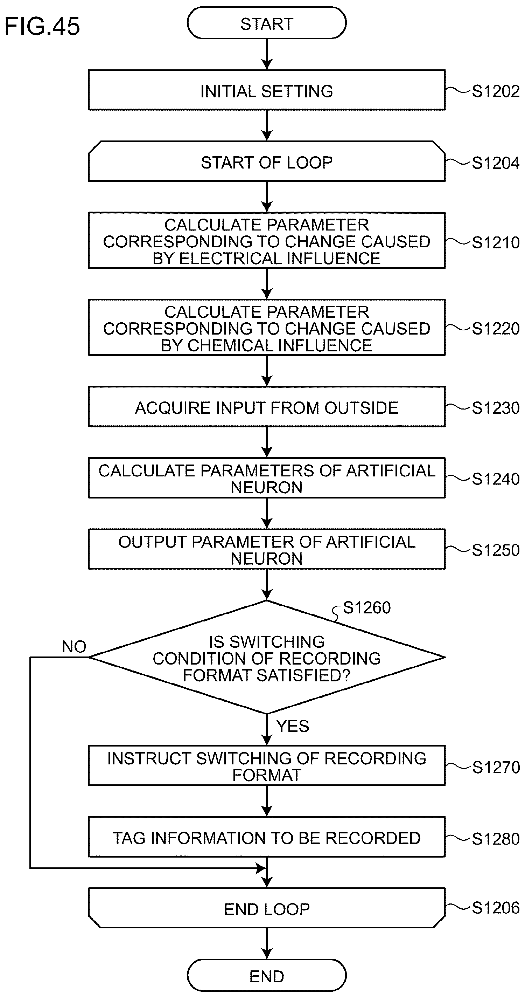

FIG. 45 is a diagram schematically illustrating an operation flow of the server 300 in a case where the robot 100 is activated or reset.

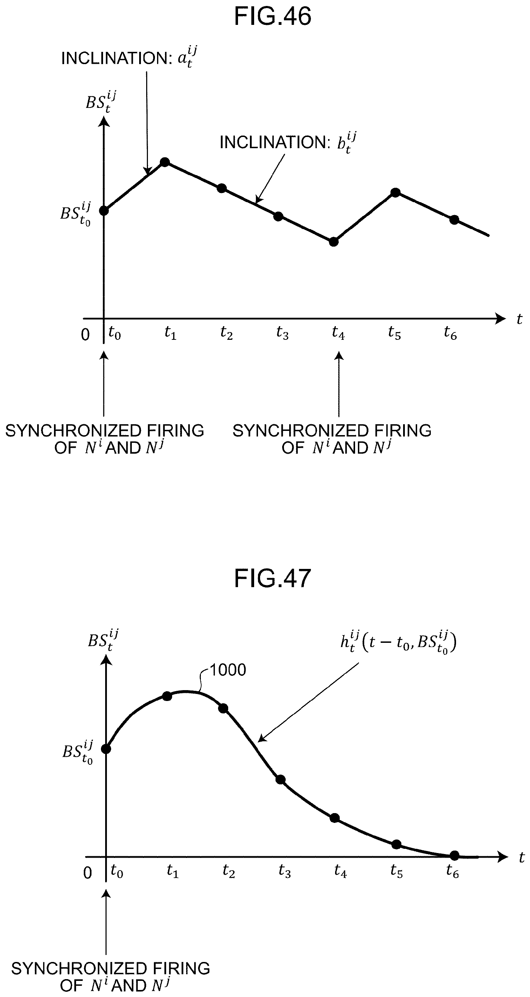

FIG. 46 is a diagram schematically illustrating calculation of a coupling coefficient of an artificial synapse.
FIG. 47 is a diagram schematically illustrating time evolution of a coupling coefficient in a case where a function htij is defined as an increase/decrease parameter of the coupling coefficient.

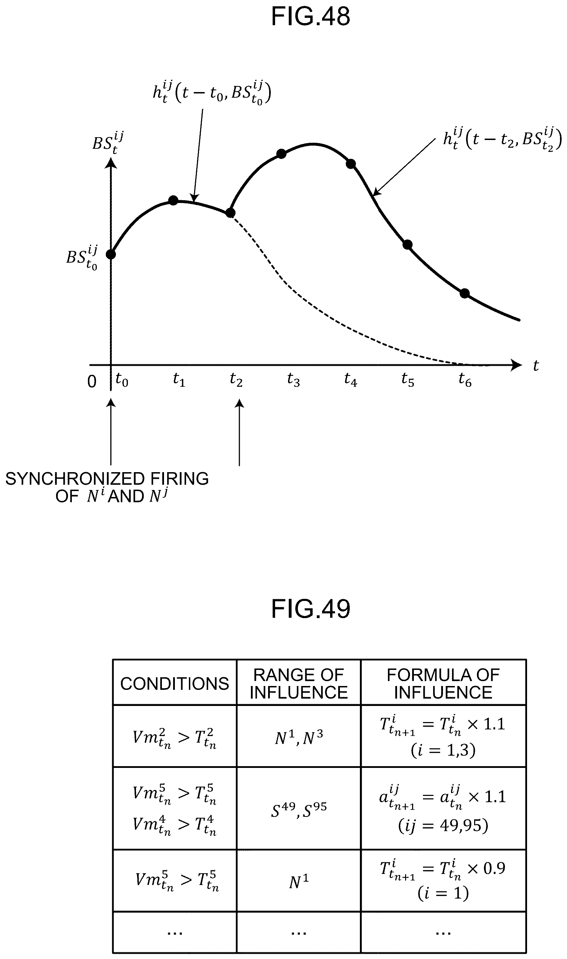

FIG. 48 is a diagram schematically illustrating time evolution of a coupling coefficient in a case where further synchronized firing is performed at time t2.
FIG. 49 is a diagram schematically illustrating influence definition information defining a chemical influence given to a parameter.

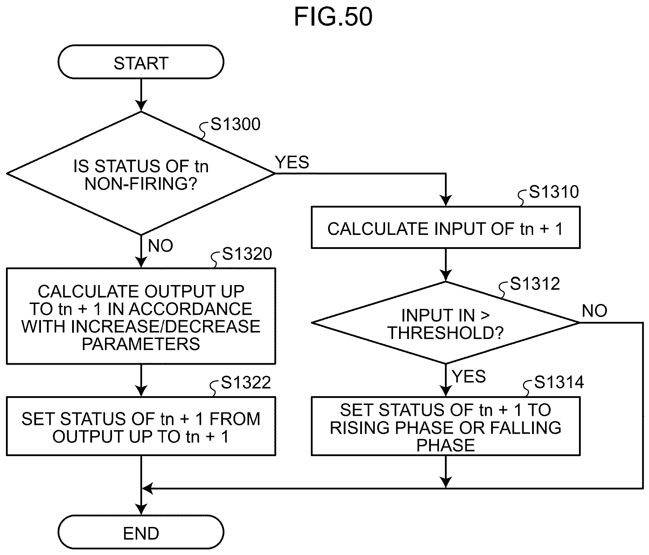

FIG. 50 is a diagram illustrating a flowchart calculating an internal state and a status.

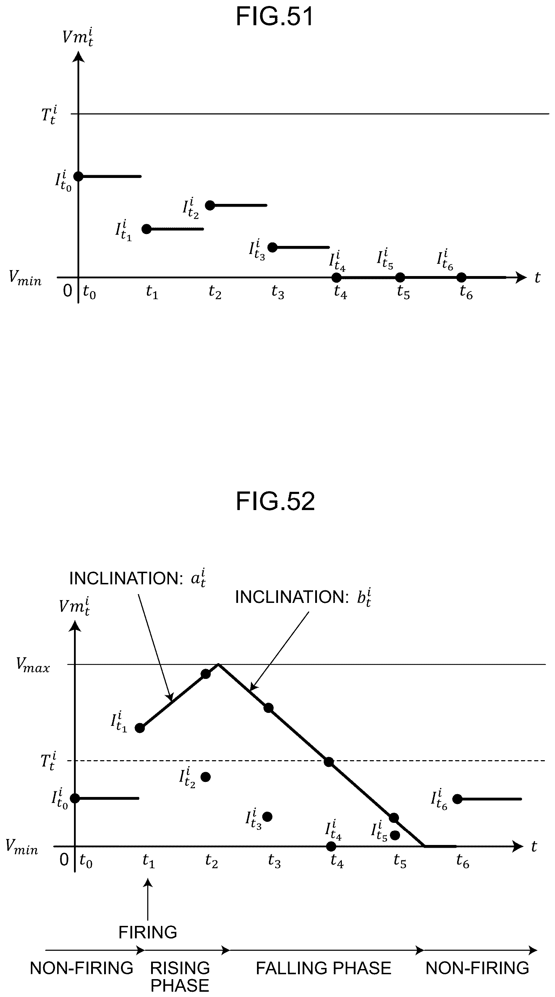

FIG. 51 is a diagram schematically illustrating a calculation example of an internal state in a case where an artificial neuron does not fire.
FIG. 52 is a diagram schematically illustrating a calculation example of an output in a case where an artificial neuron fires.

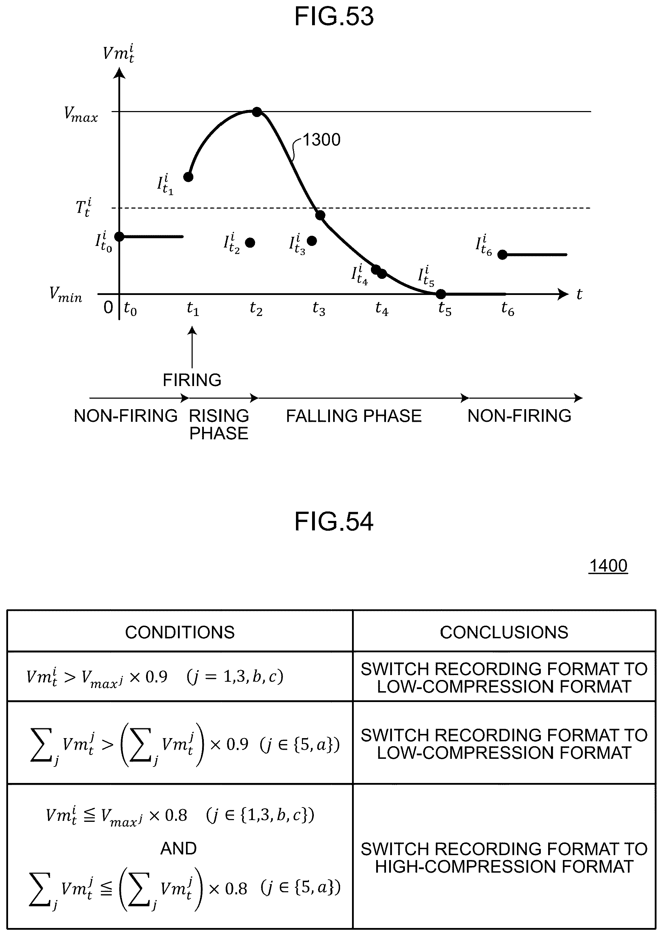

FIG. 53 is a diagram schematically illustrating time evolution of a coupling coefficient in a case where a function is defined as an increase/decrease parameter of an artificial neuron.
FIG. 54 is a diagram illustrating an example of a rule 1400 stored in a recording format switching rule 390 in a format of a table.

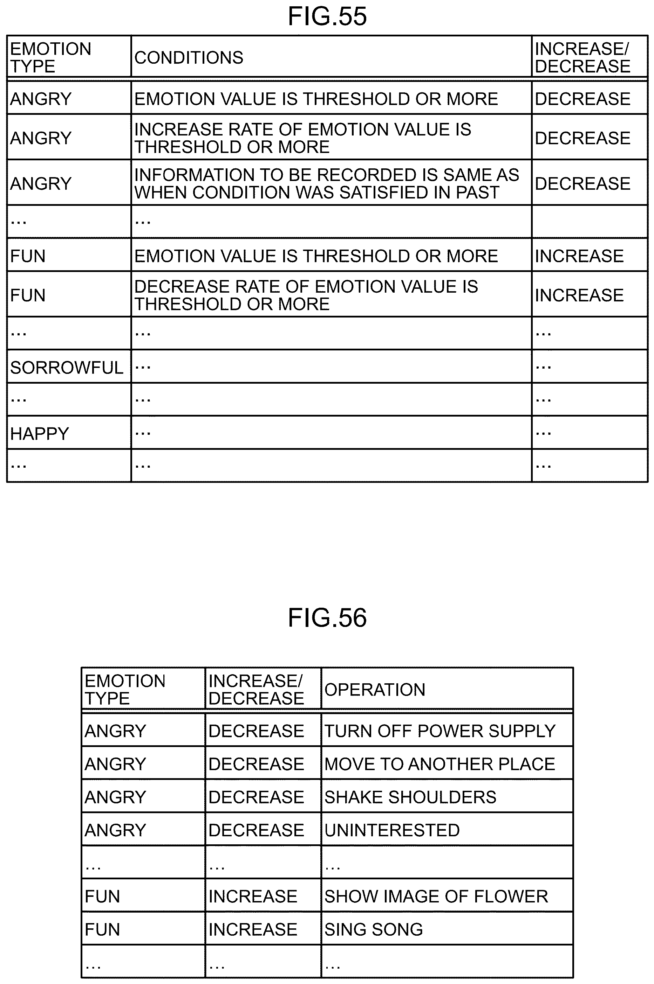

FIG. 55 is a diagram illustrating an example of a condition table.
FIG. 56 is a diagram illustrating an example of an operation table.

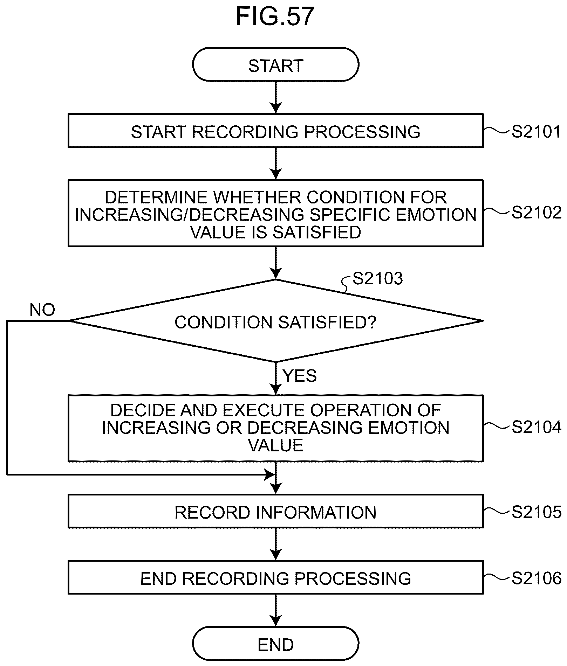

FIG. 57 is a flowchart illustrating a flow of processing of deciding an operation at a timing of recording information.

### Description of Embodiments

Hereinafter, the present invention will be described through embodiments, but the following embodiments do not limit the invention according to the claims. In addition, not all combinations of features described in the embodiments are essential to the solution of the invention. In addition, in the present embodiment, a "robot" will be described as an example of an electronic device. The electronic device may be device other than a robot, such as a stuffed toy, a portable terminal device like a smartphone, or an input device such as a smart speaker, etc. In each embodiment, description of descriptions already described in other embodiments is appropriately omitted.

### (First embodiment)

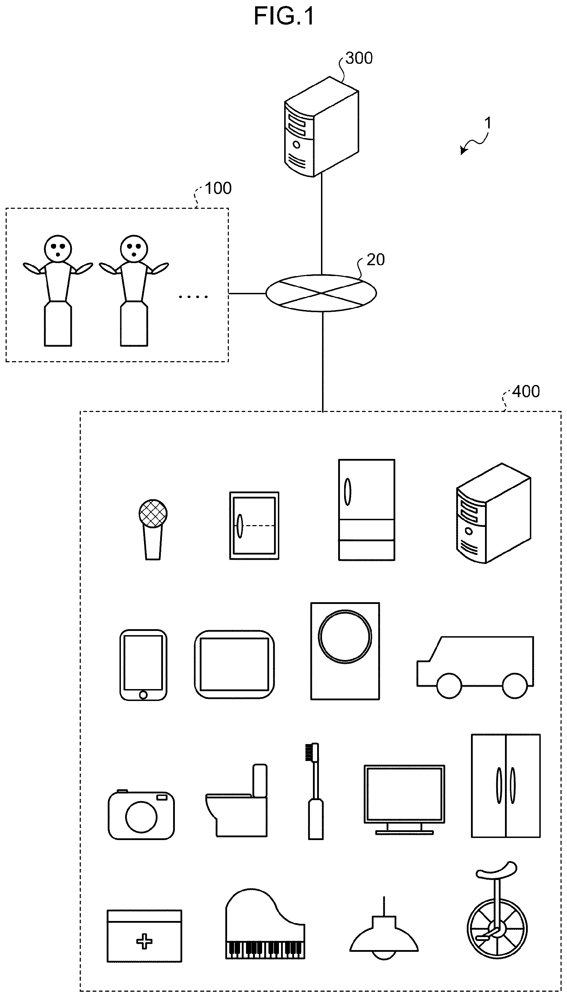

FIG. 1 is a diagram schematically illustrating an example of a control system 1 according to the present embodiment. As illustrated in FIG. 1, the control system 1 includes a plurality of robots 100, a cooperative device 400, and a server 300. Each of the plurality of robots 100 is managed by a user.

The robot 100 has a conversation with the user and provides a video to the user. At this time, the robot 100 performs the conversation with the user, provides the video, etc. to the user in cooperation with the server 300, etc. capable of communicating via a communication network 20. For example, the robot 100 not only performs self-learning of appropriate conversations, but also performs learning in cooperation with the server 300 so as to achieve more appropriate conversations with the user. In addition, the robot 100 causes the server 300 to record the captured video data and the like of the user, requests the video data, etc. from the server 300 as necessary, and provides the video data, etc. to the user.

Furthermore, the robot 100 has emotion values indicating types of its own emotions. For example, the robot 100 has emotion values indicating the intensity of each emotion of "delighted", "angry", "sad", "joyful", "pleasant", "unpleasant", "secure", "anxious", "sorrowful", "excited", "worried", "relieved", "fulfilled", "empty", and "neutral". For example, when the robot 100 has a conversation in a state of having a high emotion value of excitement with the user, the robot emits a voice at a high speed. In this manner, the robot 100 can express its own emotion by action.

Furthermore, the robot 100 may be configured to decide the action of the robot 100 corresponding to the emotion of the user 10 by using matching of a text generation model (also referred to as an Artificial Intelligence (AI) chat engine) with an emotion engine. Specifically, the robot 100 may be configured to recognize an action of the user 10, determine an emotion of the user 10 behind the action of the user, and decide an action of the robot 100 corresponding to the determined emotion.

More specifically, when having recognized an action of the user 10, the robot 100 uses a preset text generation model to automatically generate action content to be taken by the robot 100 with respect to the action of the user 10. The text generation model may be construed as an algorithm and an operation for automatic dialog processing with texts. The text generation model is known as disclosed in, for example, JP 2018 081444 A and chatGPT (Internet search <URL: https://openai.com/blog/chatgpt>), and thus a detailed description thereof will be omitted. Such a text generation model is configured by a Large Language Model (LLM). As described above, in the present embodiment, by combining a Large Language Model and an emotion engine, it is possible to reflect the emotions of the user 10 and the robot 100 and various linguistic information in the action of the robot 100. That is, according to the present embodiment, a synergistic effect can be obtained by combining the text generation model and the emotion engine.

In addition, the robot 100 has a function of recognizing an action of the user. The robot 100 recognizes the action of the user by analyzing a face image of the user acquired by a camera function and the voice of the user acquired by a microphone function. The robot 100 decides an action to be executed by the robot 100 based on the recognized action of the user or the like.

The robot 100 stores a rule defining an action to be executed by the robot 100 based on the emotion of the user, the emotion of the robot 100, and the action of the user, and performs various actions in accordance with the rule.

Specifically, the robot 100 has a reaction rule for deciding an action of the robot 100 based on the emotion of the user, the emotion of the robot 100, and the action of the user. The reaction rule defines, for example, that in a case where the action of the user is "smiling", the action of the robot 100 is to be an action of "smiling". In addition, the reaction rule defines, for example, that in a case where the action of the user is "getting angry", the action of the robot 100 is to be an action of "apologizing". In addition, the reaction rule defines, for example, that in a case where the action of the user is "asking a question", the action of the robot 100 is to be an action of "answer the question". The reaction rule defines, for example, that in a case where the action of the user is "expressing sorrow", the action of the robot 100 is to be an action of "offering words".

Based on the reaction rule, having recognized that the action of the user is "getting angry", the robot 100 selects an action of "apologizing" prescribed in the reaction rule, as the action to be executed by the robot 100. For example, when selecting the action of "apologizing", the robot 100 takes an action of "apologizing" and outputs a voice expressing a word of "apologizing".

In addition, it is prescribed that, when a condition that the emotion of the robot 100 is "neutral" (that is, "delighted" = 0, "angry" = 0, "sad" = 0, and "joyful" = 0) and the state of the user is "alone and looks sad" is satisfied, it is possible to execute an emotional change in which the emotion of the robot 100 turns to "worried" and an action of "offering words".

When the robot 100 recognizes that the current emotion of the robot 100 is "neutral" and the user is alone in a lonely state, the emotion value of "sad" of the robot 100 is increased based on the reaction rule. In addition, the robot 100 selects an action of "offering words" prescribed in the reaction rule as an action to be executed on the user. For example, when the action of "offering words" is selected, the robot 100 outputs a word "What's wrong?" indicating a concern in a concerned voice obtained by voice conversion.

In addition, the robot 100 transmits, to the server 300, user reaction information indicating that a positive reaction has been obtained from the user by this action. The user reaction information includes, for example, a user action of "getting angry", an action of the robot 100 of "apologizing", a positive reaction of the user, and an attribute of the user.

The server 300 stores the user reaction information received from each robot 100. Subsequently, the server 300 analyzes the user reaction information from each robot 100 and updates the reaction rule.

The robot 100 inquires the server 300 about the updated reaction rule to receive the updated reaction rule from the server 300. The robot 100 incorporates the updated reaction rule into the reaction rule stored in the robot 100. With this configuration, the robot 100 can incorporate the reaction rule acquired by other robots 100 into its own reaction rule. The reaction rule, when having been updated, may be automatically transmitted from the server 300 to the robot 100.

In addition, the robot 100 can execute an action in cooperation with the cooperative device 400. The cooperative device 400 is, for example, a karaoke device, a wine cellar, a refrigerator, a terminal device (Personal Computer (PC), smartphone, tablet, etc.), a washing machine, an automobile, a camera, a toilet facility, an electric toothbrush, a television, a display, furniture (a closet or the like), a medicine box, a musical instrument, a lighting device, or an exercise toy (a unicycle or the like). These cooperative devices 400 are communicably connected to the robot 100 via the communication network 20, and transmit and receive information to and from the robot 100. With this configuration, the cooperative device 400 performs its own control, a conversation with the user, and the like in accordance with an instruction from the robot 100.

The present disclosure will describe an example in which the robot 100 stores, as data for deciding the emotion of each user, a relationship among facial expression, voice, gesture, biometric information, and emotion, for each user as a database.

For example, the robot 100 stores, as data for deciding the emotion of each user, a relationship between the emotion and sensor information such as the user's expression, speech, body language, heart rate, respiration, body temperature, and electrodermal activity obtained by sensors such as a camera, a microphone, and a biometric sensor, as a database.

In addition, the robot 100 decides the emotion of the user using the sensor information and the database. For example, the robot 100 decides the emotion of the user using sensor information such as the user's expression, speech, body language, electrocardiogram, pulse, heartbeat interval, pulse wave interval, respiration rate, respiration interval, body temperature, and electrodermal activity obtained by sensors such as a camera, a microphone, and a biometric sensor, and using the database storing a relationship between various types of sensor information and emotions.

In addition, the robot 100 decides its own action corresponding to the emotion of the user, and controls the control target based on the decided own action. For example, when the emotion of the user is "sad", the robot 100 performs an action such as sympathizing with or encouraging the emotion of the user.

In addition, the robot 100 decides its own action in accordance with a combination of the emotion of the user and its own emotion. For example, the robot 100 makes a gesture of being delighted when the emotion of the user is "delighted" and the its own emotion is "joyful". On the other hand, when the emotion of the user is "delighted" and the own emotion is "sad", the robot takes a head lowering posture. At this time, the robot 100 can use parameter information for each emotion in addition to a simple combination of emotion types.

In addition, in a case where the emotion value indicating the positive/negative of the emotion of the user is a negative value, the robot 100 decides an action of increasing the emotion value of the user. For example, in a case where the emotion value indicating the positive/negative of the emotion of the user is a negative value, the robot 100 performs an action such as listening to the user quietly or encouraging the user.

In addition, when having received, from the user, a voice requesting to increase the emotion value, the robot 100 decides an action of increasing the emotion value of the user. For example, when having received a voice "Cheer me up" from the user, the robot 100 takes an action of encouraging the user. For example, when having received a voice "Raise my spirit" from the user, the robot 100 takes an action of sending a cheer to the user.

In this manner, in the present disclosure, by storing a relationship between data such as the user's expression, voice, body language, physiological index (pulse, respiration, body temperature, electrodermal activity), for example, and the emotion as a database, the robot 100 can efficiently classify, analyze, understand, and predict the emotion of the user. In addition, the robot 100 can recognize the emotion of the user using the database and execute an appropriate action.

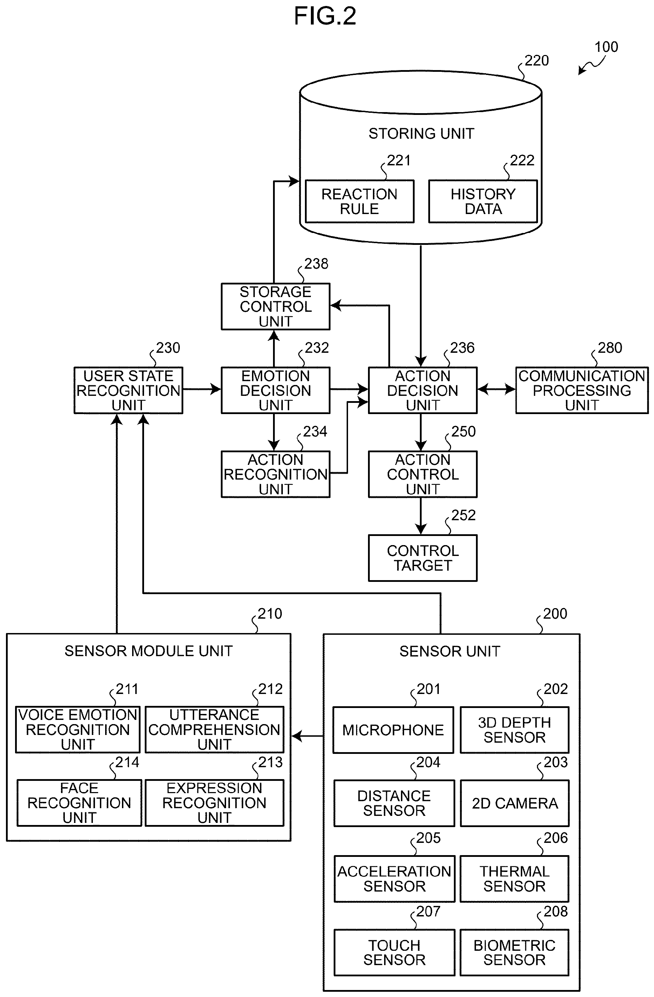

FIG. 2 is a diagram schematically illustrating a functional configuration of the robot 100. The robot 100 includes a control unit including a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, and a communication processing unit 280.

The control target 252 includes a display device, a speaker, LED for the eyes, motors that drive parts such as arms, hands, and legs. The posture and gesture of the robot 100 are controlled by controlling motors such as arms, hands, and legs. Part of the emotions of the robot 100 can be expressed by controlling these motors. The expression of the robot 100 can also be expressed by controlling the light emission state of the LED for the eyes of the robot 100. For example, the display device is provided on the chest of the robot 100. The expression of the robot 100 can also be expressed by controlling the display of the display device. The display device may display conversation content with the user as a text. The posture, gesture, and expression of the robot 100 are examples of attitude of the robot 100.

The sensor unit 200 includes a microphone 201, a 3D depth sensor 202, a 2D camera 203, a distance sensor 204, an acceleration sensor 205, a thermal sensor 206, a touch sensor 207, and a biometric sensor 208. The microphone 201 continuously detects a voice and outputs voice data. The microphone 201 may be provided on the head of the robot 100 and may have a function of performing binaural recording. The 3D depth sensor 202 detects the contour of an object by continuously projecting an infrared pattern and analyzing the infrared pattern from the infrared image continuously captured by the infrared camera. The 2D camera 203 is an example of an image sensor. The 2D camera 203 captures an image with visible light and generates video information of visible light. The contour of the object may be detected from the video information generated by the 2D camera 203. The distance sensor 204 detects a distance to an object by projecting a laser and an ultrasonic wave, for example. The acceleration sensor 205 is, for example, a gyro sensor, and detects the acceleration of the robot 100. The thermal sensor 206 detects a temperature around the robot 100. The touch sensor 207 is a sensor that detects a touch operation of the user, and is disposed on the head and the hand of the robot 100, for example. The biometric sensor 208 is a sensor for acquiring biometric information of the user, and detects, for example, information such as electrocardiogram, pulse, heartbeat interval, pulse wave interval, respiration rate, respiration interval, body temperature, and electrodermal activity of the user. The biometric sensor 208 is disposed, for example, at a portion assumed to be in contact with the user, such as the head and the hand of the robot 100. Note that the sensor unit 200 may further include a clock, a sensor for motor feedback, and the like.

Among the components of the robot 100 illustrated in FIG. 2, the components other than the control target 252 and the sensor unit 200 are examples of components included in the action control system in the robot 100. The action control system of the robot 100 controls the control target 252 as a target.

The storing unit 220 (storage unit) includes a reaction rule 221 and history data 222. The history data 222 includes history of past emotion values of the user and history of actions of the user. The history of emotion values and actions is recorded for each user, for example, by being associated with identification information of the user. At least a part of the storing unit 220 is implemented by a storage medium such as memory. A person DB that stores a face image of the user, attribute information of the user, and the like may be included. In addition, the storing unit 220 may include an emotion DB that stores, as a database, a relationship among the user's expression, voice, gesture, biometric information, and emotion. Here, the database stored in the emotion DB may be a combination of a hierarchical database, a relational database, a graph database, and the like depending on purposes of speeding up search performance or expressing a complicated correlation or other purposes. In addition, the database stored in the emotion DB may be configured in consideration of extensibility and optimization as a data set used for understanding, analyzing, and predicting emotions. Among the components of the robot 100 illustrated in FIG. 2, the functions of the components other than the control target 252, the sensor unit 200, and the storing unit 220 can be implemented by the CPU operating based on a program. For example, the functions of these components can be implemented as the operation of the CPU by basic software (OS) and a program operating on the OS.

The sensor module unit 210 includes a voice emotion recognition unit 211, an utterance comprehension unit 212, an expression recognition unit 213, and a face recognition unit 214. Information detected by the sensor unit 200 is input to the sensor module unit 210. The sensor module unit 210 analyzes the information detected by the sensor unit 200 and outputs an analysis result to the user state recognition unit 230.

The voice emotion recognition unit 211 of the sensor module unit 210 analyzes the voice of the user detected by the microphone 201 to recognize the emotion of the user. For example, the voice emotion recognition unit 211 extracts a feature such as a frequency component of voice and recognizes an emotion of the user based on the extracted feature. The utterance comprehension unit 212 analyzes the voice of the user detected by the microphone 201 and outputs textual information indicating utterance content of the user.

The expression recognition unit 213 recognizes the expression of the user and the emotion of the user from the image of the user captured by the 2D camera 203. For example, the expression recognition unit 213 recognizes the expression and emotion of the user based on the shapes, positional relationships, and the like of the eyes and the mouth.

The face recognition unit 214 recognizes the face of the user. The face recognition unit 214 recognizes the user by checking the match between a face image stored in a person DB (not illustrated) and a face image of the user captured by the 2D camera 203.

The user state recognition unit 230 recognizes the state of the user based on the information analyzed by the sensor module unit 210. For example, processing mainly related to perception is performed using the analysis result of the sensor module unit 210. For example, the user state recognition unit 230 generates perception information such as "The user is smiling.", "The user is talking.", and "The probability that the user is enjoying conversation is 70%.", and performs processing of understanding the meaning of the generated perception information. For example, the user state recognition unit 230 generates semantic information such as "The user is smiling and seems to be enjoying the conversation".

The emotion decision unit 232 decides an emotion value indicating the emotion of the user based on the information analyzed by the sensor module unit 210 and the state of the user recognized by the user state recognition unit 230. For example, the information analyzed by the sensor module unit 210 and the recognized state of the user are input to a neural network trained in advance, and an emotion value indicating the emotion of the user is acquired.

Here, the emotion value indicating the emotion of the user is a value indicating whether the emotion of the user is positive/negative. For example, if the emotion of the user is a bright emotion accompanied with pleasure or comfort, such as "delighted", "joyful", "pleasant", "secure", "excited", "relieved", and "fulfilled", then, the emotion value indicates a positive value which becomes larger as the emotion is brighter. When the user's emotion is a negative emotion, such as "angry", "sad", "unpleasant", "anxious", "sorrowful", "worried", and "empty", the value indicates a negative value, and the absolute value of the negative value is larger as the user feels more unpleasant. In a case where the user's emotion is not any of the above ("neutral"), the value indicates a value of 0.

In addition, the emotion decision unit 232 decides the emotion of the user by using a database that stores a relationship among the sensor information, the user's expression, voice, gesture, biometric information, and emotion. For example, the emotion decision unit 232 decides the emotion of the user using sensor information such as the user's expression, speech, body language, electrocardiogram, pulse, heartbeat interval, pulse wave interval, respiration rate, respiration interval, body temperature, and electrodermal activity obtained by sensors such as a camera, a microphone, and a biometric sensor, and using the database storing a relationship between various types of sensor information and emotions. Here, the database storing the relationship between the sensor information and the emotion, which is to be used by the emotion decision unit 232 to decide the user' emotion, may be a combination of a hierarchical database, a relational database, a graph database, and the like depending on purposes of speeding up search performance or expressing a complicated correlation or other purposes. In addition, the database to be used by the emotion decision unit 232 to decide the emotion of the user may be configured in consideration of extensibility and optimization as a data set used for understanding, analyzing, and predicting emotions.

In addition, the emotion decision unit 232 decides an emotion value indicating the emotion of the robot 100 based on the information analyzed by the sensor module unit 210 and the state of the user recognized by the user state recognition unit 230.

The emotion value of the robot 100 includes the emotion value for each of a plurality of emotion classifications, and is, for example, a value (0 to 5) indicating the intensity of each of items of "delighted", "angry", "sad", and "joyful". Specifically, the emotion decision unit 232 decides an emotion value indicating the emotion of the robot 100 in accordance with a rule for updating the emotion value of the robot 100 prescribed in association with the information analyzed by the sensor module unit 210 and the state of the user recognized by the user state recognition unit 230.

For example, in a case where the user state recognition unit 230 recognizes that the user looks sad, the emotion decision unit 232 increases the emotion value of "sad" of the robot 100. In a case where the user state recognition unit 230 recognizes that the user is now smiling, the emotion value of "delighted" of the robot 100 is increased.

The emotion decision unit 232 may decide the emotion value indicating the emotion of the robot 100 in further consideration of the state of the robot 100. For example, in a case where the remaining battery level of the robot 100 is low, a case where the surrounding environment of the robot 100 is completely dark, or the like, the emotion value of "sad" of the robot 100 may be increased. Furthermore, in the case of the user who desires to continue the dialog even though the remaining battery level is low, the emotion value of "anger" may be increased.

The action recognition unit 234 recognizes an action of the user based on the information analyzed by the sensor module unit 210 and the state of the user recognized by the user state recognition unit 230. For example, the information analyzed by the sensor module unit 210 and the recognized state of the user are input to a neural network trained in advance to acquire the probability of each of a plurality of predetermined action classifications (for example, "smile", "get angry", "ask a question", and "expressing sorrow"), and the action classification having the highest probability is to be recognized as the action of the user. For example, the action recognition unit 234 recognizes an action of the user, such as "talking", "listening", and "sitting".

As described above, in the present embodiment, the robot 100 acquires the utterance content of the user after specifying the user. In the acquisition and use of the utterance content, the action control system of the robot 100 according to the present embodiment considers protection of personal information and privacy of the user in addition to acquisition of necessary consent according to laws and regulations from the user.

Based on the current emotion value of the user decided by the emotion decision unit 232, the history data 222 of the past emotion values decided by the emotion decision unit 232 before the current emotion value of the user is decided, and the emotion value of the robot 100, the action decision unit 236 decides an action corresponding to the action of the user recognized by the action recognition unit 234. While the present embodiment will describe a case where the action decision unit 236 uses one most recent emotion value included in the history data 222 as the past emotion value of the user, the disclosed technology is not limited to this aspect. For example, the action decision unit 236 may use a plurality of most recent emotion values as the past emotion values of the user, or may use emotion values that are earlier by a unit period such as a day before. In addition, the action decision unit 236 may decide an action corresponding to the action of the user in further consideration of the history of past emotion values of the robot 100 in addition to the current emotion value of the robot 100. The action decided by the action decision unit 236 includes a gesture performed by the robot 100 or utterance content of the robot 100.

The action decision unit 236 according to the present embodiment decides the action of the robot 100 as the action corresponding to the action of the user based on a combination of the past emotion value and the current emotion value of the user, the emotion value of the robot 100, the action of the user, and the reaction rule 221. For example, in a case where the past emotion value of the user is a positive value and the current emotion value is a negative value, the action decision unit 236 decides an action for changing the emotion value of the user to a positive value as the action corresponding to the action of the user.

The action decision unit 236 may decide an action corresponding to the action of the user 10 based on the emotion of the robot 100. For example, when the emotion value of "angry" or "sad" of the robot 100 has increased in a case where the robot is abused by the user 10, in a case where the user 10 takes an arrogant attitude (that is, in a case where the user's reaction is unfavorable), in a case where the voice of the user 10 cannot be detected due to surrounding noise, in a case where the remaining battery level of the robot 100 is low, or the like, the action decision unit 236 may decide an action corresponding to the increase in the emotion value of "angry" or "sad" as the action corresponding to the action of the user 10. In addition, in a case where the emotion value of "delighted" or "joyful" of the robot 100 has increased in a case where the user's reaction is favorable, a case where the remaining battery level of the robot 100 is high, or the like, the action decision unit 236 may decide an action corresponding to the increase in the emotion value of "delighted" or "joyful" as an action corresponding to the action of the user 10. The action decision unit 236 may decide an action different from the action toward the user 10 that has increased the emotion values of "angry" and "sad" of the robot 100, as an action toward the user 10 that has increased the emotion values of "delighted" and "joyful" of the robot 100. In this manner, the action decision unit 236 may decide different actions depending not only on the own emotion of the robot or the action of the user but also on how the user has changed its own emotion.

The reaction rule 221 defines the action of the robot 100 corresponding to the combination of the past emotion value and the current emotion value of the user, the emotion value of the robot 100, and the action of the user. For example, in a case where the past emotion value of the user is a positive value, the current emotion value is a negative value, and the action of the user is expressing sorrow, a combination of a gesture and utterance content to be used at the time of offering words with gesture to encourage the user is prescribed as the action of the robot 100.

For example, in the reaction rule 221, the action of the robot 100 is determined for all combinations of the pattern of the emotion value of the robot 100 (1296 patterns, which is the fourth power of six values, namely, values "0" to "5" of "delighted", "angry", "sad", and "joyful"), the pattern of the combination of the past emotion value and the current emotion value of the user, and the action pattern of the user. That is, for each pattern of the emotion value of the robot 100, the action of the robot 100 corresponding to the action pattern of the user is determined for each of the plurality of combinations such as the case where the combination of the past emotion value and the current emotion value of the user include combinations of a negative value and a negative value, a negative value and a positive value, a positive value and a negative value, a positive value and a positive value, a negative value and a neutral value, and a neutral value and a neutral value. In a case where the user has made an utterance that intends to have a conversation continued from a past topic such as "I want to talk about the topic I discussed earlier", for example, the action decision unit 236 may transition to the operation mode of deciding the action of the robot 100 using the history data 222.

The reaction rule 221 may prescribe at least one of a gesture and statement content as an action of the robot 100 for each of patterns (1296 patterns) of the emotion value of the robot 100 at the maximum. Alternatively, the reaction rule 221 may prescribe at least one of a gesture and statement content as an action of the robot 100 for each of the groups of the patterns of the emotion values of the robot 100.

The strength of a gesture is prescribed for each gesture included in the action of the robot 100 prescribed in the reaction rule 221. The strength of utterance content is prescribed for each utterance content included in the action of the robot 100 prescribed in the reaction rule 221. For example, the reaction rule 221 defines an action of the robot 100 corresponding to an action pattern such as a case where the user is speaking, a case where the user is listening, or a case where the user is sitting, or performing an utterance ("Cheer me up", "Raise my spirit", or "Just listen to me") related to the request of the user.

The storage control unit 238 decides whether to store data including the action of the user in the history data 222 based on the strength of the action predetermined for the action decided by the action decision unit 236 and the emotion value of the robot 100 decided by the emotion decision unit 232.

Specifically, in a case where the total value of the sum of the emotion values for each of the plurality of emotion classifications of the robot 100 and the strength that is the sum of the strength predetermined for the gesture included in the action decided by the action decision unit 236 and the strength predetermined for the utterance content included in the action decided by the action decision unit 236 is a threshold or more, it is decided to store data including the action of the user in the history data 222.

Having decided to store the data including the action of the user in the history data 222, the storage control unit 238 stores the action decided by the action decision unit 236, the information (for example, any surrounding information including data such as a sound, an image, and a smell of the place) analyzed by the sensor module unit 210 from the current time point to a certain period before, and the state of the user (for example, the expression and emotion of the user) recognized by the user state recognition unit 230 in the history data 222.

The action control unit 250 controls the control target 252 based on the action decided by the action decision unit 236. For example, when the action decision unit 236 has determined an action including utterance, the action control unit 250 controls to output a voice from a speaker included in the control target 252. At this time, the action control unit 250 may decide the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion decision unit 232. For example, the action control unit 250 decides its own action corresponding to the emotion of the user, and controls the control target based on the decided own action. For example, when the emotion of the user is "sad", the robot 100 performs an action such as sympathizing with or encouraging the emotion of the user. The action control unit 250 decides one's own action in accordance with a combination of the decided user's emotion and the decided its own emotion. For example, the action control unit 250 makes a gesture of being delighted when the emotion of the user is "delighted" and the robot's own emotion is "joyful". On the other hand, when the emotion of the user is "delighted" and the own emotion is "sad", for example, the robot 100 takes a head lowering posture. At this time, the action control unit 250 can use parameter information for each emotion in addition to a simple combination of emotion types. In addition, in a case where the emotion value indicating the positive/negative of the emotion of the user is a negative value, the action control unit 250 decides an action of increasing the emotion value of the user. For example, in a case where the emotion value indicating positive/negative of the emotion of the user is a negative value, the action control unit 250 performs an action such as quietly listening to the talk or encouraging the user so as to increase the emotion value of the user. In addition, when having received, from the user, a voice requesting to increase the emotion value, the action control unit 250 decides an action of increasing the emotion value of the user. For example, the action control unit 250 receives a voice "Cheer me up" from the user and takes an action of encouraging the user. For example, when having received a voice "Raise my spirit" from the user, the action control unit 250 takes an action of sending a cheer to the user.

The action control unit 250 may recognize a change in emotion of the user about the execution of the action decided by the action decision unit 236. For example, the change in emotion may be recognized based on the voice or expression of the user. In addition, a change in emotion of the user may be recognized based on detection of an impact by the touch sensor included in the sensor unit 200. In a case where an impact is detected by the touch sensor included in the sensor unit 200, it is allowable to recognize that the emotion of the user is worsened, or in a case where it is determined that the reaction of the user is smiling or delighted from the detection result of the touch sensor included in the sensor unit 200, it is allowable to recognize that the emotion of the user is improved. Information indicating the reaction of the user is output to the communication processing unit 280.

Furthermore, after the action control unit 250 executes the action decided by the action decision unit 236 in the execution mode decided in accordance with the emotion of the robot 100, the emotion decision unit 232 further changes the emotion value of the robot 100 based on the user's reaction to the execution of the action. Specifically, in a case where the user's reaction to the action decided by the action decision unit 236 performed on the user in the execution mode decided by the action control unit 250 is not bad, the emotion decision unit 232 increases the emotion value of "delighted" of the robot 100; in a case where the user's reaction to the action decided by the action decision unit 236 performed on the user in the execution mode decided by the action control unit 250 is bad, the emotion decision unit 232 increases the emotion value of "sad" of the robot 100.

Furthermore, the action control unit 250 expresses the emotion of the robot 100 based on the decided emotion value of the robot 100. For example, when having increased the emotion value of "delighted" of the robot 100, the action control unit 250 controls the control target 252 to cause the robot 100 to make a gesture of delight. Furthermore, when having increased the emotion value of "sad" of the robot 100, the action control unit 250 controls the control target 252 such that the posture of the robot 100 takes a head lowering posture.

The communication processing unit 280 is responsible for communication with the server 300. As described above, the communication processing unit 280 transmits the user reaction information to the server 300. Furthermore, the communication processing unit 280 receives the updated reaction rule from the server 300. When having received the updated reaction rule from server 300, the communication processing unit 280 updates the reaction rule 221. The communication processing unit 280 can transmit and receive information to and from the cooperative device 400.

The server 300 performs communication between each robot 100 and the server 300, receives the user reaction information transmitted from the robot 100, and updates the reaction rule based on the reaction rule including the action for which a positive reaction has been obtained.

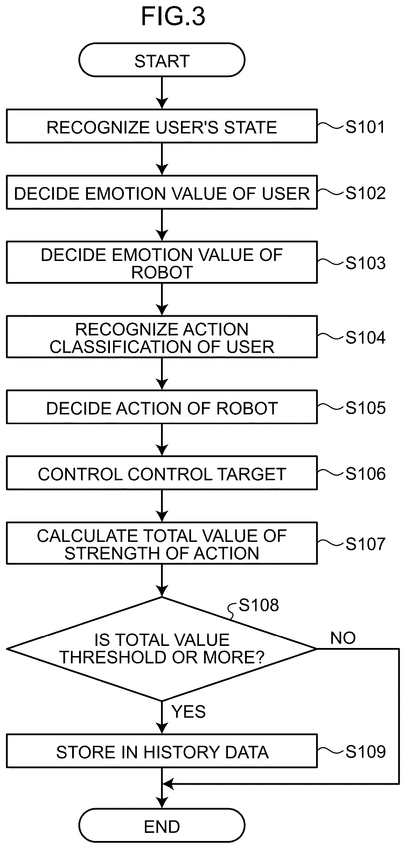

FIG. 3 is a diagram schematically illustrating an example of an operation flow related to an operation of deciding an action of the robot 100. The operation flow illustrated in FIG. 3 is repeatedly executed. At this time, it is assumed that information analyzed by the sensor module unit 210 is input. Note that "S" in the operation flow represents a step to be executed.

First, in step S101, the user state recognition unit 230 recognizes the state of the user based on the information analyzed by the sensor module unit 210. For example, the user state recognition unit 230 generates perception information such as "The user is smiling.", "The user is talking.", and "The probability that the user is enjoying conversation is 70%.", and performs processing of understanding the meaning of the generated perception information. For example, the user state recognition unit 230 generates semantic information such as "The user is smiling and seems to be enjoying the conversation".

In step S102, the emotion decision unit 232 decides an emotion value indicating the emotion of the user based on the information analyzed by the sensor module unit 210 and the state of the user recognized by the user state recognition unit 230.

In step S103, the emotion decision unit 232 decides an emotion value indicating the emotion of the robot 100 based on the information analyzed by the sensor module unit 210 and the state of the user recognized by the user state recognition unit 230. The emotion decision unit 232 adds the decided emotion value of the user to the history data 222.

In step S104, the action recognition unit 234 recognizes the action classification of the user based on the information analyzed by the sensor module unit 210 and the state of the user recognized by the user state recognition unit 230. For example, the action recognition unit 234 recognizes an action of the user, such as "talking", "listening", and "sitting".

In step S105, the action decision unit 236 decides the action of the robot 100 based on the combination of the current emotion value of the user decided in step S102 and the past emotion value included in the history data 222, the emotion value of the robot 100, the action of the user recognized by the action recognition unit 234, and the reaction rule 221.

In step S106, the action control unit 250 controls the control target 252 based on the action decided by the action decision unit 236. For example, the action control unit 250 takes an action such as being delighted, enjoy, rise, or frustrated in response to the emotion of the user.

In step S107, the storage control unit 238 calculates a total value of the strength based on the strength of the action predetermined for the action decided by the action decision unit 236 and the emotion value of the robot 100 decided by the emotion decision unit 232.

In step S108, the storage control unit 238 determines whether the total value of the strength is a threshold or more. In a case where the total value of the strength is less than the threshold, the data including the action of the user is not stored in the history data 222, and the processing ends. In contrast, when the total value of the strength is the threshold or more, the processing proceeds to step S109.

In step S109, the action decided by the action decision unit 236, the information analyzed by the sensor module unit 210 from the current time point to a certain period before, and the state of the user recognized by the user state recognition unit 230 are to be stored in the history data 222.

As described above, the robot 100 includes the storage unit that stores, as the data for deciding the emotion of each user, the relationship among the expression, the voice, the gesture, the biometric information, and the emotion for each user, as the database. With this configuration, the robot 100 can store the relationship between the information such as the expression, the speech, the body language, and the biometric information of the user and the emotion of the user as a database having a configuration suitable for each purpose, and can achieve high-speed search performance and expression of a complicated correlation.

In addition, the decision unit of the robot 100 decides the emotion of the user using the sensor information and the database. This makes it possible for the robot 100 to efficiently decide the emotion of the user from the correspondence between the various sensor information and the database.

In addition, the robot 100 includes a control unit that decides its own action corresponding to the emotion of the user and controls the control target based on the decided own action. This makes it possible for the robot 100 to take an action according to the emotion of the user.

In addition, the control unit of the robot 100 decides its own action corresponding to the combination of the emotion of the user and its own emotion. With this configuration to decide an action using not only the information of the emotion of the user but also the information of its own emotion, the robot 100 can take an action further appropriate for the situation.

In addition, in a case where the emotion value indicating the positive/negative of the emotion of the user is a negative value, the control unit of the robot 100 decides an action of increasing the emotion value of the user. With this configuration, the robot 100 can provide the user feeling depressed with encouragement or suggestion of a change of mood.

In addition, having received, from the user, a voice requesting to increase the emotion value, the control unit of the robot 100 decides an action of increasing the emotion value of the user. This makes it possible for the robot 100 to execute an action of encouraging the user when the user desires to be cheered up.

While the above embodiment is a case where the robot 100 recognizes the user using the face image of the user, the disclosed technology is not limited to this aspect. For example, the robot 100 may recognize the user using a voice uttered by the user, a mail address of the user, an ID of an SNS of the user, an ID card incorporating a wireless IC tag possessed by the user, or the like.

The robot 100 is an example of an electronic device including an action control system. The application target of the action control system is not limited to the robot 100, and the action control system can be applied to various electronic devices. Furthermore, the function of the server 300 may be implemented by one or more computers. At least a part of the functions of the server 300 may be implemented by a virtual machine. In addition, at least a part of the functions of the server 300 may be implemented in a cloud.

FIG. 4 is a diagram schematically illustrating an example of a hardware configuration of a computer 1200 functioning as the robot 100 and the server 300. A program installed in the computer 1200 can cause the computer 1200 to function as one or more "units" of the apparatus according to the present embodiment, or cause the computer 1200 to execute an operation associated with the apparatus according to the present embodiment or to implement the one or more "units", and/or cause the computer 1200 to execute a process according to the present embodiment or a stage of the process. Such a program may be executed by a CPU 1212 to cause the computer 1200 to perform certain operations associated with some or all of the blocks in the flowcharts and block diagrams described in the present specification.

The computer 1200 according to the present embodiment includes a CPU 1212, RAM 1214, and a graphics controller 1216, which are interconnected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes an input/output unit such as ROM 1230 and a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 obtains image data generated by the CPU 1212 in a frame buffer or the like provided in the RAM 1214 or directly in the RAM 1214, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the read program or data to the storage device 1224. The IC card drive reads programs and data from an IC card and/or writes programs and data to the IC card.

The ROM 1230 stores therein a boot program and the like executed by the computer 1200 at the time of activation, and/or a program dependent on hardware of the computer 1200. The input/output chip 1240 may connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 so as to provide a linkage between the programs and various types of hardware resources described above. The apparatus or method may be configured by implementing operation or processing of information in accordance with use of the computer 1200.

For example, when communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network into a reception buffer area or the like provided on the recording medium.

In addition, the CPU 1212 may allow the RAM 1214 to read all or a necessary portion of a file or database stored in an external recording medium such as the storage device 1224, a DVD drive (DVD-ROM), or the IC card, and may execute various types of processing on data on the RAM 1214. Next, the CPU 1212 may perform write-back of the processed data to the external recording medium.

Various types of information, such as various types of programs, data, tables, and databases, may be stored in a recording medium and subjected to information processing. The CPU 1212 may execute various types of processing on data read from the RAM 1214, including various types of operations, information processing, condition determination, conditional branching, unconditional branching, information search/replacement, and the like, which are described throughout the present disclosure and designated by a command sequence of a program, and writes back the results of processing to the RAM 1214. In addition, the CPU 1212 may search for information in a file, a database, or the like in the recording medium. For example, when a plurality of entries, each having an attribute value of a first attribute associated with an attribute value of a second attribute, is stored in the recording medium, the CPU 1212 may search for an entry in which the attribute value of the first attribute matches a designated condition from the plurality of entries, read the attribute value of the second attribute stored in the entry, and thereby acquire the attribute value of the second attribute associated with the first attribute satisfying the predetermined condition.

The above-described program or software modules may be stored in a computer-readable storage medium on the computer 1200 or in the vicinity of the computer 1200. Furthermore, a recording medium such as a hard disk or RAM provided in a server system connected to a dedicated communication network or the Internet can be used as a computer-readable storage medium, thereby providing the program to the computer 1200 via the network.

The blocks in the flowcharts and block diagrams in the present embodiment may represent stages of a process in which an operation is performed or "units" of an apparatus that are responsible for performing the operation. Certain stages and "units" may be implemented by dedicated circuits, programmable circuits provided together with computer-readable instructions stored on a computer-readable storage medium, and/or by a processor provided together with computer-readable instructions stored on a computer-readable storage medium. Dedicated circuits may include digital and/or analog hardware circuits, and may include integrated circuits (ICs) and/or discrete circuits. Programmable circuits may include reconfigurable hardware circuits such as field programmable gate arrays (FPGA) and programmable logic arrays (PLA), including, for example, logical conjunction, logical disjunction, exclusive OR, NAND, NOR, and other logical operations, flip-flops, registers, and memory elements.

A computer-readable storage medium may include any tangible device capable of storing instructions for execution by a suitable device, and as a result, the computer-readable storage medium including instructions stored in the device is to have a product including instructions that can be executed to create means for executing operations designated in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), a digital versatile disk (DVD), a Blu-ray (registered trademark) disk, a memory stick, and an integrated circuit card.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), and C++, and conventional procedural programming languages, such as the "C" programming language or similar programming languages.

The computer-readable instructions may be provided for a processor or programmable circuits of a general purpose computer, special purpose computer, or other programmable data processing apparatus, either locally or over a local area network (LAN), a wide area network (WAN) such as the Internet so as to cause the processor or programmable circuits of the general purpose computer, special purpose computer, or other programmable data processing apparatus to execute the computer-readable instructions in order to generate means to execute the operations designated in the flowcharts or block diagrams. Examples of the processor include a computer processor, a processing unit, a microprocessor, a digital signal processor, a controller, and a microcontroller.

### (Other embodiments)

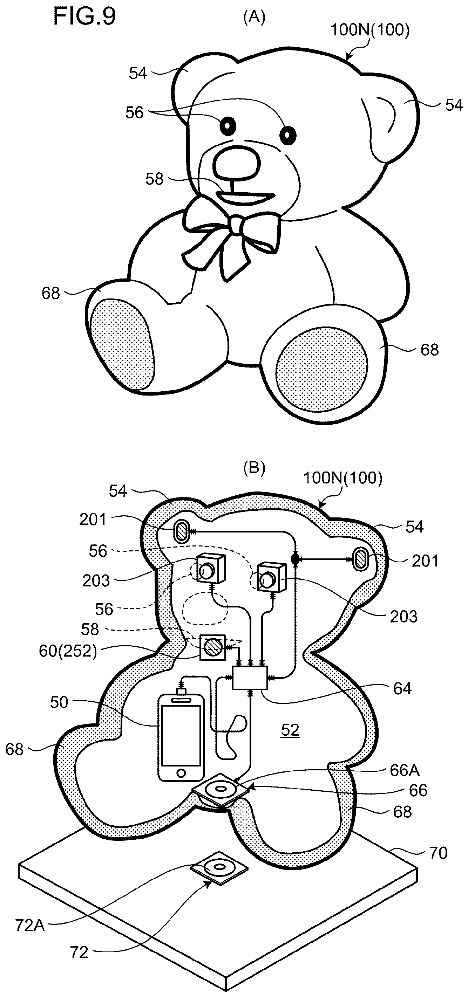

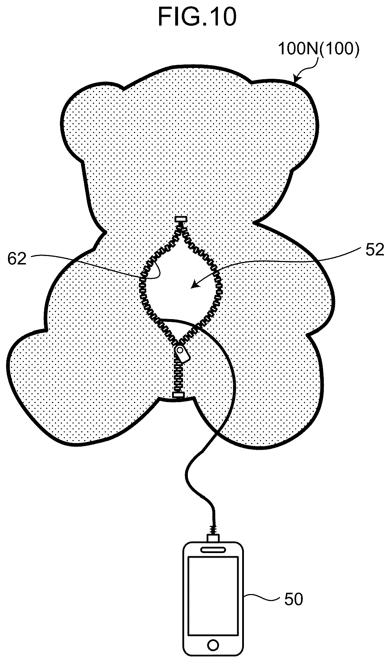

As another embodiment, the robot 100 described above may be mounted on a stuffed toy, or may be applied to a control device connected by a wireless or wired connection to a control target device (speaker or camera) mounted on the stuffed toy. Other embodiments are specifically configured as follows. For example, the robot 100 may be applied to a cohabitant (specifically, a stuffed toy 100N illustrated in FIGS. 9 and 10) who spends daily life with the user 10 and has a dialogue with the user 10 based on information related to daily life, and provides information matching the tastes and preferences of the user 10. In the present embodiment (another embodiment), an example in which the control section of the robot 100 is applied to the smartphone 50 will be described.

The stuffed toy 100N is equipped with a function as an input/output device of the robot 100. The smartphone 50 functioning as a control section of the robot 100 is detachable from the robot 100. Inside the stuffed toy 100N, an input/output device and the smartphone 50 which is accommodated in the stuffed toy 100N are connected to each other.

As illustrated in FIG. 9(A), the stuffed toy 100N has a shape of a bear an external appearance of which is covered with a soft fabric in the present embodiment (the another embodiment). As illustrated in FIG. 9(B), The input/output devices disposed in a space 52 formed inside the stuffed toy 100N includes: a microphone 201 (refer to FIG. 2) of the sensor unit 200 disposed at a portion corresponding to the ear 54; a 2D camera 203 of the sensor unit 200 disposed at a portion corresponding to an eye 56 (refer to FIG. 2); and a speaker 60 constituting a part of the control target 252 (refer to FIG. 2) disposed at a portion corresponding to a mouth 58. Note that the microphone 201 and the speaker 60 are not necessarily separated from each other, and may be an integrated unit. In the case of the unit, it is preferable to dispose the unit at a position where the utterance can be heard naturally, such as the position of the nose of the stuffed toy 100N. Although the case where the stuffed toy 100N has an animal shape has been described as an example, the present invention is not limited thereto. The stuffed toy 100N may have a shape of a specific character.

The smartphone 50 has functions illustrated in FIG. 2, namely, a function as the sensor module unit 210, a function as the storing unit 220, a function as the user state recognition unit 230, a function as the emotion decision unit 232, a function as the action recognition unit 234, a function as the action decision unit 236, a function as the storage control unit 238, a function as the action control unit 250, and functions as the communication processing unit 280.

As illustrated in FIG. 10, a fastener 62 is attached to a part (for example, the back portion) of the stuffed toy 100N. By opening the fastener 62, the outside and the space 52 communicate with each other.

Here, the smartphone 50 is accommodated in the space 52 from the outside and is connected in USB connection to each input/output device via a USB hub 64 (refer to FIG. 9(B)), so as to have a function equivalent to that of the robot 100 illustrated in FIG. 1.

The USB hub 64 is connected to a non-contact power receiving plate 66. The power receiving plate 66 incorporates a power receiving coil 66A. The power receiving plate 66 is an example of a wireless power receiving unit that receives power supply wirelessly.

The power receiving plate 66 is disposed near a root 68 of both legs of the stuffed toy 100N, and is located closest to a mounting base 70 when the stuffed toy 100N is placed on the mounting base 70. The mounting base 70 is an example of an external wireless power transmitter.

The stuffed toy 100N placed on the mounting base 70 can be viewed as a statuette in a natural state.

In addition, this root is formed to be thinner than the surface layer thickness of the stuffed toy 100N in other parts, and thus is held in a state closer to the mounting base 70.

The mounting base 70 includes a charging pad 72. The charging pad 72 incorporates a power transmitting coil 72A. When the power transmitting coil 72A transmits a signal to search the power receiving coil 66A of the power receiving plate 66, and when the power receiving coil 66A is found, a current flows through the power transmitting coil 72A to generate a magnetic field, and the power receiving coil 66A reacts to the magnetic field to start electromagnetic induction. This allows current to flow through the power receiving coil 66A, and power is stored in a battery (not illustrated) of the smartphone 50 via the USB hub 64.

That is, the smartphone 50 is automatically charged by placing the stuffed toy 100N as a statuette on the mounting base 70, making it unnecessary to take out the smartphone 50 from the space 52 of the stuffed toy 100N for charging.

In the present embodiment (another embodiment), the smartphone 50 is accommodated in the space 52 of the stuffed toy 100N and connected by wired connection (USB connection), but the connection is not limited thereto. For example, a control device having a wireless function (for example, "Bluetooth (registered trademark)") may be accommodated in the space 52 of the stuffed toy 100N, and the control device may be connected to the USB hub 64. In this case, the smartphone 50 and the control device wirelessly communicate with each other without inserting the smartphone 50 into the space 52, and the external smartphone 50 is connected to each input/output device via the control device, making it possible to have a function equivalent to that of the robot 100 illustrated in FIG. 1. Alternatively, the control device accommodated in the space 52 of the stuffed toy 100N and the external smartphone 50 may be connected to each other by wired connection.

While the present embodiment (another embodiment) has exemplified a toy bear as the stuffed toy 100N, the stuffed toy 100N may be another toy, a doll, or may have a shape of a specific character. In addition, their clothes may be changeable. The material of the skin is not limited to a fabric, and may be other materials such as soft vinyl, but is preferably to be a soft material.

Furthermore, a monitor may be attached to the skin of the stuffed toy 100N to add the control target 252 that provides information to the user 10 through vision. For example, the eye 56 may be used as a monitor to express delight, anger, sadness, and joy by an image projected on the eye 56, or there may be provided, at a belly, a window through which the monitor of the built-in smartphone 50 is visible. Furthermore, the eyes 56 may be used as a projector to express delight, anger, sadness, and joy by an image projected on a wall surface.

According to the another embodiment, the existing smartphone 50 is placed in the stuffed toy 100N, and the camera 203, the microphone 201, the speaker 60, and the like are extended from the smartphone 50 to appropriate positions via the USB connection.

Furthermore, for wireless charging, the smartphone 50 and the power receiving plate 66 are connected via USB, and the power receiving plate 66 is disposed so as to be as outermost as possible from the inside of the stuffed toy 100N.

In order to use the wireless charging of the smartphone 50, it is necessary to dispose the smartphone 50 as outermost as possible when viewed from the inside of the stuffed toy 100N, which would give a rough feeling when the stuffed toy 100N is touched from the outside.

To avoid this, the smartphone 50 is disposed at the center of the stuffed toy 100N as much as possible, while the wireless charging function (power receiving plate 66) is disposed as outermost as possible as viewed from the inside of the stuffed toy 100N. The camera 203, the microphone 201, the speaker 60, and the smartphone 50 receive wireless power supply via the power receiving plate 66.

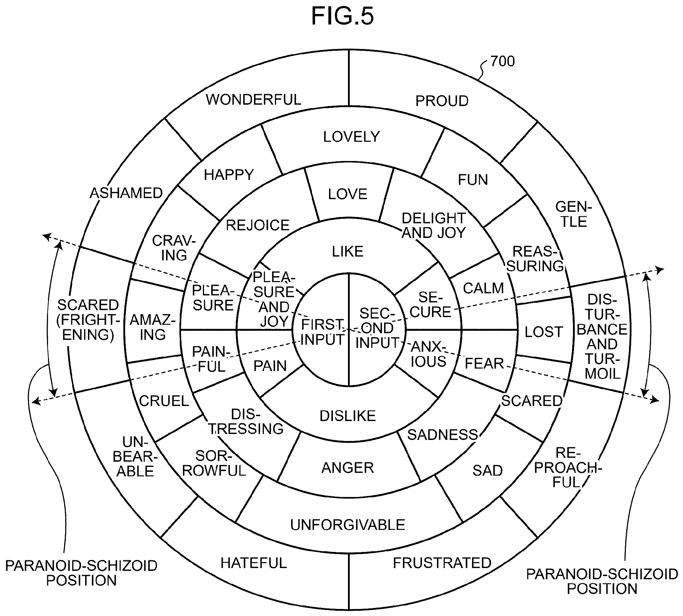

The emotion decision unit 232 may decide the user's emotion in accordance with a specific mapping. Specifically, the emotion decision unit 232 may decide the emotion of the user based on an emotion map (refer to FIG. 5) being a specific mapping.

FIG. 5 is a diagram illustrating an emotion map 700 on which a plurality of emotions is mapped. On the emotion map 700, emotions are mapped concentrically radially from the center. The closer to the center of the concentric circle, the more the emotion disposed is toward a primitive state. Emotions indicating states and actions generated from the state of mind are disposed toward the outer side of the concentric circle. The emotion is a concept including an affect and a mental state. The left side of the concentric circle generally includes emotions generated from reactions occurring in the brain. The right side of the concentric circle generally includes emotions induced by situational judgment. The upper and lower directions of the concentric circle generally include emotions generated from reactions occurring in the brain and induced by situational judgment. Furthermore, the upper side of the concentric circle includes "pleasant" emotions while the lower side of the concentric circle includes "unpleasant" emotions. In this manner, the emotion map 700 is a map on which a plurality of emotions is mapped based on a structure of generating emotions, and emotions that are likely to occur at the same time are mapped close to each other.
(1) For example, in a case where the emotion engine, which is the emotion decision unit 232 of the robot 100, detects an emotion at about 100 msec, the decision of the reaction operation (for example, affirmative interjection) of the robot 100 may be performed at a timing at which the frequency is at least similar to the detection frequency (100 msec) of the emotion engine, or may be performed at a timing earlier than this. The detection frequency of the emotion engine may be construed as a sampling rate.
   The emotion is detected in about 100 msec, and the reacting operation (for example, affirmative interjection) is immediately performed in conjunction with the detection, making it possible to achieve a dialogue reading the situation instead of giving a strange affirmative interjection. The robot 100 performs a reacting operation (affirmative interjection or the like) in accordance with the directionality and the degree (intensity) of the mandala-like chart of the emotion map 700. The detection frequency (sampling rate) of the emotion engine is not limited to 100 ms, and may be changed depending on the situation (such as when playing sports), the age of the user, or the like.
(2) With reference to the emotion map 700, the directionality and the degree of intensity of the emotion may be set in advance, and the motion of the affirmative interjection and the magnitude of the affirmative interjection may be set. For example, in a case where the robot 100 feels a sense of stability, security, or the like, the robot 100 continues listening to the talk while nodding. When the robot 100 feels anxious, lost, or suspicious, the robot 100 may tilt its head or stop nodding.
   These emotions are distributed in the 3 o'clock direction of the emotion map 700, and usually wander between security and anxiety. In the right half of the emotion map 700, situational awareness is stronger than internal sensation, and thus gives a calm impression.
(3) When the robot 100 feels good after being complimented, a filler "Wow" may come before the words; when the robot feels heavy after receiving harsh words, a filler "Ohh!" may come before the words. In addition, a physical reaction such as a gesture of the robot 100 crouching while saying "Ohh!" may be included. These emotions are distributed around 9 o'clock on the emotion map 700.
(4) In the left half of the emotion map 700, internal sensation (reaction) is stronger than situational awareness. Therefore, an impression of unintentional reaction can be given.

In a case where the robot 100 has a favorable feeling in situational awareness while having an internal feeling (reaction) of satisfaction, the robot 100 may nod deeply while looking at the other party, or may utter "Yeah". In this manner, the robot 100 may generate a balanced favorable feeling to the other party, that is, an action such as tolerance or generosity to the other party. Such emotions are distributed around 12 o'clock on the emotion map 700.

On the contrary, when the robot 100 has an internal feeling (reaction) of unpleasant feeling and also has negative feelings as situational awareness, the robot 100 may shake its head when feeling antipathy, and may stare at the other party with LED eyes turned into red when the robot 100 has a feeling close to hatred. Such emotions are distributed around 6 o'clock on the emotion map 700.

(5) Since the inner side of the emotion map 700 represents the inside of the mind and the outer side of the emotion map 700 represents an action, the emotion is more visible (appears in the action) toward the outer side of the emotion map 700.

(6) In a case where the robot 100 listens to a person's speech while feeling the sense of security distributed around 3 o'clock on the emotion map 700, the robot slightly nods with a sound "uh-huh". However, in the direction of love around 12 o'clock, the robot may perform strong and deep nodding.

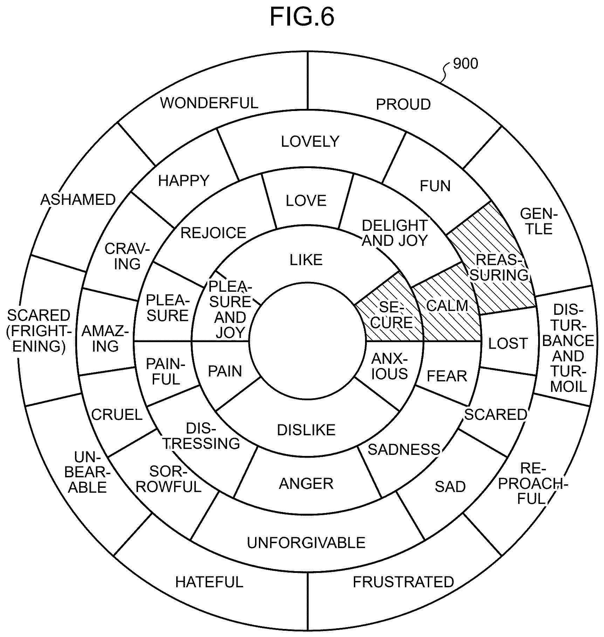

The emotion decision unit 232 inputs the information analyzed by the sensor module unit 210 and the recognized state of the user 10 to a neural network trained in advance, acquires an emotion value indicating each emotion illustrated on the emotion map 700, and decides the emotion of the user 10. This neural network is trained in advance based on a plurality of pieces of learning data including a combination of the information analyzed by the sensor module unit 210 and the recognized state of the user 10 and the emotion value indicating each emotion illustrated on the emotion map 700. In addition, as in an emotion map 900 illustrated in FIG. 6, this neural network is trained to allow emotions disposed close to each other to have close values. FIG. 6 is a diagram illustrating another example of the emotion map. FIG. 6 illustrates an example in which a plurality of emotions such as "secure", "calm", and "reassuring" have emotion values close to each other.

Furthermore, the emotion decision unit 232 may decide the emotion of the robot 100 in accordance with a specific mapping. Specifically, the emotion decision unit 232 inputs the information analyzed by the sensor module unit 210, the state of the user 10 recognized by the user state recognition unit 230, and the state of the robot 100 to a neural network trained in advance, acquires an emotion value indicating each emotion illustrated on the emotion map 700, and decides the emotion of the robot 100. This neural network is trained in advance based on a plurality of pieces of learning data including a combination of the information analyzed by the sensor module unit 210, the recognized state of the user 10, and the state of the robot 100, and the emotion value indicating each emotion illustrated on the emotion map 700. For example, the neural network is trained based on learning data indicating that the emotion value "3" of "happy" is obtained in a case where the robot 100 is recognized as being petted by the user 10 from the output of the touch sensor 207, and learning data indicating that the emotion value "3" of "anger" is obtained in a case where the robot 100 is recognized as being hit by the user 10 from the output of the acceleration sensor 205. In addition, as in an emotion map 900 illustrated in FIG. 6, this neural network is trained to allow emotions disposed close to each other to have close values.

Furthermore, the emotion decision unit 232 may decide the emotion of the robot 100 based on the action content of the robot 100 generated by the text generation model. Specifically, the emotion decision unit 232 inputs the action content of the robot 100 generated by the text generation model to the neural network trained in advance, acquires the emotion value indicating each emotion illustrated on the emotion map 700, integrates the acquired emotion value indicating each emotion and the emotion value indicating each emotion of the current robot 100, and updates the emotion of the robot 100. For example, the acquired emotion value indicating each emotion and the emotion value indicating each emotion of the current robot 100 are averaged and integrated. This neural network is trained in advance based on a plurality of pieces of learning data that is a combination of text representing the action content of the robot 100 generated by the text generation model and the emotion value indicating each emotion illustrated on the emotion map 700.

For example, there is a case where utterance content of the robot 100 "Good for you. Lucky you." is obtained as the action content of the robot 100 generated by the text generation model. In this case, the emotion of the robot 100 is updated such that, when the text representing the utterance content is input to the neural network, a high value is obtained as the emotion value of the emotion "happy" to increase the emotion value of the emotion "happy".

The action decision unit 236 adds a fixed sentence for asking a question about the action content of the robot corresponding to the user's action to the text representing the user's action, the user's emotion, and the robot's emotion, and inputs the obtained text to the text generation model having a dialogue function, thereby generating the action content of the robot.

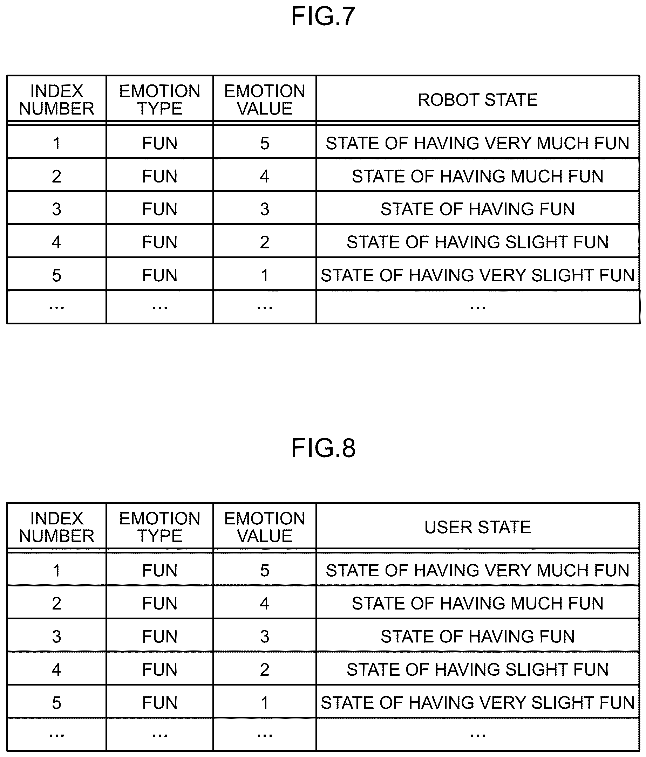

For example, the action decision unit 236 uses an emotion table as illustrated in FIG. 7 to acquire a text indicating the state of the robot 100 from the emotion of the robot 100 decided by the emotion decision unit 232. FIG. 7 is a diagram illustrating an example of the emotion table. Here, in the emotion table, an index number is assigned to each emotion value for each type of emotion, and a text indicating the state of the robot 100 is stored for each index number.

In a case where the emotion of the robot 100 decided by the emotion decision unit 232 corresponds to the index number "2", a text "state of having much fun" is obtained. Note that, in a case where the emotion of the robot 100 corresponds to a plurality of index numbers, a plurality of texts indicating the state of the robot 100 is obtained.

In addition, an emotion table as illustrated in FIG. 8 is prepared also for the emotion of the user 10. FIG. 8 is a diagram illustrating an example of the emotion table. Here, in a case where the action of the user is to "Say AAA.", the emotion of the robot 100 corresponds to the index number "2", and the emotion of the user 10 corresponds to the index number "3", the sentences "The robot is in a state of having much fun. The user is having fun. The user said "AAA" to the robot. What is an answer as a robot?" is to be input to the text generation model and acquires the action content of the robot. The action decision unit 236 decides an action of the robot from the action content. Note that "AAA" is a name (nickname) given to the robot 100 by the user.

In this manner, since the robot 100 can change the action of the robot according to the index number corresponding to the emotion of the robot, the user has an impression of the robot 100 having a heart, and is prompted to take an action such as talking to the robot.

In addition, the action decision unit 236 may generate the action content of the robot by adding not only the text indicating the action of the user, the emotion of the user, and the emotion of the robot but also the text indicating the content of the history data 222, and then adding a fixed sentence for asking a question about the action content of the robot corresponding to the action of the user and inputting the obtained text to the text generation model having a dialogue function. With this configuration, the robot 100 can change the action of the robot according to the history data indicating the emotion of the user and action, and this gives the user an impression of the robot having individuality, and prompts the user to take an action such as talking to the robot. Furthermore, the history data may further include the emotion and action of the robot.

### (Second embodiment)

FIG. 1 is a diagram schematically illustrating an example of a control system 1 according to the present embodiment. As illustrated in FIG. 1, the control system 1 includes a plurality of robots 100, a cooperative device 400, and a server 300. Each of the plurality of robots 100 is managed by a user.

The present disclosure will describe an example in which the robot 100 estimates the emotion of the user based on sensor information and a user's state.

For example, the robot 100 estimates that the emotion of the user is "joyful" from sensor information such as the user's expression, speech, and gesture obtained by a sensor such as a camera or a microphone, and the recognized user's state.

In addition, the robot 100 inputs information obtained by analyzing the sensor information and the state of the user to a neural network trained in advance, and estimates the emotion of the user. For example, the robot 100 inputs information such as voice emotion and facial expression recognized by analyzing information from a sensor such as a camera and a microphone, and a state of the user such as "having a conversation happily" to a neural network trained in advance such as a Large Language Model, and estimates that the emotion of the user is "happy".

In addition, the robot 100 decides its own action corresponding to the estimated user's emotion, and controls the control target based on the decided own action. For example, when the emotion of the user is "sad", the robot 100 performs an action such as sympathizing with or encouraging the emotion of the user.

In addition, the robot 100 decides its own action in accordance with a combination of the estimated user's emotion and the estimated own emotion. For example, the robot 100 makes a gesture of being delighted when the emotion of the user is "delighted" and the its own emotion is "joyful". On the other hand, when the emotion of the user is "delighted" and the own emotion is "sad", the robot takes a head lowering posture. At this time, the robot 100 can use parameter information for each emotion in addition to a simple combination of emotion types.

In addition, in a case where the emotion value indicating the positive/negative of the emotion of the user is a negative value, the robot 100 decides an action of increasing the emotion value of the user. For example, in a case where the emotion value indicating the positive/negative of the emotion of the user is a negative value, the robot 100 performs an action such as listening to the user quietly or encouraging the user.

In addition, when having received, from the user, a voice requesting to increase the emotion value, the robot 100 decides an action of increasing the emotion value of the user. For example, when having received a voice "Cheer me up" from the user, the robot 100 takes an action of encouraging the user. For example, when having received a voice "Raise my spirit" from the user, the robot 100 takes an action of sending a cheer to the user.

In this manner, the robot 100 in the present disclosure combines data collected from various sources such as vision and hearing, making it possible to estimate the emotional state of the user, recognize the emotion with higher accuracy, and make an appropriate response. That is, the robot 100 according to the present disclosure can execute an appropriate action to the estimated user's emotion.

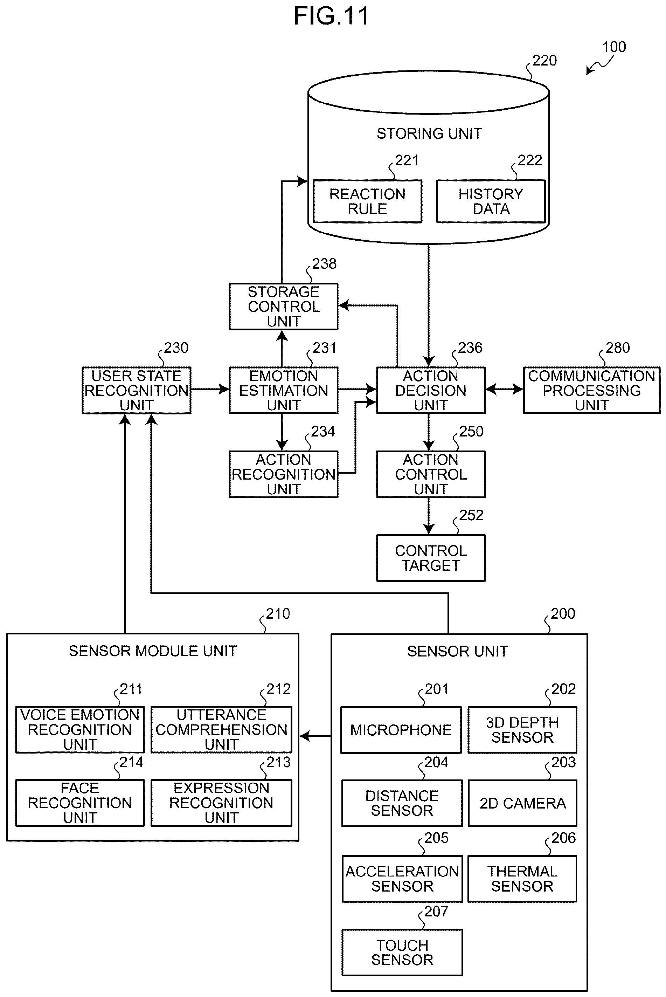

FIG. 11 is a diagram schematically illustrating a functional configuration of the robot 100. The robot 100 includes a control unit including a sensor unit 200, a sensor module unit 210, a storing unit 220, a user state recognition unit 230, an emotion estimation unit 231, an action recognition unit 234, an action decision unit 236, a storage control unit 238, an action control unit 250, a control target 252, and a communication processing unit 280.

Among the components of the robot 100 illustrated in FIG. 11, the components other than the control target 252 and the sensor unit 200 are examples of components included in the action control system in the robot 100. The action control system of the robot 100 controls the control target 252 as a target.

The storing unit 220 includes a reaction rule 221 and history data 222. The history data 222 includes history of past emotion values of the user and history of actions of the user. The history of emotion values and actions is recorded for each user, for example, by being associated with identification information of the user. At least a part of the storing unit 220 is implemented by a storage medium such as memory. A person DB that stores a face image of the user, attribute information of the user, and the like may be included. Among the components of the robot 100 illustrated in FIG. 11, the functions of the components other than the control target 252, the sensor unit 200, and the storing unit 220 can be implemented by the CPU operating based on a program.

The emotion estimation unit 231 decides an emotion value indicating the emotion of the user based on the information analyzed by the sensor module unit 210 and the state of the user recognized by the user state recognition unit 230. For example, the information analyzed by the sensor module unit 210 and the recognized state of the user are input to a neural network trained in advance, and an emotion value indicating the emotion of the user is acquired. That is, the emotion estimation unit 231 decides the emotion value to estimate the emotion of the user.

In addition, the emotion estimation unit 231 decides an emotion value indicating the emotion of the robot 100 based on the information analyzed by the sensor module unit 210 and the state of the user recognized by the user state recognition unit 230. That is, the emotion estimation unit 231 decides the emotion value to estimate its own emotion.

Specifically, the emotion estimation unit 231 decides an emotion value indicating the emotion of the robot 100 in accordance with a rule for updating the emotion value of the robot 100 prescribed in association with the information analyzed by the sensor module unit 210 and the state of the user recognized by the user state recognition unit 230.

For example, in a case where the user state recognition unit 230 recognizes that the user looks sad, the emotion estimation unit 231 increases the emotion value of "sad" of the robot 100. In a case where the user state recognition unit 230 recognizes that the user is now smiling, the emotion value of "delighted" of the robot 100 is increased.

The emotion estimation unit 231 may decide the emotion value indicating the emotion of the robot 100 in further consideration of the state of the robot 100. For example, in a case where the remaining battery level of the robot 100 is low, a case where the surrounding environment of the robot 100 is completely dark, or the like, the emotion value of "sad" of the robot 100 may be increased. Furthermore, in the case of the user who desires to continue the dialog even though the remaining battery level is low, the emotion value of "anger" may be increased.

As described above, in the present embodiment, the robot 100 acquires the utterance content of the user after specifying the user. In the acquisition and use of the utterance content, the action control system of the robot 100 according to the present embodiment considers protection of personal information and privacy of the user in addition to acquisition of necessary consent according to laws and regulations from the user.

Based on the current emotion value of the user decided by the emotion estimation unit 231, the history data 222 of the past emotion values decided by the emotion estimation unit 231 before the current emotion value of the user is decided, and the emotion value of the robot 100, the action decision unit 236 decides an action corresponding to the action of the user recognized by the action recognition unit 234. While the present embodiment will describe a case where the action decision unit 236 uses one most recent emotion value included in the history data 222 as the past emotion value of the user, the disclosed technology is not limited to this aspect. For example, the action decision unit 236 may use a plurality of most recent emotion values as the past emotion values of the user, or may use emotion values that are earlier by a unit period such as a day before. In addition, the action decision unit 236 may decide an action corresponding to the action of the user in further consideration of the history of past emotion values of the robot 100 in addition to the current emotion value of the robot 100. The action decided by the action decision unit 236 includes a gesture performed by the robot 100 or utterance content of the robot 100.

The action decision unit 236 according to the present embodiment decides the action of the robot 100 as the action corresponding to the action of the user based on a combination of the past emotion value and the current emotion value of the user, the emotion value of the robot 100, the action of the user, and the reaction rule 221. For example, in a case where the past emotion value of the user is a positive value and the current emotion value is a negative value, the action decision unit 236 decides an action for changing the emotion value of the user to a positive value as the action corresponding to the action of the user.

The storage control unit 238 decides whether to store data including the action of the user in the history data 222 based on the strength of the action predetermined for the action decided by the action decision unit 236 and the emotion value of the robot 100 decided by the emotion estimation unit 231.

The action control unit 250 controls the control target 252 based on the action decided by the action decision unit 236. For example, when the action decision unit 236 has determined an action including utterance, the action control unit 250 controls to output a voice from a speaker included in the control target 252. At this time, the action control unit 250 may decide the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion estimation unit 231. For example, the action control unit 250 decides one's own action in accordance with a combination of the estimated user's emotion and the estimated one's own emotion. For example, the action control unit 250 makes a gesture of being delighted when the emotion of the user is "delighted" and the robot's own emotion is "joyful". On the other hand, when the emotion of the user is "delighted" and the own emotion is "sad", for example, the robot 100 takes a head lowering posture. At this time, the action control unit 250 can use parameter information for each emotion in addition to a simple combination of emotion types. In addition, in a case where the emotion value indicating the positive/negative of the emotion of the user is a negative value, the action control unit 250 decides an action of increasing the emotion value of the user. For example, in a case where the emotion value indicating positive/negative of the emotion of the user is a negative value, the action control unit 250 performs an action such as quietly listening to the talk or encouraging the user so as to increase the emotion value of the user. In addition, when having received, from the user, a voice requesting to increase the emotion value, the action control unit 250 decides an action of increasing the emotion value of the user. For example, the action control unit 250 receives a voice "Cheer me up" from the user and takes an action of encouraging the user. For example, when having received a voice "Raise my spirit" from the user, the action control unit 250 takes an action of sending a cheer to the user.

In addition, after the action control unit 250 executes the action decided by the action decision unit 236 in the execution mode decided in accordance with the emotion of the robot 100, the emotion estimation unit 231 further changes the emotion value of the robot 100 based on the user's reaction to the execution of the action. Specifically, in a case where the user's reaction to the action decided by the action decision unit 236 performed on the user in the execution mode decided by the action control unit 250 is not bad, the emotion estimation unit 231 increases the emotion value of "delighted" of the robot 100; in a case where the user's reaction to the action decided by the action decision unit 236 performed on the user in the execution mode decided by the action control unit 250 is bad, the emotion estimation unit 231 increases the emotion value of "sad" of the robot 100.

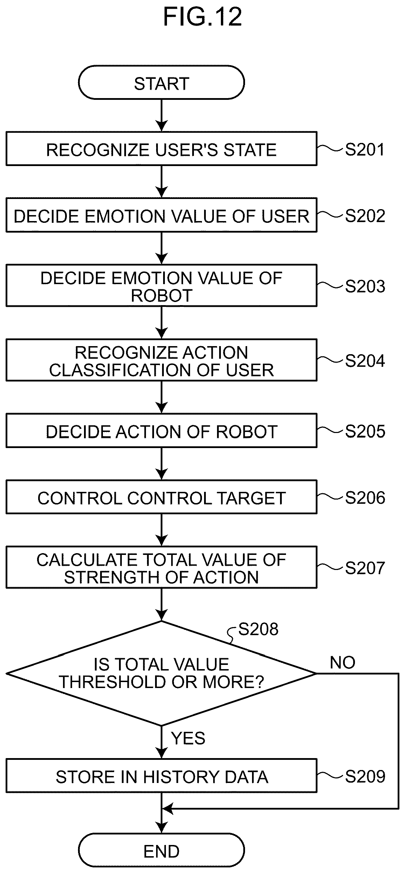

FIG. 12 is a diagram schematically illustrating an example of an operation flow related to an operation of deciding an action of the robot 100. The operation flow illustrated in FIG. 12 is repeatedly executed. At this time, it is assumed that information analyzed by the sensor module unit 210 is input. Note that "S" in the operation flow represents a step to be executed.

First, in step S201, the user state recognition unit 230 recognizes the state of the user based on the information analyzed by the sensor module unit 210. For example, the user state recognition unit 230 generates perception information such as "The user is smiling.", "The user is talking.", and "The probability that the user is enjoying conversation is 70%.", and performs processing of understanding the meaning of the generated perception information. For example, the user state recognition unit 230 generates semantic information such as "The user is smiling and seems to be enjoying the conversation".

In step S202, the emotion estimation unit 231 decides an emotion value indicating the emotion of the user based on the information analyzed by the sensor module unit 210 and the state of the user recognized by the user state recognition unit 230.

In step S203, the emotion estimation unit 231 decides an emotion value indicating the emotion of the robot 100 based on the information analyzed by the sensor module unit 210 and the state of the user recognized by the user state recognition unit 230. The emotion estimation unit 231 adds the decided emotion value of the user to the history data 222.

In step S204, the action recognition unit 234 recognizes the action classification of the user based on the information analyzed by the sensor module unit 210 and the state of the user recognized by the user state recognition unit 230. For example, the action recognition unit 234 recognizes an action of the user, such as "talking", "listening", and "sitting".

In step S205, the action decision unit 236 decides the action of the robot 100 based on the combination of the current emotion value of the user decided in step S102 and the past emotion value included in the history data 222, the emotion value of the robot 100, the action of the user recognized by the action recognition unit 234, and the reaction rule 221.

In step S206, the action control unit 250 controls the control target 252 based on the action decided by the action decision unit 236. For example, the action control unit 250 takes an action such as being delighted, enjoy, rise, or frustrated in response to the emotion of the user.

In step S207, the storage control unit 238 calculates a total value of the strength based on the strength of the action predetermined for the action decided by the action decision unit 236 and the emotion value of the robot 100 decided by the emotion estimation unit 231.

In step S208, the storage control unit 238 determines whether the total value of the strength is a threshold or more. In a case where the total value of the strength is less than the threshold, the data including the action of the user is not stored in the history data 222, and the processing ends. In contrast, when the total value of the strength is the threshold or more, the processing proceeds to step S209.

In step S209, the action decided by the action decision unit 236, the information analyzed by the sensor module unit 210 from the current time point to a certain period before, and the state of the user recognized by the user state recognition unit 230 are to be stored in the history data 222.

As described above, the robot 100 includes the estimation unit that estimates the emotion of the user based on the sensor information and the user's state. With this configuration, the robot 100 can estimate the emotion of the user by integrating information such as the user's expression, voice, and gesture.

In addition, the estimation unit of the robot 100 inputs information obtained by analyzing the sensor information and the state of the user to a neural network trained in advance, and estimates the emotion of the user. This makes it possible for the robot 100 to input the analyzed sensor information and the state of the user to the trained Large Language Model, for example, to estimate the emotion of the user.

In addition, the robot 100 includes a control unit that decides its own action corresponding to the estimated user's emotion and controls the control target based on the decided own action. This makes it possible for the robot 100 to take an action according to the estimated user's emotion.

In addition, the control unit of the robot 100 decides an own action corresponding to a combination of the estimated user's emotion and the estimated own emotion. With this configuration to decide an action using not only the information of the estimated user's emotion but also the information of the estimated own emotion, the robot 100 can take an action further appropriate for the situation.

In addition, in a case where the emotion value indicating the positive/negative of the emotion of the user is a negative value, the control unit of the robot 100 decides an action of increasing the emotion value of the user. With this configuration, the robot 100 can provide the user feeling depressed with encouragement or suggestion of a change of mood.

In addition, having received, from the user, a voice requesting to increase the emotion value, the control unit of the robot 100 decides an action of increasing the emotion value of the user. This makes it possible for the robot 100 to execute an action of encouraging the user when the user desires to be cheered up.

While the above embodiment is a case where the robot 100 recognizes the user using the face image of the user, the disclosed technology is not limited to this aspect. For example, the robot 100 may recognize the user using a voice uttered by the user, a mail address of the user, an ID of an SNS of the user, an ID card incorporating a wireless IC tag possessed by the user, or the like.

The emotion estimation unit 231 may decide the emotion of the user in accordance with a specific mapping. Specifically, the emotion estimation unit 231 may decide the emotion of the user based on an emotion map (refer to FIG. 5) being a specific mapping.

The emotion estimation unit 231 inputs the information analyzed by the sensor module unit 210 and the recognized state of the user 10 to a neural network trained in advance, acquires an emotion value indicating each emotion illustrated on the emotion map 700, and decides the emotion of the user 10. This neural network is trained in advance based on a plurality of pieces of learning data including a combination of the information analyzed by the sensor module unit 210 and the recognized state of the user 10 and the emotion value indicating each emotion illustrated on the emotion map 700. In addition, as in an emotion map 900 illustrated in FIG. 6, this neural network is trained to allow emotions disposed close to each other to have close values. FIG. 6 is a diagram illustrating another example of the emotion map. FIG. 6 illustrates an example in which a plurality of emotions such as "secure", "calm", and "reassuring" have emotion values close to each other.

In addition, the emotion estimation unit 231 may decide the emotion of the robot 100 in accordance with a specific mapping. Specifically, the emotion estimation unit 231 inputs the information analyzed by the sensor module unit 210, the state of the user 10 recognized by the user state recognition unit 230, and the state of the robot 100 to a neural network trained in advance, acquires an emotion value indicating each emotion illustrated on the emotion map 700, and decides the emotion of the robot 100. This neural network is trained in advance based on a plurality of pieces of learning data including a combination of the information analyzed by the sensor module unit 210, the recognized state of the user 10, and the state of the robot 100, and the emotion value indicating each emotion illustrated on the emotion map 700. For example, the neural network is trained based on learning data indicating that the emotion value "3" of "happy" is obtained in a case where the robot 100 is recognized as being petted by the user 10 from the output of the touch sensor 207, and learning data indicating that the emotion value "3" of "anger" is obtained in a case where the robot 100 is recognized as being hit by the user 10 from the output of the acceleration sensor 205. In addition, as in an emotion map 900 illustrated in FIG. 6, this neural network is trained to allow emotions disposed close to each other to have close values.

In addition, the emotion estimation unit 231 may decide the emotion of the robot 100 based on the action content of the robot 100 generated by the text generation model. Specifically, the emotion estimation unit 231 inputs the action content of the robot 100 generated by the text generation model to the neural network trained in advance, acquires the emotion value indicating each emotion illustrated on the emotion map 700, integrates the acquired emotion value indicating each emotion and the emotion value indicating each emotion of the current robot 100, and updates the emotion of the robot 100. For example, the acquired emotion value indicating each emotion and the emotion value indicating each emotion of the current robot 100 are averaged and integrated. This neural network is trained in advance based on a plurality of pieces of learning data that is a combination of text representing the action content of the robot 100 generated by the text generation model and the emotion value indicating each emotion illustrated on the emotion map 700.

For example, there is a case where utterance content of the robot 100 "Good for you. Lucky you." is obtained as the action content of the robot 100 generated by the text generation model. In this case, the emotion of the robot 100 is updated such that, when the text representing the utterance content is input to the neural network, a high value is obtained as the emotion value of the emotion "happy" to increase the emotion value of the emotion "happy".

For example, the action decision unit 236 uses an emotion table as illustrated in FIG. 7 to acquire a text indicating the state of the robot 100 from the emotion of the robot 100 decided by the emotion estimation unit 231. FIG. 7 is a diagram illustrating an example of the emotion table. Here, in the emotion table, an index number is assigned to each emotion value for each type of emotion, and a text indicating the state of the robot 100 is stored for each index number.

In a case where the emotion of the robot 100 decided by the emotion estimation unit 231 corresponds to the index number "2", a text "state of having much fun" is obtained. Note that, in a case where the emotion of the robot 100 corresponds to a plurality of index numbers, a plurality of texts indicating the state of the robot 100 is obtained.

### (Third embodiment)

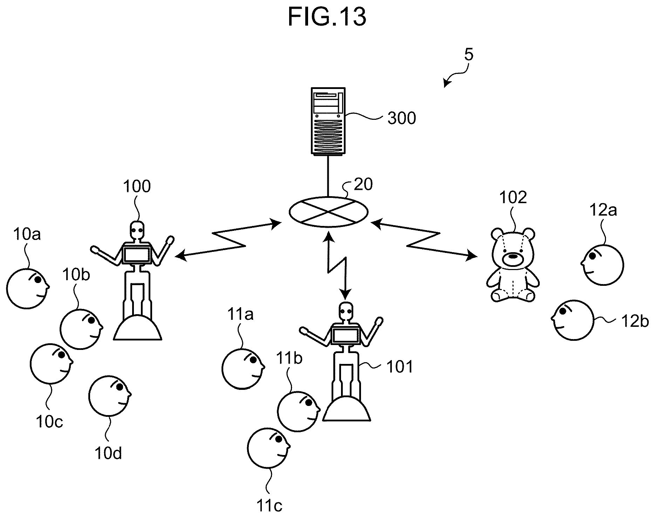

FIG. 13 schematically illustrates an example of a system 5 according to the present embodiment. The system 5 includes a robot 100, a robot 101, a robot 102, and a server 300. A user 10a, a user 10b, a user 10c, and a user 10d are users of the robot 100. A user 11a, a user 11b, and a user 11c are users of the robot 101. A user 12a and a user 12b are users of the robot 102. In the description of the present embodiment, the user 10a, the user 10b, the user 10c, and the user 10d may be collectively denoted as a user 10. Furthermore, the user 11a, the user 11b, and the user 11c may be collectively denoted as a user 11. The user 12a and the user 12b may be collectively denoted as a user 12. The robot 101 and the robot 102 have substantially the same functions as those of the robot 100. Therefore, the system 5 will be described mainly focusing on the function of the robot 100.

The appearance of the robot may imitate a figure of a person like the robot 100 and the robot 101, or may be a stuffed toy like the robot 102. The robot 102 has an external appearance of a stuffed toy, and thus is considered to be familiar to children in particular.

The robot 100 has a conversation with the user 10 and provides a video to the user 10. At this time, the robot 100 performs conversation with the user 10 and provides a video, etc. to the user 10 in cooperation with the server 300 and the like communicable via a communication network 20. For example, the robot 100 not only performs self-learning of appropriate conversations, but also performs learning in cooperation with the server 300 so as to achieve more appropriate conversations with the user 10. Furthermore, the robot 100 causes the server 300 to record the captured video data, etc. of the user 10, requests the video data, etc. from the server 300 as necessary, and provides the video data, etc. to the user 10.

Furthermore, the robot 100 has emotion values indicating types of its own emotions. For example, the robot 100 has emotion values indicating the intensity of each emotion of "delighted", "angry", "sad", "joyful", "pleasant", "unpleasant", "secure", "anxious", "sorrowful", "excited", "worried", "relieved", "fulfilled", "empty", and "neutral". For example, when the robot 100 has a conversation in a state of having a high emotion value of excitement with the user 10, the robot emits a voice at a high speed. In this manner, the robot 100 can express its own emotion by action.

Furthermore, the robot 100 may be configured to decide the action of the robot 100 corresponding to the emotion of the user 10 by using matching of a text generation model (also referred to as an Artificial Intelligence (AI) chat engine) with an emotion engine. Specifically, the robot 100 may be configured to recognize an action of the user 10, determine an emotion of the user 10 behind the action of the user 10, and decide an action of the robot 100 corresponding to the determined emotion.

Furthermore, the robot 100 has a function of recognizing an action of the user 10. The robot 100 recognizes the action of the user 10 by analyzing a face image of the user 10 acquired by a camera function and the voice of the user 10 acquired by a microphone function. The robot 100 decides the current emotional state of the user 10 by the recognized action of the user 10. The robot 100 decides the emotional state of the user 10 by the recognized action of the user 10 as needed. In addition, the robot 100 predicts a future emotional state of the user 10 by a change in the past emotional state of the user 10. For example, the robot 100 recognizes the action of the individual user 10 and decides the emotional state of the individual user 10 for each user 10 having a dialogue with the robot 100. Subsequently, the robot 100 predicts the future emotional state of the individual user 10 by a change in the past emotional state of the individual user 10. The robot 100 decides an action to be executed by the robot 100 based on the recognized action of the user 10, the current emotional state of the user 10, the future emotional state of the user 10, and the like.

The robot 100 stores a rule defining an action to be executed by the robot 100 based on the emotion of the user 10, the emotion of the robot 100, and the action of the user 10, and takes various actions in accordance with the rule.

Specifically, the robot 100 has a reaction rule for deciding an action of the robot 100 based on the emotion of the user 10, the emotion of the robot 100, and the action of the user 10. The reaction rule defines, for example, that in a case where the action of the user 10 is "smiling", the action of the robot 100 is to be an action of "smiling". In addition, the reaction rule defines, for example, that in a case where the action of the user 10 is "getting angry", the action of the robot 100 is to be an action of "apologizing". Furthermore, the reaction rule defines, for example, that in a case where the action of the user 10 is "asking a question", the action of the robot 100 is to be an action of "answering the question". The reaction rule defines, for example, that in a case where the action of the user 10 is "expressing sorrow", the action of the robot 100 is to be an action of "offering words".

Based on the reaction rule, having recognized that the action of the user 10 is "getting angry", the robot 100 selects an action of "apologizing" prescribed in the reaction rule, as the action to be executed by the robot 100. For example, when selecting the action of "apologizing", the robot 100 takes an action of "apologizing" and outputs a voice expressing a word of "apologizing".

Furthermore, it is prescribed that, when a condition that the emotion of the robot 100 is "neutral" (that is, "delighted" = 0, "angry" = 0, "sad" = 0, and "joyful" = 0) and the state of the user 10 is "alone and looks sad" is satisfied, it is possible to execute an emotional change in which the emotion of the robot 100 turns to "worried" and an action of "offering words".

When the robot 100 recognizes that the current emotion of the robot 100 is "neutral" and the user 10 is alone and looks sad, the emotion value of "sad" of the robot 100 is increased based on the reaction rule. Furthermore, the robot 100 selects an action of "offering words" prescribed in the reaction rule as an action to be executed on the user 10. For example, when the action of "offering words" is selected, the robot 100 outputs a word "What's wrong?" indicating a concern in a concerned voice obtained by voice conversion.

Furthermore, the robot 100 transmits, to the server 300, user reaction information indicating that a positive reaction has been obtained from the user 10 by this action. The user reaction information includes, for example, a user action of "getting angry", an action of the robot 100 of "apologizing", a positive reaction of the user 10, and an attribute of the user 10.

The server 300 stores the user reaction information received from the robot 100. The server 300 receives and stores the user reaction information not only from the robot 100 but also from the robot 101 and the robot 102 individually. Subsequently, the server 300 analyzes the user reaction information from the robot 100, the robot 101, and the robot 102, and updates the reaction rule.

The robot 100 inquires the server 300 about the updated reaction rule to receive the updated reaction rule from the server 300. The robot 100 incorporates the updated reaction rule into the reaction rule stored in the robot 100. With this configuration, the robot 100 can incorporate the reaction rule acquired by the robot 101, the robot 102, or the like into its own reaction rule.

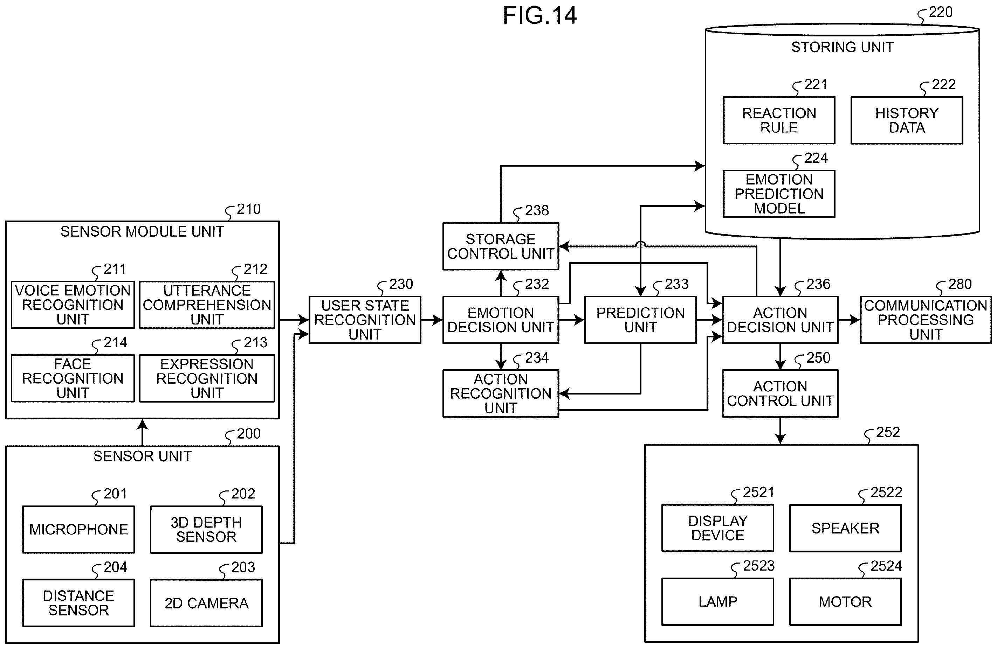

FIG. 14 schematically illustrates a functional configuration of the robot 100. The robot 100 includes a sensor unit 200, a sensor module unit 210, a storing unit 220, a user state recognition unit 230, an emotion decision unit 232, a prediction unit 235, an action recognition unit 234, an action decision unit 236, a storage control unit 238, an action control unit 250, a control target 252, and a communication processing unit 280.

The control target 252 includes a display device 2521, a speaker 2522, a lamp 2523 (for example, the LED for the eyes), and motors 2524 that drive parts such as arms, hands, and legs. The posture and gesture of the robot 100 are controlled by controlling the motors 2524 in the parts such as an arm, a hand, and a leg. Some of the emotions of the robot 100 can be expressed by controlling these motors 2524. The expression of the robot 100 can also be expressed by controlling the light emission state of the LED for the eyes of the robot 100. The display device 2521 may display conversation content with the user 10 as a text. The posture, gesture, and expression of the robot 100 are examples of attitude of the robot 100.

The sensor unit 200 includes a microphone 201, a 3D depth sensor 202, a 2D camera 203, and a distance sensor 204. The microphone 201 continuously detects a voice and outputs voice data. The microphone 201 may be provided on the head of the robot 100 and may have a function of performing binaural recording. The 3D depth sensor 202 detects the contour of an object by continuously projecting an infrared pattern and analyzing the infrared pattern from the infrared image continuously captured by the infrared camera. The 2D camera 203 is an example of an image sensor. The 2D camera 203 captures an image with visible light and generates video information of visible light. The distance sensor 204 detects a distance to an object by projecting a laser and an ultrasonic wave, for example. The sensor unit 200 may further include an acceleration sensor, a clock, a gyro sensor, a touch sensor, a sensor for motor feedback, and the like.

Among the components of the robot 100 illustrated in FIG. 14, the components other than the control target 252 and the sensor unit 200 are examples of components included in the action control system in the robot 100. The action control system of the robot 100 controls the control target 252 as a target.

The storing unit 220 includes a reaction rule 221, history data 222, and an emotion prediction model 224. The history data 222 includes a history of past emotional states and actions of the user 10. For example, the history data 222 stores data of history of past emotion values and history of actions of the user 10. The emotion value and the action history are recorded for each user 10 by being associated with identification information of the user 10, for example. At least a part of the storing unit 220 is implemented by a storage medium such as memory. The storing unit 220 may include a person DB that stores a face image of the user 10, attribute information of the user 10, and the like. Among the components of the robot 100 illustrated in FIG. 14, the functions of the components other than the control target 252, the sensor unit 200, and the storing unit 220 can be implemented by the CPU operating based on a program.

The emotion prediction model 224 is data of a model that predicts a future emotional state of the user. The emotion prediction model 224 may have any data structure as long as it can predict the user's future emotional state. For example, the emotion prediction model 224 may be configured as a database, or may be configured as data storing arithmetic expressions and parameters used for prediction. The emotion prediction model 224 is generated by learning a change in the past emotional state of the individual user 10. For example, the emotion prediction model 224 is generated by learning the attribute of the user 10, emotion data indicating a change in the past emotional state of the user 10, and a surrounding situation of the user 10. The emotion prediction model 224 may be generated in the robot 100 or may be generated in the server 300 and downloaded from the server 300.

The voice emotion recognition unit 211 of the sensor module unit 210 analyzes the voice of the user 10 detected by the microphone 201 to recognize the emotion of the user 10. For example, the voice emotion recognition unit 211 extracts a feature such as a frequency component of a voice and recognizes an emotion of the user 10 based on the extracted feature. The utterance comprehension unit 212 analyzes the voice of the user 10 detected by the microphone 201 and outputs textual information indicating utterance content of the user 10.

The expression recognition unit 213 recognizes the expression of the user 10 and the emotion of the user 10 from the image of the user 10 captured by the 2D camera 203. For example, the expression recognition unit 213 recognizes the expression and emotion of the user 10 based on the shapes, positional relationships, and the like of the eyes and the mouth.

The face recognition unit 214 recognizes the face of the user 10. The face recognition unit 214 recognizes the user 10 by checking the match between a face image stored in a person DB (not illustrated) and a face image of the user 10 captured by the 2D camera 203.

The user state recognition unit 230 recognizes the state of the user 10 based on the information analyzed by the sensor module unit 210. For example, processing mainly related to perception is performed using the analysis result of the sensor module unit 210. For example, perception information such as "Daddy is alone" and "Daddy is not smiling with probability of 90%" is generated. Processing of understanding the meaning of the generated perception information is performed. For example, semantic information such as "Daddy is alone and looks sad." is generated.

The emotion decision unit 232 decides an emotion value indicating the emotion of the user 10 based on the information analyzed by the sensor module unit 210 and the state of the user 10 recognized by the user state recognition unit 230. For example, the information analyzed by the sensor module unit 210 and the recognized state of the user 10 are input to a neural network trained in advance, and an emotion value indicating the emotion of the user 10 is acquired.

Here, the emotion value indicating the emotion of the user 10 is a value indicating whether the emotion of the user is positive/negative. For example, the emotion of the user is a bright emotion accompanied with pleasure or comfort, such as "delighted", "joyful", "pleasant", "secure", "excited", "relieved" and "fulfilled" the emotion value indicates a positive value which becomes larger as the emotion is brighter. When the user's emotion is a negative emotion, such as "angry", "sad", "unpleasant", "anxious", "sorrowful", "worried", and "empty", the value indicates a negative value, and the absolute value of the negative value is larger as the user feels more unpleasant. In a case where the user's emotion is not any of the above ("neutral"), the value indicates a value of 0.

In addition, the emotion decision unit 232 decides an emotion value indicating the emotion of the robot 100 based on the information analyzed by the sensor module unit 210 and the state of the user 10 recognized by the user state recognition unit 230.

Specifically, the emotion decision unit 232 decides an emotion value indicating the emotion of the robot 100 in accordance with a rule for updating the emotion value of the robot 100 prescribed in association with the information analyzed by the sensor module unit 210 and the state of the user 10 recognized by the user state recognition unit 230.

For example, in a case where the user state recognition unit 230 recognizes that the user 10 looks sad, the emotion decision unit 232 increases the emotion value of "sad" of the robot 100. In a case where the user state recognition unit 230 recognizes that the user 10 is now smiling, the emotion value of "delighted" of the robot 100 is increased.

The emotion decision unit 232 may decide the emotion value indicating the emotion of the robot 100 in further consideration of the state of the robot 100. For example, in a case where the remaining battery level of the robot 100 is low, a case where the surrounding environment of the robot 100 is completely dark, or the like, the emotion value of "sad" of the robot 100 may be increased. Furthermore, in the case of the user 10 who desires to continue the dialog even though the remaining battery level is low, the emotion value of "angry" may be increased.

The prediction unit 235 predicts the future emotional state of the user 10 from the state of the user 10 based on the emotion prediction model 224. The prediction unit 235 predicts the future emotional state of each user 10 from the attribute of each user 10 and the change in the past emotional state for each user 10 based on the emotion prediction model 224. For example, the prediction unit 235 reads, from the history data 222, the past emotional state of the user 10 stored corresponding to the recognized identification information of the user 10. For example, the prediction unit 235 reads the emotional state of the user 10 in the most recent predetermined period from the history data 222. For example, the prediction unit 235 reads, from the history data 222, the emotion value of the user 10 in the most recent predetermined period, as the past emotional state. The predetermined period is, for example, three hours, but is not limited thereto. The predetermined period may be variable. A case where the emotion value in the most recent predetermined period is used as the past emotional state will be described, but the disclosed technology is not limited to this aspect. For example, the action decision unit 236 may use a previous emotion value by a unit period such as one day before as the past emotional state of the user 10. The prediction unit 235 predicts the future emotional state of the user 10 based on the emotion prediction model 224 from the attribute of the user 10, the change in the past emotional state read by the user 10, and the surrounding situation of the user 10. In the present embodiment, the emotion prediction model 224 derives a future emotion value of the user 10 as an emotional state of the user 10 in the future.

The action recognition unit 234 recognizes an action of the user 10 based on the information analyzed by the sensor module unit 210 and the state of the user 10 recognized by the user state recognition unit 230. For example, the information analyzed by the sensor module unit 210 and the recognized state of the user 10 are input to a neural network trained in advance to acquire the probability of each of a plurality of predetermined action classifications (for example, "smile", "get angry", "ask a question", and "expressing sorrow"), and the action classification having the highest probability is to be recognized as the action of the user 10.

As described above, in the present embodiment, the robot 100 acquires the utterance content of the user 10 after specifying the user 10. In the acquisition and use of the utterance content, the action control system of the robot 100 according to the present embodiment considers protection of personal information and privacy of the user 10 in addition to acquiring necessary consent according to laws and regulations from the user 10.

Based on the current emotion value of the user 10 decided by the emotion decision unit 232, the future emotion value of the user 10 predicted by the prediction unit 235, and the emotion value of the robot 100, the action decision unit 236 decides an action corresponding to the action of the user 10 recognized by the action recognition unit 234.

The action decision unit 236 according to the present embodiment decides the action of the robot 100 as the action corresponding to the action of the user 10 based on a combination of the future emotion value and the current emotion value of the user 10, the emotion value of the robot 100, the action of the user 10, and the reaction rule 221. For example, in a case where the future emotion value of the user 10 is a positive value and the current emotion value is a negative value, the action decision unit 236 decides an action for changing the emotion value of the user 10 to a positive value as the action corresponding to the action of the user 10.

The reaction rule 221 defines the action of the robot 100 corresponding to the combination of the future emotion value and the current emotion value of the user 10, the emotion value of the robot 100, and the action of the user 10. For example, in a case where the future emotion value of the user 10 is a positive value, the current emotion value is a negative value, and the action of the user 10 is expressing sorrow, a combination of a gesture and utterance content to be used at the time of offering words with gesture to encourage the user 10 is prescribed as the action of the robot 100.

For example, in the reaction rule 221, the action of the robot 100 is determined for all combinations of the pattern of the emotion value of the robot 100 (1296 patterns that is the fourth power of six values, namely, values "0" to "5" of "delighted", "angry", "sad", and "joyful"), the pattern of the combination of the future emotion value and the current emotion value of the user 10, and the action pattern of the user 10. That is, for each pattern of the emotion value of the robot 100, the action of the robot 100 corresponding to the action pattern of the user 10 is determined for each of the plurality of combinations such as the case where the combination of the future emotion value and the current emotion value of the user 10 include combinations of a negative value and a negative value, a negative value and a positive value, a positive value and a negative value, a positive value and a positive value, a negative value and a neutral value, and a neutral value and a neutral value. In a case where the user 10 has made an utterance that intends to have a conversation continued from a past topic such as "I want to talk about the topic I discussed earlier", for example, the action decision unit 236 may transition to the operation mode of deciding the action of the robot 100 using the history data 222.

The action decision unit 236 may decide an action by further adding a past emotion value of the user 10. For example, the action decision unit 236 may decide an action corresponding to the action of the user 10 recognized by the action recognition unit 234 based on the current emotion value of the user 10 decided by the emotion decision unit 232, the future emotion value of the user 10 predicted by the prediction unit 235, the history data 222 of the past emotion values decided by the emotion decision unit 232 before the decision of the current emotion value of the user 10, and the emotion value of the robot 100. In this case, the reaction rule 221 defines the action of the robot 100 corresponding to the combination of the future emotion value, the current emotion value, and the past emotion value of the user 10, the emotion value of the robot 100, and the action of the user 10.

In addition, the action decision unit 236 may decide an action using the future emotion value of the user 10 and the past emotion value of the user 10. For example, the action corresponding to the action of the user 10 recognized by the action recognition unit 234 may be decided based on the future emotion value of the user 10 predicted by the prediction unit 235, the history data 222 of the past emotion values decided by the emotion decision unit 232 before the decision of the current emotion value of the user 10, and the emotion value of the robot 100. In this case, the reaction rule 221 defines the action of the robot 100 corresponding to the combination of the future emotion value, and the past emotion value of the user 10, the emotion value of the robot 100, and the action of the user 10.

Furthermore, the action decision unit 236 may decide an action corresponding to the action of the user 10 in further consideration of the history of the past emotion values of the robot 100 in addition to the current emotion value of the robot 100. The action decided by the action decision unit 236 includes a gesture performed by the robot 100 or utterance content of the robot 100.

The prediction unit 235 may further predict a reaction corresponding to the future emotional state of the user 10. For example, correspondence data in which an emotional state is associated with a reaction of the user 10 is stored in the storing unit 220 for each emotional state of the user 10. The prediction unit 235 further predicts a reaction corresponding to the future emotional state of the user 10 using correspondence data. The action decision unit 236 may decide the action by further adding a reaction of the user 10. For example, the action decision unit 236 may decide the action corresponding to the action of the user 10 recognized by the action recognition unit 234 based on the current emotion value of the user 10 decided by the emotion decision unit 232, the future emotion value of the user 10 predicted by the prediction unit 235, the history data 222 of the past emotion values of the user 10, the emotion value of the robot 100, and the reaction of the user 10. In this case, the reaction rule 221 defines the action of the robot 100 corresponding to the combination of the future emotion value, the current emotion value, and the past emotion value of the user 10, the emotion value of the robot 100, the action of the user 10, and the reaction of the user 10.

In addition, in a case where the emotion value of "delighted" or "joyful" of the robot 100 has increased in a case where the reaction of the user 10 is favorable, a case where the remaining battery level of the robot 100 is high, or the like, the action decision unit 236 may decide an action corresponding to the increase in the emotion value of "delighted" or "joyful" as an action corresponding to the action of the user 10. The action decision unit 236 may decide an action different from the action toward the user 10 that has increased the emotion values of "angry" and "sad" of the robot 100, as an action toward the user 10 that has increased the emotion values of "delighted" and "joyful" of the robot 100. In this manner, the action decision unit 236 may decide different actions depending not only on the own emotion of the robot 100 or the action of the user 10 but also on how the user 10 has changed the own emotion.

The storage control unit 238 decides whether to store data including the action of the user 10 in the history data 222 based on the strength of the action prescribed for the action decided by the action decision unit 236 and the emotion value of the robot 100 decided by the emotion decision unit 232.

Specifically, in a case where the total value of the sum of the emotion values for each of the plurality of emotion classifications of the robot 100 and the strength that is the sum of the strength predetermined for the gesture included in the action decided by the action decision unit 236 and the strength predetermined for the utterance content included in the action decided by the action decision unit 236 is a threshold or more, it is decided to store data including the action of the user 10 in the history data 222.

Having decided to store the data including the action of the user 10 in the history data 222, the storage control unit 238 stores the action decided by the action decision unit 236, the information (for example, any peripheral information including data such as a voice, an image, and a smell of the place) analyzed by the sensor module unit 210 from the current time point to a certain period before, and the state of the user 10 (for example, the expression and emotion of the user 10) recognized by the user state recognition unit 230 in the history data 222.

The action control unit 250 may recognize a change in emotion of the user 10 about the execution of the action decided by the action decision unit 236. For example, the change in emotion may be recognized based on the voice or expression of the user 10. In addition, a change in emotion of the user 10 may be recognized based on detection of an impact by the touch sensor included in the sensor unit 200. In a case where an impact is detected by the touch sensor included in the sensor unit 200, it is allowable to recognize that the emotion of the user 10 is worsened, or in a case where it is determined that the reaction of the user 10 is smiling or delighted from the detection result of the touch sensor included in the sensor unit 200, it is allowable to recognize that the emotion of the user 10 is improved. Information indicating the reaction of the user 10 is output to the communication processing unit 280.

The server 300 performs communication between the robots (the robot 100, the robot 101, and the robot 102) and the server 300, receives the user reaction information transmitted from the robot 100, and updates the reaction rule based on the reaction rule including the action for which a positive reaction has been obtained.

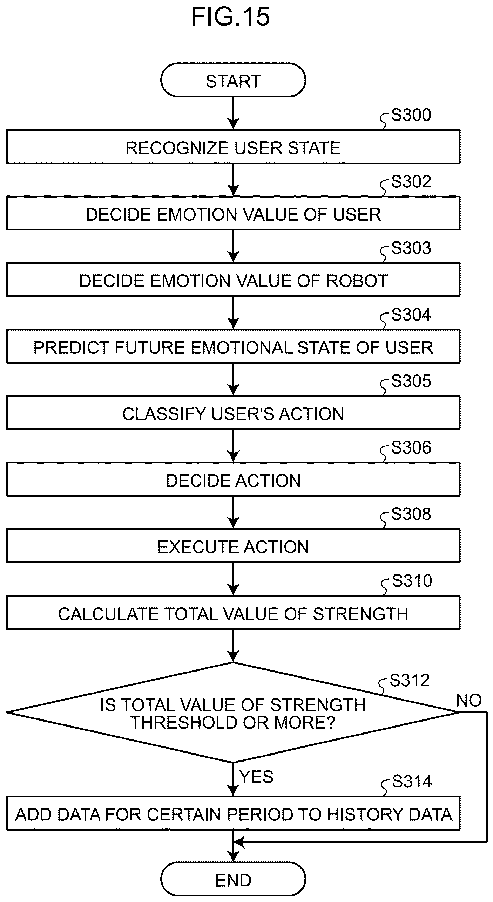

FIG. 15 schematically illustrates an example of an operation flow related to an operation of deciding an action in the robot 100. The operation flow illustrated in FIG. 15 is repeatedly executed. At this time, it is assumed that information analyzed by the sensor module unit 210 is input. Note that "S" in the operation flow represents a step to be executed.

First, in step S300, the user state recognition unit 230 recognizes the state of the user 10 based on the information analyzed by the sensor module unit 210.

In step S302, the emotion decision unit 232 decides an emotion value indicating the emotion of the user 10 based on the information analyzed by the sensor module unit 210 and the state of the user 10 recognized by the user state recognition unit 230.

In step S303, the emotion decision unit 232 decides an emotion value indicating the emotion of the robot 100 based on the information analyzed by the sensor module unit 210 and the state of the user 10 recognized by the user state recognition unit 230. The emotion decision unit 232 adds the decided emotion value of the user 10 to the history data 222.

In step S304, the prediction unit 235 predicts the future emotional state of each user 10 from the attribute of each user 10 and the change in the past emotional state for each user 10 based on the emotion prediction model 224. For example, the prediction unit 235 reads, from the history data 222, the past emotional state of the user 10 stored corresponding to the recognized identification information of the user 10. The prediction unit 235 predicts the future emotional state of the user 10 based on the emotion prediction model 224 from the attribute of the user 10, the change in the past emotional state read by the user 10, and the surrounding situation of the user 10.

In step S305, the action recognition unit 234 recognizes the action classification of the user 10 based on the information analyzed by the sensor module unit 210 and the state of the user 10 recognized by the user state recognition unit 230.

In step S306, the action decision unit 236 decides the action of the robot 100 based on the combination of the current emotion value of the user 10 decided in step S102 and the future emotion value predicted in step S103, the emotion value of the robot 100, the action of the user 10 recognized by the action recognition unit 234, and the reaction rule 221.

In step S308, the action control unit 250 controls the control target 252 based on the action decided by the action decision unit 236.

In step S310, the storage control unit 238 calculates a total value of the strength based on the strength of the action predetermined for the action decided by the action decision unit 236 and the emotion value of the robot 100 decided by the emotion decision unit 232.

In step S312, the storage control unit 238 determines whether the total value of the strength is a threshold or more. In a case where the total value of the strength is less than the threshold, the data including the action of the user 10 is not stored in the history data 222, and the processing ends. In contrast, when the total value of the strength is the threshold or more, the processing proceeds to step S314.

In step S314, the action decided by the action decision unit 236, the information analyzed by the sensor module unit 210 from the current time point to a certain period before, and the state of the user 10 recognized by the user state recognition unit 230 are to be stored in the history data 222.

As described above, based on the emotion prediction model 224, the robot 100 predicts the future emotional state of the user 10 from the change in the past emotional state of the user 10. With this configuration, the robot 100 can predict the future emotional state of the user 10. For example, in a case where it is known that a certain user 10 exhibits an anxious emotion under a specific situation and exhibits a feeling of happiness under a certain situation, and where the known data are modeled in the emotion prediction model 224, the robot 100 can predict what type of emotional state the user 10 will exhibit in the future using the emotion prediction model 224.

In addition, the emotion prediction model 224 is generated by learning a change in the past emotional state of the individual user 10. Based on the emotion prediction model 224, the prediction unit 235 of the robot 100 predicts the future emotional state of the individual user 10 from the change in the past emotional state of the individual user 10. With this configuration, the robot 100 can predict the future emotional state of the individual user 10 from the change in the past emotional state of the individual user 10.

In addition, the emotion prediction model 224 is generated by learning an attribute of the user 10, emotion data indicating a change in a past emotional state of the user 10, and a surrounding situation of the user 10. The prediction unit 235 of the robot 100 predicts the future emotional state of the user 10 based on the emotion prediction model 224 from the attribute of the user 10, the change in the past emotional state of the user 10, and the surrounding situation of the user 10. With this configuration, the robot 100 can accurately predict the future emotional state of the user 10 in accordance with the attribute, the change in the past emotional state, and the surrounding situation of the user 10.

While the above embodiment is a case where the robot 100 recognizes the user 10 using the face image of the user 10, the disclosed technology is not limited to this aspect. For example, the robot 100 may recognize the user 10 using a voice uttered by the user 10, a mail address of the user 10, an ID of an SNS of the user 10, an ID card incorporating a wireless IC tag possessed by the user 10, or the like.

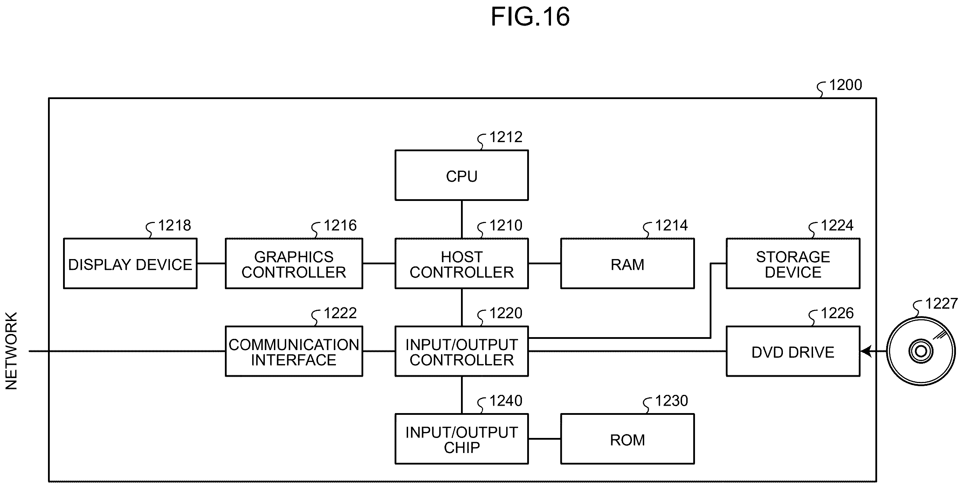

FIG. 16 is a diagram schematically illustrating an example of a hardware configuration of a computer 1200 functioning as the robot 100 and the server 300. A program installed in the computer 1200 can cause the computer 1200 to function as one or more "units" of the apparatus according to the present embodiment, or cause the computer 1200 to execute an operation associated with the apparatus according to the present embodiment or to implement the one or more "units", and/or cause the computer 1200 to execute a process according to the present embodiment or a stage of the process. Such a program may be executed by a CPU 1212 to cause the computer 1200 to perform certain operations associated with some or all of the blocks in the flowcharts and block diagrams described in the present specification.

The computer 1200 according to the present embodiment includes a CPU 1212, RAM 1214, and a graphics controller 1216, which are interconnected by a host controller 1210. The computer 1200 also includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a legacy input/output unit such as ROM 1230 and a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 obtains image data generated by the CPU 1212 in a frame buffer or the like provided in the RAM 1214 or directly in the RAM 1214, and causes the image data to be displayed on a display device 1218.

The communication interface 1222 communicates with other electronic devices via a network. The storage device 1224 stores programs and data used by the CPU 1212 in the computer 1200. The DVD drive 1226 reads a program or data from a DVD-ROM 1227 or the like and provides the read program or data to the storage device 1224. The IC card drive reads programs and data from an IC card and/or writes programs and data to the IC card.

The ROM 1230 stores therein a boot program and the like executed by the computer 1200 at the time of activation, and/or a program dependent on hardware of the computer 1200. The input/output chip 1240 may connect various input/output units to the input/output controller 1220 via a USB port, a parallel port, a serial port, a keyboard port, a mouse port, or the like.

The program is provided by a computer-readable storage medium such as a DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 so as to provide a linkage between the programs and various types of hardware resources described above. The apparatus or method may be configured by implementing operation or processing of information in accordance with use of the computer 1200.

For example, when communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM 1227, or the IC card, transmits the read transmission data to the network, or writes reception data received from the network into a reception buffer area or the like provided on the recording medium.

In addition, the CPU 1212 may allow the RAM 1214 to read all or a necessary portion of a file or database stored in an external recording medium such as the storage device 1224, a DVD drive 1226 (DVD-ROM 1227), or the IC card, and may execute various types of processing on data on the RAM 1214. Next, the CPU 1212 may perform write-back of the processed data to the external recording medium.

Various types of information, such as various types of programs, data, tables, and databases, may be stored in a recording medium and subjected to information processing. The CPU 1212 may execute various types of processing on data read from the RAM 1214, including various types of operations, information processing, condition determination, conditional branching, unconditional branching, information search/replacement, and the like, which are described throughout the present disclosure and designated by a command sequence of a program, and writes back the results of processing to the RAM 1214. In addition, the CPU 1212 may search for information in a file, a database, or the like in the recording medium. For example, when a plurality of entries, each having an attribute value of a first attribute associated with an attribute value of a second attribute, is stored in the recording medium, the CPU 1212 may search for an entry in which the attribute value of the first attribute matches a designated condition from the plurality of entries, read the attribute value of the second attribute stored in the entry, and thereby acquire the attribute value of the second attribute associated with the first attribute satisfying the predetermined condition.

The above-described program or software modules may be stored in a computer-readable storage medium on the computer 1200 or in the vicinity of the computer 1200. Furthermore, a recording medium such as a hard disk or RAM provided in a server system connected to a dedicated communication network or the Internet can be used as a computer-readable storage medium, thereby providing the program to the computer 1200 via the network.

The blocks in the flowcharts and block diagrams in the present embodiment may represent stages of a process in which an operation is performed or "units" of an apparatus that are responsible for performing the operation. Specific stages and "units" may be implemented by dedicated circuits, programmable circuits provided together with computer-readable instructions stored on a computer-readable storage medium, and/or by a processor provided together with computer-readable instructions stored on a computer-readable storage medium. Dedicated circuits may include digital and/or analog hardware circuits, and may include integrated circuits (ICs) and/or discrete circuits. Programmable circuits may include reconfigurable hardware circuits including, for example, logical conjunction, logical disjunction, exclusive OR, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, and as a result, the computer-readable storage medium including instructions stored in the device is to have a product including instructions that can be executed to create means for executing operations designated in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), a digital versatile disk (DVD), a Blu-ray (registered trademark) disk, a memory stick, and an integrated circuit card.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk, JAVA (registered trademark), and C++, and conventional procedural programming languages, such as the "C" programming language or similar programming languages.

The computer-readable instructions may be provided for a processor or programmable circuits of a general purpose computer, special purpose computer, or other programmable data processing apparatus, either locally or over a local area network (LAN), a wide area network (WAN) such as the Internet so as to cause the processor or programmable circuits of the general purpose computer, special purpose computer, or other programmable data processing apparatus to execute the computer-readable instructions in order to generate means to execute the operations designated in the flowcharts or block diagrams. Examples of the processor include a computer processor, a processing unit, a microprocessor, a digital signal processor, a controller, and a microcontroller.

### (Fourth embodiment)

FIG. 1 is a diagram schematically illustrating an example of a control system 1 according to the present embodiment. As illustrated in FIG. 1, the control system 1 includes a plurality of robots 100, a cooperative device 400, and a server 300. Each of the plurality of robots 100 is managed by a user.

The present disclosure will describe an example in which the robot 100 analyzes emotions of a plurality of users existing in the same space and predicts an event to be caused by interaction between the users based on the analyzed emotions of the individual users.

For example, the robot 100 is disposed in a space where a plurality of users gathers, analyzes emotions of the users in the space, and predicts an event (for example, increased morale, radicalization, collision, etc.) caused by an interaction (for example, propagation, sympathizing, repulsion, expansion, reduction, etc.) that influences emotions of other users.

In addition, the robot 100 inputs the analyzed emotion of each user and the interaction between the users to a neural network trained in advance to predict an event to be caused by the interaction between the users. For example, the robot 100 inputs a result of analyzing the emotions of the users existing in the same space as "delighted", "joyful", "excited", "anxiety", and "sad", individually, and the interaction between the users to a neural network trained in advance, such as a Large Language Model, to predict an event to be caused by the interaction between the users.

In addition, using the analyzed emotions of the individual users, the robot 100 predicts an event to be caused by an interaction between the users having similar emotions. For example, the robot 100 predicts an event (for example, increase in morale, radicalization, etc.) caused by an interaction (for example, propagation, sympathizing, expansion, etc.) between users having similar emotions, such as a combination of emotions of "delighted" and "joyful" or a combination of emotions of "scared" and "sad".

In addition, using the analyzed emotions of the users, the robot 100 predicts an event to be caused by an interaction between users having conflicting emotions. For example, the robot 100 predicts an event (for example, a collision, etc.) caused by an interaction (for example, propagation, sympathizing, repulsion, etc.) between users having conflicting emotions, such as a combination of emotions of "delighted" and "distressing" or a combination of emotions of "rejoicing" and "sad".

In addition, the robot 100 decides its own action corresponding to the predicted event, and controls the control target based on the decided own action. For example, the robot 100 makes a decision and acts to inspire a group so as to actualize an event such as predicted increase in morale. In addition, for example, the robot 100 makes a decision and acts to achieve group harmony so as to suppress an event such as a predicted collision.

In this manner, the robot 100 in the present disclosure can specify potential collisions, radicalization, synergy between users, and suggest appropriate interventions or adjustments, for example.

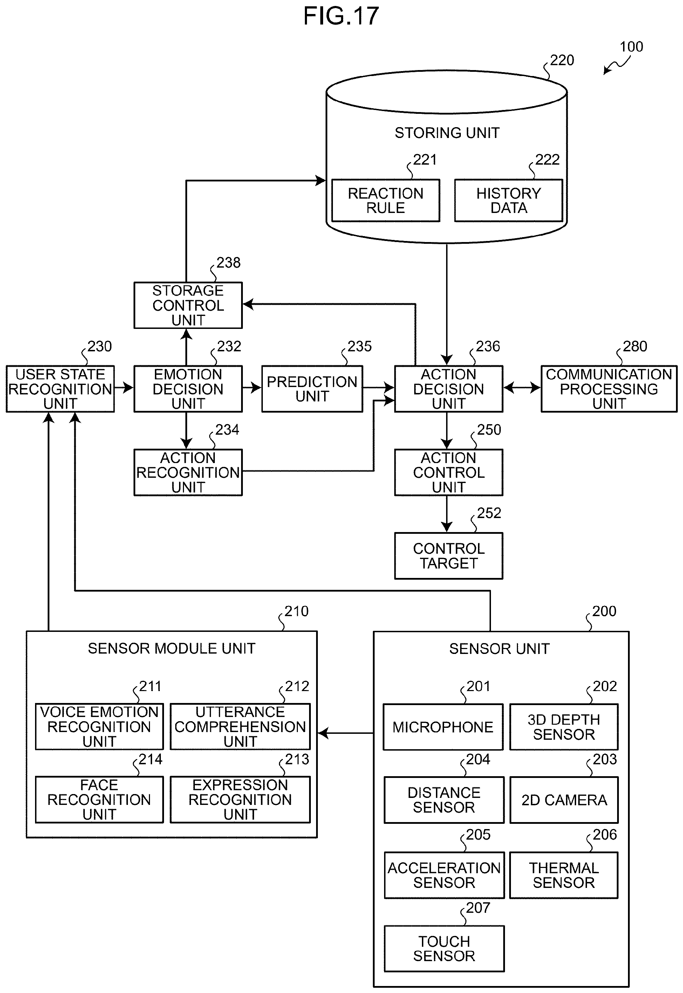

FIG. 17 is a diagram schematically illustrating a functional configuration of the robot 100. The robot 100 includes a control unit including a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, and a communication processing unit 280.

Among the components of the robot 100 illustrated in FIG. 17, the components other than the control target 252 and the sensor unit 200 are examples of components included in the action control system in the robot 100. The action control system of the robot 100 controls the control target 252 as a target.

The storing unit 220 includes a reaction rule 221 and history data 222. The history data 222 includes history of past emotion values of the user and history of actions of the user. The history of emotion values and actions is recorded for each user, for example, by being associated with identification information of the user. At least a part of the storing unit 220 is implemented by a storage medium such as memory. A person DB that stores a face image of the user, attribute information of the user, and the like may be included. Among the components of the robot 100 illustrated in FIG. 2, the functions of the components other than the control target 252, the sensor unit 200, and the storing unit 220 can be implemented by the CPU operating based on a program.

The expression recognition unit 213 recognizes the expression of the user and the emotion of the user from the image of the user captured by the 2D camera 203. For example, the expression recognition unit 213 recognizes the expression and emotion of the user based on the shapes, positional relationships, and the like of the eyes and the mouth. For example, the expression recognition unit 213 recognizes the expression and emotion of the user making a speech or of the user listening to the speech of another user.

The user state recognition unit 230 recognizes the state of the user based on the information analyzed by the sensor module unit 210. For example, processing mainly related to perception is performed using the analysis result of the sensor module unit 210. For example, the user state recognition unit 230 generates perception information such as "the user is having a conversation with another user", "the user is shaking their head", or "The probability that the user is enjoying conversation is XX%.", and performs processing of understanding the meaning of the generated perception information. For example, the user state recognition unit 230 generates semantic information such as "The user is shaking their head while listening to the speech of another user, and seems not to be enjoying the conversation".

The action recognition unit 234 recognizes an action of the user based on the information analyzed by the sensor module unit 210 and the state of the user recognized by the user state recognition unit 230. For example, the information analyzed by the sensor module unit 210 and the recognized state of the user are input to a neural network trained in advance to acquire the probability of each of a plurality of predetermined action classifications (for example, "smile", "get angry", "ask a question", and "expressing sorrow"), and the action classification having the highest probability is to be recognized as the action of the user. For example, the action recognition unit 234 recognizes the action of the user, such as "talking", "listening", or "physical contact" in a group including a plurality of users.

The prediction unit 235 predicts an event to be caused by interaction between users. For example, the prediction unit 235 analyzes emotions of a plurality of users existing in the same space and predicts an event to be caused by interaction between the users based on the analyzed emotions of the individual users. For example, the prediction unit 235 inputs the emotion value indicating the emotion of each of users existing in the same space decided by the emotion decision unit 232 and the interaction between the users to a neural network trained in advance, and predicts an event to be caused by the interaction between the users. For example, the prediction unit 235 inputs a result of analyzing the emotions of the users existing in the same space as "delighted", "joyful", "excited", "anxiety", and "sad", individually, and the interaction between the users to a neural network trained in advance, such as a Large Language Model, for example, to predict an event to be caused by the interaction between the users.

At this time, the analyzed emotions of each of users are used to predict the event to be caused by an interaction between the users having similar emotions. For example, the robot 100 predicts an event (for example, increase in morale, radicalization, etc.) caused by an interaction (for example, propagation, sympathizing, expansion, etc.) between users having similar emotions, such as a combination of emotions of "delighted" and "joyful" or a combination of emotions of "scared" and "sad".

In addition, using the analyzed emotions of the users, the prediction unit 235 predicts an event to be caused by an interaction between users having conflicting emotions. For example, the prediction unit 235 predicts an event (for example, a collision or the like) caused by an interaction (for example, propagation, sympathizing, repulsion, etc.) between users having conflicting emotions, such as a combination of emotions such as "delighted" and "distressing" or a combination of emotions such as "joyful" and "sad".

As described above, in the present embodiment, the robot 100 acquires the utterance content of the user after specifying the user. In the acquisition and use of the utterance content, the action control system of the robot 100 according to the present embodiment considers protection of personal information and privacy of the user in addition to acquisition of necessary consent according to laws and regulations from the user.

The action decision unit 236 according to the present embodiment decides the action of the robot 100 as the action corresponding to the action of the user based on a combination of the past emotion value and the current emotion value of the user, the emotion value of the robot 100, the action of the user, and the reaction rule 221. For example, in a case where the past emotion value of the user is a positive value and the current emotion value is a negative value, the action decision unit 236 decides an action for changing the emotion value of the user to a positive value as the action corresponding to the action of the user.

For example, the reaction rule 221 prescribes an action of the robot 100 corresponding to an action pattern such as an utterance ("Inspire" or "Calm") related to a request of the user in a case where the user is speaking or in a case where the user is listening.

The action control unit 250 controls the control target 252 based on the action decided by the action decision unit 236. For example, when the action decision unit 236 has determined an action including utterance, the action control unit 250 controls to output a voice from a speaker included in the control target 252. At this time, the action control unit 250 may decide the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion decision unit 232. For example, the action control unit 250 decides its own action corresponding to the predicted event, and controls the control target based on the decided own action. For example, the robot 100 makes a decision and acts to inspire a group so as to actualize an event such as predicted increase in morale. In addition, for example, the robot 100 makes a decision and acts to achieve group harmony so as to suppress an event such as a predicted collision.

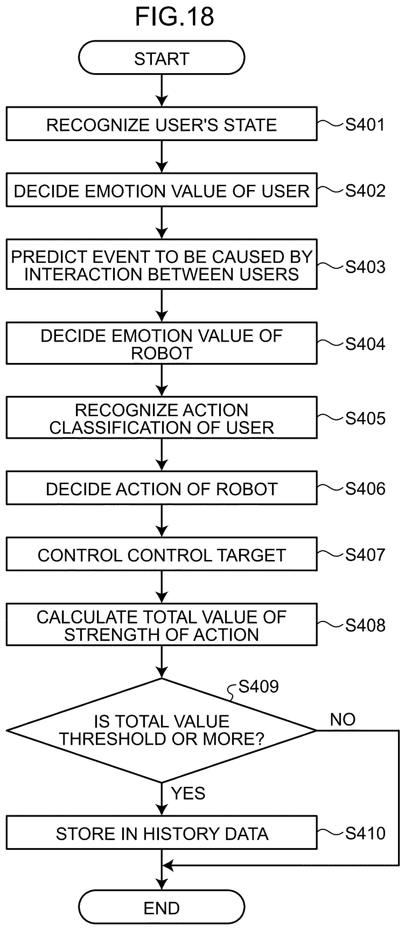

FIG. 18 is a diagram schematically illustrating an example of an operation flow related to an operation of deciding an action of the robot 100. The operation flow illustrated in FIG. 18 is repeatedly executed. At this time, it is assumed that information analyzed by the sensor module unit 210 is input. Note that "S" in the operation flow represents a step to be executed.

First, in step S401, the user state recognition unit 230 recognizes the state of the user based on the information analyzed by the sensor module unit 210. The user state recognition unit 230 generates perception information such as "the user is having a conversation with another user", "the user is shaking their head", or "The probability that the user is enjoying conversation is XX%.", and performs processing of understanding the meaning of the generated perception information. For example, the user state recognition unit 230 generates semantic information such as "The user is shaking their head while listening to the speech of another user, and seems not to be enjoying the conversation".

In step S402, the emotion decision unit 232 decides an emotion value indicating the emotion of the user based on the information analyzed by the sensor module unit 210 and the state of the user recognized by the user state recognition unit 230.

In step S403, using the analyzed emotions of the users, the prediction unit 235 predicts an event to be caused by an interaction between users having conflicting emotions.

In step S404, the emotion decision unit 232 decides an emotion value indicating the emotion of the robot 100 based on the information analyzed by the sensor module unit 210 and the state of the user recognized by the user state recognition unit 230. The emotion decision unit 232 adds the decided emotion value of the user to the history data 222.

In step S405, the action recognition unit 234 recognizes the action classification of the user based on the information analyzed by the sensor module unit 210 and the state of the user recognized by the user state recognition unit 230. For example, the action recognition unit 234 recognizes the action of the user, such as "talking", "listening", and "physical contact".

In step S406, the action decision unit 236 decides the action of the robot 100 based on the combination of the current emotion value of the user decided in step S102 and the past emotion value included in the history data 222, the emotion value of the robot 100, the action of the user recognized by the action recognition unit 234, and the reaction rule 221.

In step S407, the action control unit 250 controls the control target 252 based on the action decided by the action decision unit 236. For example, the action control unit 250 performs an action of inspiring a group or an action of achieving group harmony corresponding to the predicted event.

In step S408, the storage control unit 238 calculates a total value of the strength based on the strength of the action predetermined for the action decided by the action decision unit 236 and the emotion value of the robot 100 decided by the emotion decision unit 232.

In step S409, the storage control unit 238 determines whether the total value of the strength is a threshold or more. In a case where the total value of the strength is less than the threshold, the data including the action of the user is not stored in the history data 222, and the processing ends. In contrast, when the total value of the strength is the threshold or more, the processing proceeds to step S410.

In step S410, the action decided by the action decision unit 236, the information analyzed by the sensor module unit 210 from the current time point to a certain period before, and the state of the user recognized by the user state recognition unit 230 are to be stored in the history data 222.

As described above, the robot 100 includes the prediction unit that analyzes emotions of a plurality of users existing in the same space and that predicts an event to be caused by interaction between users based on the analyzed emotions of the users. With this configuration, the robot 100 can analyze the emotions of the users included in the group and predict an event that occurs due to the interaction between the users caused by the emotions in the users.

In addition, the prediction unit 235 of the robot 100 inputs the analyzed emotion of each user and the interaction between the users to a neural network trained in advance to predict an event to be caused by the interaction between the users. With this configuration, the robot 100 can input the analyzed emotions of the users and the interaction between the users to a trained Large Language Model, for example, to predict an event that occurs due to interaction between the users.

In addition, using the analyzed emotions of the individual users, the prediction unit 235 of the robot 100 predicts an event to be caused by an interaction between the users having similar emotions. With this configuration, the robot 100 can predict an event to be caused by an interaction between users having similar emotions.

In addition, the prediction unit 235 of the robot 100 uses the analyzed emotions of individual users to predict an event to be caused by an interaction between the users having conflicting emotions. This makes it possible for the robot 100 to predict an event to be caused by an interaction between the users having conflicting emotions.

In addition, the robot 100 has the control unit that decides its own action corresponding to the predicted event, and controls the control target based on the decided own action. This makes it possible for the robot 100 to decide and execute its own action corresponding to the predicted event.

In addition, the control unit of the robot 100 decides an action so that the predicted event occurs. This makes it possible for the robot 100 to decide and execute its own action so that the predicted event occurs, and urge the occurrence of the predicted event.

In addition, the control unit of the robot 100 decides an action so that the predicted event occurs. This makes it possible for the robot 100 to decide and execute its own action so that the predicted event does not occur, and can prevent the occurrence of the predicted event.

While the above embodiment is a case where the robot 100 recognizes the user using the face image of the user, the disclosed technology is not limited to this aspect. For example, the robot 100 may recognize the user using a voice uttered by the user, a mail address of the user, an ID of an SNS of the user, an ID card incorporating a wireless IC tag possessed by the user, or the like.

### (Fifth embodiment)

FIG. 13 schematically illustrates an example of a system 5 according to the present embodiment. The system 5 includes a robot 100, a robot 101, a robot 102, which are an example of an electronic device, and a server 300.

When having recognized an action of the user 10, the robot 100 uses a preset text generation model to automatically generate action content to be taken by the robot 100 with respect to the action of the user 10.

Here, each robot includes an event detecting function of detecting occurrence of a predetermined event and outputting information corresponding to the event that has occurred. For example, each robot detects an event in which the user needs a support. In the present embodiment, such an event includes an event that requires support for promoting user's positive emotional experience (in other words, suppression of user's negative emotional experience).

Furthermore, the robot 100 has a function of recognizing an action of the user 10. The robot 100 recognizes the action of the user 10 by analyzing a face image of the user 10 acquired by a camera function and the voice of the user 10 acquired by a microphone function. The robot 100 decides the current emotional state of the user 10 by the recognized action of the user 10. The robot 100 decides the emotional state of the user 10 by the recognized action of the user 10 as needed. The robot 100 decides an action to be executed by the robot 100 based on the recognized action of the user 10 or the like.

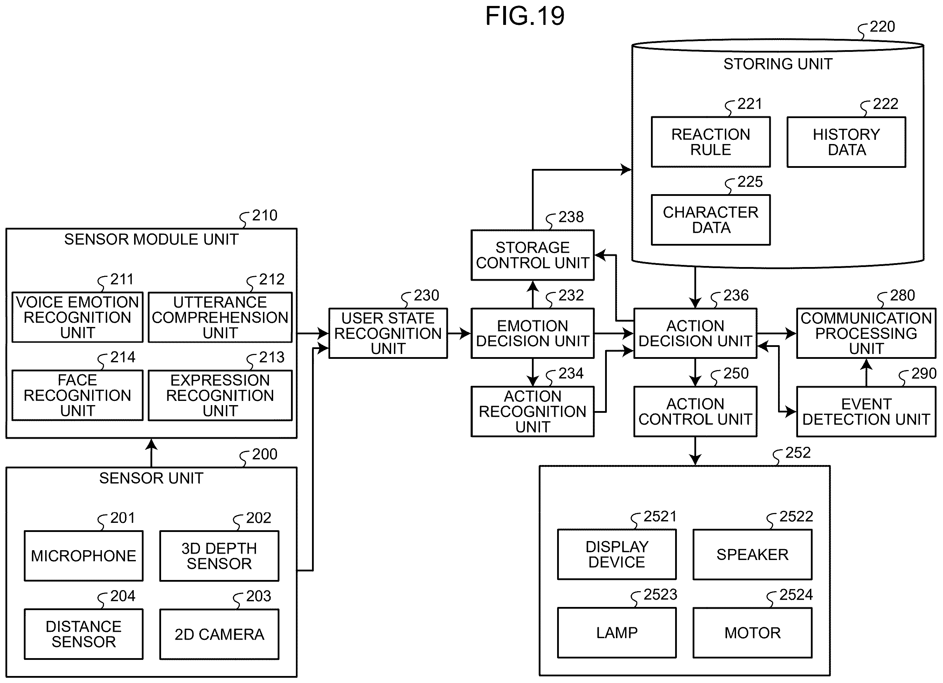

FIG. 19 schematically illustrates a functional configuration of the robot 100. The robot 100 includes a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, a communication processing unit 280, and an event detection unit 290.

The control target 252 includes a display device 2521, a speaker 2522, a lamp 2523 (for example, the LED for the eyes), and motors 2524 that drive parts such as arms, hands, and legs. The posture and gesture of the robot 100 are controlled by controlling the motors 2524 in the parts such as an arm, a hand, and a leg. Some of the emotions of the robot 100 can be expressed by controlling these motors 2524. The expression of the robot 100 can also be expressed by controlling the light emission state of the LED for the eyes of the robot 100. The posture, gesture, and expression of the robot 100 are examples of attitude of the robot 100.

Among the components of the robot 100 illustrated in FIG. 19, the components other than the control target 252 and the sensor unit 200 are examples of components included in the action control system in the robot 100. The action control system of the robot 100 controls the control target 252 as a target.

The storing unit 220 includes a reaction rule 221, history data (data of the emotion database) 222, and character data 225. The history data 222 includes past emotion values and action history of the user 10. The emotion value and the action history are recorded for each user 10 by being associated with identification information of the user 10, for example. That is, the emotion database is unique to each user 10. At least a part of the storing unit 220 is implemented by a storage medium such as memory. A person DB that stores a face image of the user 10, attribute information of the user 10, and the like may be included. Among the components of the robot 100 illustrated in FIG. 19, the functions of the components other than the control target 252, the sensor unit 200, and the storing unit 220 can be implemented by the CPU operating based on a program.

The character data 225 is data in which a character and an age are associated with each other. For example, the character is a person or the like appearing in a piece of content such as an existing animation, a video game, a cartoon, or a movie. Furthermore, the character may be an animal and a plant having a personality, or may be an inanimate object (such as a robot).

For example, the age (use age) associated with the character in the character data 225 is decided based on the age group of the viewer assumed as the target of the content in which the character appears.

For example, it is assumed that a character "A" appears in an animation for kindergarten children. In this case, as illustrated in FIG. 3, the character "A" is associated with a use age of "ages 3 to 7".

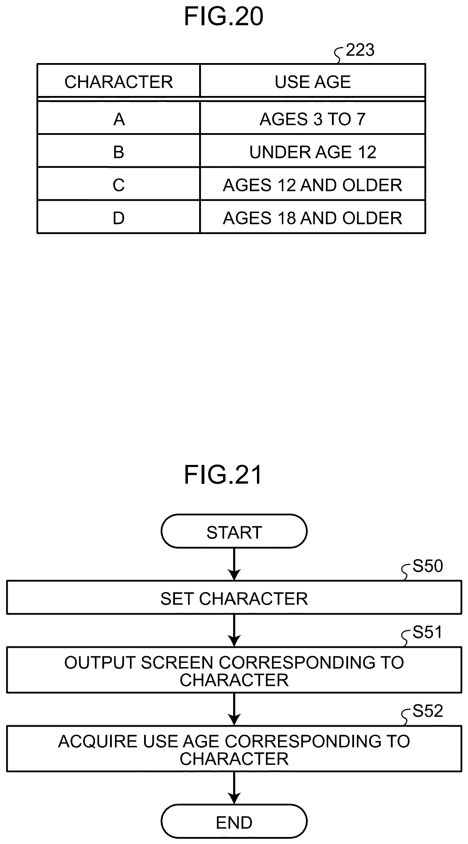

Furthermore, for example, it is assumed that a movie in which a character "C" appears includes a violent scene and is not suitable for viewing by young children. In this case, as illustrated in FIG. 20, the character "C" is associated with a use age of "ages 12 and older".

The age in the character data 225 may be defined based on an age rating by a rating organization such as Pan European Game Information (PEGI), a movie ethics organization, or a Computer Entertainment Rating Organization (CERO). Furthermore, the use age may be determined by a range such as "ages 3 to 5" or "ages 12 and older", or may be determined by one value such as "age 10" or "age 15".

Based on the current emotion value of the user 10 decided by the emotion decision unit 232, the history data 222 of the past emotion values decided by the emotion decision unit 232 before the current emotion value of the user 10 is decided, and the emotion value of the robot 100, the action decision unit 236 decides an action corresponding to the action of the user 10 recognized by the action recognition unit 234. While the present embodiment will describe a case where the action decision unit 236 uses one most recent emotion value included in the history data 222 as the past emotion value of the user 10, the disclosed technology is not limited to this aspect. For example, the action decision unit 236 may use a plurality of most recent emotion values as the past emotion values of the user 10, or may use emotion values that are earlier by a unit period such as a day before.

The action decision unit 236 according to the present embodiment decides the action of the robot 100 as the action corresponding to the action of the user 10 based on a combination of the past emotion value and the current emotion value of the user 10, the emotion value of the robot 100, the action of the user 10, and the reaction rule 221. For example, in a case where the past emotion value of the user 10 is a positive value and the current emotion value is a negative value, the action decision unit 236 decides an action for changing the emotion value of the user 10 to a positive value as the action corresponding to the action of the user 10.

The action decision unit 236 may decide an action corresponding to the action of the user 10 based on the emotion of the robot 100. For example, when the emotion value of "angry" or "sad" of the robot 100 has increased in a case where the robot is abused by the user 10, in a case where the user 10 takes an arrogant attitude (that is, in a case where the user's reaction is unfavorable), in a case where the voice of the user 10 cannot be detected due to surrounding noise, in a case where the remaining battery level of the robot 100 is low, or the like, the action decision unit 236 may decide an action corresponding to the increase in the emotion value of "angry" or "sad" as the action corresponding to the action of the user 10. Furthermore, in a case where the emotion value of "delighted" or "joyful" of the robot 100 has increased in a case where the user's reaction is favorable, a case where the remaining battery level of the robot 100 is high, or the like, the action decision unit 236 may decide an action corresponding to the increase in the emotion value of "delighted" or "joyful" as an action corresponding to the action of the user 10. The action decision unit 236 may decide an action different from the action toward the user 10 that has increased the emotion values of "angry" and "sad" of the robot 100, as an action toward the user 10 that has increased the emotion values of "delighted" and "joyful" of the robot 100. In this manner, the action decision unit 236 may decide various actions depending on the emotion itself of the robot 100 itself or how the user 10 has changed the emotion of the robot 100 by the action of the user 10.

The reaction rule 221 defines the action of the robot 100 corresponding to the combination of the past emotion value and the current emotion value of the user 10, the emotion value of the robot 100, and the action of the user 10. For example, in a case where the past emotion value of the user 10 is a positive value, the current emotion value is a negative value, and the action of the user 10 is expressing sorrow, a combination of a gesture and utterance content to be used at the time of offering words with gesture to encourage the user 10 is prescribed as the action of the robot 100.

For example, in the reaction rule 221, the action of the robot 100 is determined for all combinations of the pattern of the emotion value of the robot 100 (1296 patterns being the fourth power of six values, namely, values "0" to "5" of "delighted", "angry", "sad", and "joyful"), the pattern of the combination of the past emotion value and the current emotion value of the user 10, and the action pattern of the user 10. That is, for each pattern of the emotion value of the robot 100, the action of the robot 100 corresponding to the action pattern of the user 10 is determined for each of the plurality of combinations such as the case where the combination of the past emotion value and the current emotion value of the user 10 include combinations of a negative value and a negative value, a negative value and a positive value, a positive value and a negative value, a positive value and a positive value, a negative value and a neutral value, and a neutral value and a neutral value. In a case where the user 10 has made an utterance that intends to have a conversation continued from a past topic such as "I want to talk about the topic I discussed earlier", for example, the action decision unit 236 may transition to the operation mode of deciding the action of the robot 100 using the history data 222.

Having decided to store the data including the action of the user 10 in the history data 222, the storage control unit 238 stores the action decided by the action decision unit 236, the information (for example, any surrounding information including data such as a voice, an image, and a smell of the place) analyzed by the sensor module unit 210 from the current time point to a certain period before, and the state of the user 10 (for example, the expression and emotion of the user 10) recognized by the user state recognition unit 230 in the history data 222.

The event detection unit 290 implements the above-described output function. Details of the event detection unit 290 will be described below.

### (Action decision based on character)

The above has described a case where the action decision unit 236 decides the action of the robot 100 based on the state recognized by the user state recognition unit 230. On the other hand, the action decision unit 236 may decide the action of the robot 100 based on not only the state of the user but also a character that has been set. At this time, the action decision unit 236 may acquire the age (use age) associated with the character from the character data 225, and decide the action of the robot 100 based on the acquired use age.

That is, the action decision unit 236 decides the action of the robot 100 based on the state recognized by the user state recognition unit 230 and on the character that has been set or the age associated with the character. This configuration enables the robot 100 to execute an appropriate action according to the age of the user. In particular, it is possible to restrict actions by the robot 100 that are not suitable for younger users (for example, outputting violent content).

In the system 5, a character is set in advance. The character setting is input as a prompt (instruction). The input of the prompt may be performed via an input device provided in the robot 100 or may be performed via an external device such as a server communicably connected to the robot 100. In addition, in the prompt, a name of a character may be specified, or an ID determined for each character may be designated.

For example, the action decision unit 236 decides an action to output a screen indicating the appearance of the character or a color according to the character on the display device 2521 (an example of an output device) provided on the robot. The color corresponding to the character is a theme color or the like that is associated with the character. This makes it possible for the user to obtain a feeling of having a dialog with the character.

Furthermore, for example, the action decision unit 236 decides an action to output information to the display device 2521 or the speaker 2522 (an example of an output device) provided in the robot 100 by the mode according to the use age. For example, the action decision unit 236 changes the voice of the robot 100 emitted from the speaker 2522 to the tone of the character.

Furthermore, for example, the action decision unit 236 decides an action of outputting a voice or a message by a text using words corresponding to the use age. Here, it is assumed that usable words for each age are set in advance. The action decision unit 236 acquires the use age from the character data 225.

For example, it is assumed that words "What's wrong?" and "Is there anything I can do for you?" are stored in the storing unit 220 in advance as words to be output when the robot 100 selects the action of "offering words". Furthermore, it is assumed that the age of "ages under 12" is associated with "What's wrong?" and the age of "ages 12 and older" is associated with "Is there anything I can do for you?". For example, the action decision unit 236 decides to output the word "Is there anything I can do for you?" when the use age corresponds to "ages 18 and older". For example, the action decision unit 236 decides to output the word "What's wrong?" when the use age corresponds to "ages 3 to 7".

In this manner, by changing the tone of the voice and the words to be output in accordance with the use age, it is possible to improve the familiarity for the user of the younger age while restricting the action not suitable for the user of the younger age in particular.

Furthermore, the action decision unit 236 decides an action of outputting content corresponding to the character to an output device (such as the display device 2521) provided in the robot 100. For example, the action decision unit 236 decides an action to display, on the display device 2521, video content (such as movies and animations) in which a character appears.

Furthermore, the action decision unit 236 may decide an action of outputting educational content according to the use age. Here, the educational content is text, video, and voice related to learning subjects such as English, arithmetic, National language, science, and society. Furthermore, the educational content may be interactive content that allows the user to input their answer to a problem. For example, the action decision unit 236 decides an action to display the text of the calculation problem corresponding to the grade corresponding to the use age on the display device 2521. For example, the action decision unit 236 decides to display an addition problem when the use age is "ages under 8", and decides to display a multiplication problem when the use age is "ages 8 and older".

Furthermore, the action decision unit 236 may decide an action of outputting content corresponding to the use age rather than character to the output device provided in the robot 100. The content in this case may be a piece of content in which a character appears, or may be a piece of content that does not depend on a character, such as a generally known folk tale or fairy tale.

The content corresponding to a character, and the grade and educational content according to the use age may be stored in the storing unit 220 in advance, or may be acquired from an external device such as a server communicably connected to the robot 100.

FIG. 21 schematically illustrates an example of an operation flow related to setting of a character. Note that "S" in the operation flow represents a step to be executed.

In step S50, the robot 100 receives character setting. In step S51, the robot 100 outputs a screen (for example, a screen displaying an appearance of a character) corresponding to the character.

In step S52, the action decision unit 236 acquires the use age corresponding to the character that has been set, from the character data 225.

FIG. 22 schematically illustrates an example of an operation flow related to an operation of deciding an action in the robot 100. The operation flow illustrated in FIG. 5 is repeatedly executed. At this time, it is assumed that information analyzed by the sensor module unit 210 is input. Note that "S" in the operation flow represents a step to be executed.

First, in step S500, the user state recognition unit 230 recognizes the state of the user 10 based on the information analyzed by the sensor module unit 210.

In step S502, the emotion decision unit 232 decides an emotion value indicating the emotion of the user 10 based on the information analyzed by the sensor module unit 210 and the state of the user 10 recognized by the user state recognition unit 230.

In step S503, the emotion decision unit 232 decides an emotion value indicating the emotion of the robot 100 based on the information analyzed by the sensor module unit 210 and the state of the user 10 recognized by the user state recognition unit 230. The emotion decision unit 232 adds the decided emotion value of the user 10 to the history data 222.

In step S504, the action recognition unit 234 recognizes the action classification of the user 10 based on the information analyzed by the sensor module unit 210 and the state of the user 10 recognized by the user state recognition unit 230.

In step S506, the action decision unit 236 decides the action of the robot 100 based on the use age acquired in step S52 in FIG. 21, the combination of the current emotion value of the user 10 decided in step S502 in FIG. 22 and the past emotion value included in the history data 222, the emotion value of the robot 100, the action of the user 10 recognized by the action recognition unit 234, and the reaction rule 221.

In step S508, the action control unit 250 controls the control target 252 based on the action decided by the action decision unit 236.

In step S510, the storage control unit 238 calculates a total value of the strength based on the strength of the action predetermined for the action decided by the action decision unit 236 and the emotion value of the robot 100 decided by the emotion decision unit 232.

In step S512, the storage control unit 238 determines whether the total value of the strength is a threshold or more. In a case where the total value of the strength is less than the threshold, the data including the action of the user 10 is not stored in the history data 222, and the processing ends. In contrast, when the total value of the strength is the threshold or more, the processing proceeds to step S514.

In step S514, the action decided by the action decision unit 236, the information analyzed by the sensor module unit 210 from the current time point to a certain period before, and the state of the user 10 recognized by the user state recognition unit 230 are to be stored in the history data 222.

As described above, according to the robot 100, the emotion value indicating the emotion of the robot 100 is decided based on the user state, and whether to store data including the action of the user 10 in the history data 222 is decided based on the emotion value of the robot 100. This makes it possible to suppress the capacity of the history data 222 that stores data including the action of the user 10. In addition, for example, when the robot 100 determines, after 10 years, that the user state is the same as the user state at 10 years before, the robot 100 reads the history data 222 of 10 years before, and thus, can present, to the user 10, the state of the user 10 at 10 years before (for example, the expression, emotion, and the like of the user 10), and can further present any surrounding information such as data of a voice, an image, and a smell, and the like at the situation.

Furthermore, according to the robot 100, it is possible to cause the robot 100 to execute an appropriate action in response to the action of the user 10. In known technologies, an action of the user is classified to determine an action of the robot including an expression or an appearance of the robot. In contrast, the robot 100 decides the current emotion value of the user 10, and executes an action on the user 10 based on the past emotion value and the current emotion value. Therefore, for example, in a case where the user 10 who looked happy the day before is depressed the next day, the robot 100 can perform utterance "You looked happy yesterday. What's wrong with you today?". Furthermore, the robot 100 can also perform an utterance with a gesture. Furthermore, for example, in a case where the user 10 who was depressed the day before looks happy the next day, the robot 100 can perform utterance, "You were depressed yesterday, but you look happy today, don't you?". Furthermore, for example, in a case where the user 10 who looked happy yesterday looks happier the next day than the day before, the robot 100 can perform utterance such as "You look happier today than yesterday. Did something good happen to you more than yesterday?" Furthermore, when the user 10 has an emotion value of 0 or more and is continuously in a state where the fluctuation range of the emotion value is within a certain range, for example, the robot 100 can make an utterance such as "Recently, you are stably in good mood." to the user 10.

Furthermore, for example, in a case where the robot 100 asks the user 10 a question "Have you finished the homework you mentioned yesterday?" and an answer of "I have finished it" is obtained from the user 10, the robot 100 can make a positive utterance such as "Good for you!" and make a positive gesture such as applause or thumbs-up. Furthermore, for example, when the user 10 utters "The presentation we discussed the day before yesterday went well", the robot 100 can make a positive utterance such as "Good job!" and also make the above positive gesture. In this manner, by the action taken by the robot 100 based on the history of the state of the user 10, it is expected that the user 10 feels a sense of closeness to the robot 100.

### (Detection of event)

The event detection unit 290 will be described in detail. Here, the event detection unit 290 is provided in the robot 100 and causes the robot 100 to output information corresponding to the detected event.

As illustrated in FIG. 23, the event detection unit 290 includes a detection unit 2901, a collection unit 2902, and an output controller 2903. The event detection unit 290 also stores handling information 2911.

Each component of the event detection unit 290 is implemented by the CPU operating based on a program. For example, the functions of these components can be implemented as the operation of the CPU by basic software (OS) and a program operating on the OS. The handling information 2911 is implemented by a storage medium such as memory.

The detection unit 2901 detects occurrence of a predetermined event. The detection unit 2901 detects the user 10. The output controller 2903 controls the robot 100 including the text generation model to output, to the user 10, information corresponding to the event detected by the detection unit 2901.

The collection unit 2902 collects the history data 222 of the user 10 from the emotion database for each user 10. Based on the history data 222 of the user 10, the output controller 2903 controls the robot 100 to perform an action that promotes positive emotional experience for the user 10. In other words, the output controller 2903 uses the emotion database unique to each user 10 to control the robot 100 to perform an action that promotes positive emotional experience for the user 10.

In addition, the output controller 2903 controls the robot 100 to perform an action that promotes positive emotional experience including policies, services, and product recommendations for the user 10. The robot 100 controlled in this manner can minimize negative emotional experiences for the user 10 and, conversely, can promote positive emotional experiences (including policies, services and product recommendations) for the user 10. This makes it possible to increase the degree of happiness of not only the specific user 10 but also a wider society, eventually leading to an increase of the degree of happiness of the entire society. For example, in a case where the robot 100 recognizes that dissatisfaction is increasing in a certain area where the user 10 lives as a resident, some measure can be taken for residents of the area.

Note that an action of the user 10 is recognized by the robot 100, and the above-described history data 222 is updated based on the action of the user 10 recognized by the robot 100 and information related to the user 10, for example. In this case, for example, the robot 100 may update the history data 222 by associating the experience of the user 10 and the emotion of the user 10 sensed through the five senses with each other as the information related to the experience of the user 10. In addition, for example, the robot 100 may update the history data 222 by associating the experience of the user 10 and the emotion of the user sensed through the five senses with each other, as the information related to the experience of the user 10. In addition, the robot 100 may update the history data 222 based on, for example, attribute information of the user 10, including at least one of name, age, gender, interest, concern, hobby, tastes, lifestyle, personality, educational background, work history, place of residence, income, and family structure of the user 10.

FIG. 24 schematically illustrates an example of an operation flow performed by the event detection unit 290. In step S600, the event detection unit 290 determines whether occurrence of a predetermined event has been detected (step S600). In a case where the occurrence of the predetermined event has not been detected (step S600; No), the event detection unit 290 waits until the occurrence of a predetermined event is detected.

On the other hand, in a case where the occurrence of the predetermined event has been detected (step S600; Yes), the event detection unit 290 collects situation information indicating the situation of the user 10 (step S601). Subsequently, the event detection unit 290 controls the robot 100 provided with the text generation model to output an action corresponding to the situation information to the user 10 (step S602), and ends the processing.

### (Sixth embodiment)

FIG. 1 is a diagram schematically illustrating an example of a control system 1 according to the present embodiment. As illustrated in FIG. 1, the control system 1 includes a plurality of robots 100, a cooperative device 400, and a server 300. Each of the plurality of robots 100 is managed by a user.

In addition, the robot 100 may be configured to decide the action of the robot 100 corresponding to the emotion of the user 10 by joining a text generation model (also referred to as an Artificial Intelligence (AI) chat engine) with an emotion engine. Specifically, the robot 100 may be configured to recognize an action of the user 10, determine an emotion of the user 10 behind the action of the user, and decide an action of the robot 100 corresponding to the determined emotion.

The present disclosure will describe an example in which various actions are executed toward a user by cooperation between a terminal device (including Personal Computer (PC)) 400a, smartphone 400b, and tablet 400c) which is the cooperative device 400, and the robot 100.

Specifically, the robot 100 recognizes the user's action, decides its own action using the history data 222 updated based on the recognized action of the user and the information related to the user, and controls the control target based on the decided own action. Specifically, the robot 100 updates the stored history data 222 in a case where there is a change in at least one of the information related to the experience of the user or the attribute information of the user, as the information related to the user.

As described above, when a certain user has a new experience, the robot 100 updates the history data 222 of the user based on the experience. When the user attribute has a change, the robot 100 adapts the history data 222 of the user to the change.

Specifically, the robot 100 updates the history data 222 by associating the user's experience and the emotion of the user, sensed through the five senses, with each other as the information related to the user's experience. For example, in a case where the user has performed "cooking" which is a new experience for the user, the robot 100 updates the history data 222 by associating the user's experience and the emotion value of the user "delighted" indicating "(Cooking is) fun!", sensed through the five senses, with each other.

In addition, the robot 100 updates the history data 222 based on, for example, attribute information of the user, including at least one of name, age, gender, interest, concern, hobby, tastes, lifestyle, personality, educational background, work history, place of residence, income, and family structure of the user. For example, the robot 100 updates the history data 222 when there is a change in "hobby" as the attribute information of the user. As a specific example, in a case where "cooking" is added to the "hobby" of the user, the robot 100 updates the history data 222 so that "Fun! (meaning it is fun to cook as hobby!)" and the "emotion value of delighted" are associated with each other as described above.

In addition, having recognized the change in the information related to the user, the robot 100 performs an utterance of confirming the presence or absence of the change to the user. Specifically, when having recognized the action of the user cooking, the robot 100 confirms with the user whether the hobby has changed such as "Is cooking your hobby?". Subsequently, the robot 100 updates the history data 222 in the case of occurrence of at least one of confirmation of a change in the information related to the user or an utterance notifying that there has been a change in the information related to the user from the user to the robot. For example, when the user inputs information such as "hobby: cooking", the robot 100 can recognize the change in the user attribute information and update the history data 222. In addition, for example, when having been notified from the user that the user attribute information has changed by an utterance of "My hobby is cooking." or the like, the robot 100 can update the history data 222.

Furthermore, the robot 100 recognizes a change in the experience or emotion of the user through conversation with the user, and updates the history data 222 based on the change in the experience or emotion of the user. For example, in a case where the robot 100 asks the user "Is cooking your hobby?", and it is confirmed that the hobby has been changed to "cooking" by the user's answer such as "Yes, cooking is now my hobby.", the robot 100 can update the history data 222. In addition, the robot 100 asks the user "Is cooking fun?", and when the user's answer is "Yes, cooking is fun." or "Recently, I have been into cooking.", the robot 100 can update the history data 222 based on the user's answer.

In addition, the robot 100 recognizes a change in information related to the user based on the state and action of the user, and updates the history data 222. For example, when the user is cooking, the robot 100 can recognize the state of the user, for example, "The user is cooking with fun.", update the attribute information of the user such as "hobby: cooking", and update the information related to the experience of the user such as "increase in emotion value of cooking: delight".

In this manner, in the present disclosure, the robot 100 performs an action in cooperation with a terminal device (PC, Smartphone, tablet, etc.), and when a certain user has new experience, the robot 100 updates the history data 222 of the user based on the experience. In addition, when there is a change in the user attribute, the robot 100 can adapt the history data 222 of the user to the change. That is, the robot 100 according to the present disclosure can execute an appropriate action for the user.

FIG. 25 is a diagram schematically illustrating a functional configuration of the robot 100. The robot 100 includes a control unit including a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, and a communication processing unit 280.

Among the components of the robot 100 illustrated in FIG. 25, the components other than the control target 252 and the sensor unit 200 are examples of components included in the action control system in the robot 100. The action control system of the robot 100 controls the control target 252 as a target.

The storing unit 220 includes a reaction rule 221 and history data 222. The history data 222 includes history of past emotion values of the user and history of actions of the user. The history of emotion values and actions is recorded for each user, for example, by being associated with identification information of the user. At least a part of the storing unit 220 is implemented by a storage medium such as memory. A person DB that stores a face image of the user, attribute information of the user, and the like may be included. The attribute information of the user here may include name, age, gender, interest, concern, hobby, tastes, lifestyle, personality, educational background, work history, place of residence, income, and family structure of the user. Among the components of the robot 100 illustrated in FIG. 25, the functions of the components other than the control target 252, the sensor unit 200, and the storing unit 220 can be implemented by the CPU operating based on a program.

The voice emotion recognition unit 211 of the sensor module unit 210 analyzes the voice of the user detected by the microphone 201 to recognize the emotion of the user. For example, the voice emotion recognition unit 211 extracts a feature such as a frequency component of voice and recognizes an emotion of the user based on the extracted feature. The utterance comprehension unit 212 analyzes the voice of the user detected by the microphone 201 and outputs textual information indicating utterance content of the user. For example, the utterance comprehension unit 212 can analyze the content of a user's speech to the robot 100 such as "Yes, cooking is fun." or "Recently, I have been into cooking.", and output textual information indicating the utterance content of the user.

The expression recognition unit 213 recognizes the expression of the user and the emotion of the user from the image of the user captured by the 2D camera 203. For example, the expression recognition unit 213 recognizes the expression and emotion of the user based on the shapes, positional relationships, and the like of the eyes and the mouth. For example, the expression recognition unit 213 can recognize the expression and the emotion when the user is performing a predetermined action or making a speech to the robot 100. Note that the above-described "predetermined action" is, for example, an action in which the user engages in hobby, and the type and content of the action are not particularly limited.

The user state recognition unit 230 recognizes the state of the user based on the information analyzed by the sensor module unit 210. For example, processing mainly related to perception is performed using the analysis result of the sensor module unit 210. For example, the user state recognition unit 230 generates perception information such as "The user is cooking.", and "The user has a joyful expression.", and performs processing of understanding the meaning of the generated perception information. For example, the user state recognition unit 230 generates semantic information such as "The user is cooking with fun.".

The action recognition unit 234 recognizes an action of the user based on the information analyzed by the sensor module unit 210 and the state of the user recognized by the user state recognition unit 230. For example, the information analyzed by the sensor module unit 210 and the recognized state of the user are input to a neural network trained in advance to acquire the probability of each of a plurality of predetermined action classifications (for example, "smile", "get angry", "ask a question", and "expressing sorrow"), and the action classification having the highest probability is to be recognized as the action of the user. For example, the action recognition unit 234 recognizes the action of the user, such as "holding a terminal device", "operating a terminal device", or "performing a predetermined action".

As described above, in the present embodiment, the robot 100 acquires the utterance content of the user after specifying the user. In the acquisition and use of the utterance content, the action control system of the robot 100 according to the present embodiment considers protection of personal information and privacy of the user in addition to acquisition of necessary consent according to laws and regulations from the user.

The action decision unit 236 may decide an action corresponding to the action of the user based on the emotion of the robot 100. For example, when the emotion value of "angry" or "sad" of the robot 100 has increased in a case where the robot is abused by the user, in a case where the user takes an arrogant attitude (that is, in a case where the user's reaction is unfavorable), in a case where the voice of the user cannot be detected due to surrounding noise, in a case where the remaining battery level of the robot 100 is low, or the like, the action decision unit 236 may decide an action corresponding to the increase in the emotion value of "angry" or "sad" as the action corresponding to the action of the user. In addition, in a case where the emotion value of "delighted" or "joyful" of the robot 100 has increased in a case where the user's reaction is favorable, a case where the remaining battery level of the robot 100 is high, or the like, the action decision unit 236 may decide an action corresponding to the increase in the emotion value of "delighted" or "joyful" as an action corresponding to the action of the user. The action decision unit 236 may decide an action different from the action for the user that has increased the emotion values of "angry" and "sad" of the robot 100, as an action for the user that has increased the emotion values of "delighted" and "joyful" of the robot 100. In this manner, the action decision unit 236 may decide various actions depending on the emotion itself of the robot or how the user has changed the emotion of the robot 100 by the action of the user.

The action decision unit 236 according to the present embodiment decides the action of the robot 100 as the action corresponding to the action of the user based on a combination of the past emotion value and the current emotion value of the user, the emotion value of the robot 100, the action of the user, and the reaction rule 221. For example, in a case where the past emotion value of the user is a positive value and the current emotion value is a negative value, the action decision unit 236 decides an action for changing the emotion value of the user to a positive value as the action corresponding to the action of the user.

For example, the reaction rule 221 prescribes an action of the robot 100 corresponding to an action pattern such as holding the terminal device in hand, operating the terminal device, performing a predetermined action, and performing an utterance related to desire of the user. An example of the utterance related to the desire of the user may be a speech to the robot 100 such as "My hobby is cooking".

Having decided to store the data including the action of the user in the history data 222, the storage control unit 238 stores the action decided by the action decision unit 236, the information (for example, any surrounding information including data such as a sound, an image, and a smell of the place) analyzed by the sensor module unit 210 from the current time point to a certain period before, and the state of the user (for example, the expression and emotion of the user) recognized by the user state recognition unit 230 in the history data 222.

The storage control unit 238 updates the stored history data 222 in a case where there is a change in at least one of the information related to the experience of the user or the attribute information of the user, as the information related to the user.

As described above, when a certain user has a new experience, the storage control unit 238 updates the history data 222 of the user based on the experience. Specifically, the storage control unit 238 updates the history data 222 by associating the user's experience and the emotion of the user, sensed through the five senses, with each other, as the information related to the user's experience. For example, in a case where the user has performed "cooking" which is a new experience for the user, the storage control unit 238 updates the history data 222 by associating the user's experience and the emotion value of the user "delighted" indicating "(Cooking is) fun!", sensed through the five senses.

In addition, as described above, when there is a change in the user attribute, the storage control unit 238 adapts the history data 222 of the user to the change. Specifically, the storage control unit 238 updates the history data 222 based on, for example, attribute information of the user, including at least one of name, age, gender, interest, concern, hobby, tastes, lifestyle, personality, educational background, work history, place of residence, income, and family structure of the user. For example, when there is a change in "hobby" as the attribute information of the user, the storage control unit 238 updates the history data 222 based on the updated attribute information of the user. As a specific example, in a case where "cooking" is added to the "hobby" of the user, the storage control unit 238 updates the history data 222 so that "Fun! (meaning it is fun to cook as hobby!)" and the "emotion value of delighted" are associated with each other as described above.

In addition, when a change in the information related to the user is recognized by the action control unit 250 to be described below, the storage control unit 238 updates the history data 222 based on the changed information related to the user. For example, when the user inputs information such as "hobby: cooking", the storage control unit 238 can recognize the change in the information related to the user including the user attribute information and update the history data 222. In addition, for example, when having been notified from the user that the information related to the user including the user attribute information has changed by an utterance of "My hobby is cooking." or the like, the storage control unit 238 can update the history data 222.

In addition, the storage control unit 238 recognizes a change in the experience or emotion of the user through conversation with the user, and updates the history data 222 based on the change in the experience or emotion of the user. For example, in a case where the storage control unit 238 asks the user "Is cooking your hobby?", and it is confirmed that the hobby has been changed to "cooking" by the user's answer by utterance, such as "Yes, cooking is now my hobby.", the storage control unit 238 can update the history data 222. In addition, the storage control unit 238 asks the user "Is cooking fun?", and when the user's answer is "Yes, cooking is fun." or "Recently, I have been into cooking.", the storage control unit 328 can update the history data 222 based on the user's answer.

In addition, the storage control unit 238 recognizes a change in information related to the user based on the state and action of the user, and updates the history data 222. For example, when the user is cooking, the storage control unit 238 can recognize the state of the user, for example, "The user is cooking with fun.", update the attribute information of the user such as "hobby: cooking", and update the information related to the experience of the user such as "increase in emotion value of cooking: delight".

The action control unit 250 controls the control target 252 based on the action decided by the action decision unit 236. For example, when the action decision unit 236 has determined an action including utterance, the action control unit 250 controls to output a voice from a speaker included in the control target 252. At this time, the action control unit 250 may decide the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion decision unit 232.

For example, having recognized the change in the information related to the user, the action control unit 250 performs an utterance of confirming the presence or absence of the change to the user. Specifically, when having recognized the action of the user cooking, the action control unit 250 confirms with the user whether the hobby has changed such as "Is cooking your hobby?". Subsequently, the storage control unit 238 updates the history data 222 in the case of occurrence of at least one of confirmation of a change in the information related to the user or an utterance notifying that there has been a change in the information related to the user from the user to the robot 100.

FIG. 26 is a diagram schematically illustrating an example of an operation flow related to an operation of deciding an action of the robot 100. The operation flow illustrated in FIG. 26 is repeatedly executed. At this time, it is assumed that information analyzed by the sensor module unit 210 is input. Note that "S" in the operation flow represents a step to be executed.

First, in step S701, the user state recognition unit 230 recognizes the state of the user based on the information analyzed by the sensor module unit 210. For example, the user state recognition unit 230 generates perception information such as "The user is cooking.", and "The user has a joyful expression.", and performs processing of understanding the meaning of the generated perception information. For example, the user state recognition unit 230 generates semantic information such as "The user is cooking with fun.".

In step S702, the emotion decision unit 232 decides an emotion value indicating the emotion of the user based on the information analyzed by the sensor module unit 210 and the state of the user recognized by the user state recognition unit 230.

In step S703, the emotion decision unit 232 decides an emotion value indicating the emotion of the robot 100 based on the information analyzed by the sensor module unit 210 and the state of the user recognized by the user state recognition unit 230. The emotion decision unit 232 adds the decided emotion value of the user to the history data 222.

In step S704, the action recognition unit 234 recognizes the action classification of the user based on the information analyzed by the sensor module unit 210 and the state of the user recognized by the user state recognition unit 230. For example, the action recognition unit 234 recognizes the action of the user, such as "holding a terminal device", "operating a terminal device", or "performing a predetermined action".

In step S705, the action decision unit 236 decides the action of the robot 100 based on the combination of the current emotion value of the user decided in step S102 and the past emotion value included in the history data 222, the emotion value of the robot 100, the action of the user recognized by the action recognition unit 234, and the reaction rule 221.

In step S706, the action control unit 250 controls the control target 252 based on the action decided by the action decision unit 236. For example, when having recognized the action of the user cooking, the action control unit 250 confirms with the user whether the hobby has changed such as "Is cooking your hobby?".

In step S707, the storage control unit 238 calculates a total value of the strength based on the strength of the action predetermined for the action decided by the action decision unit 236 and the emotion value of the robot 100 decided by the emotion decision unit 232. On the other hand, the storage control unit 238 updates the stored history data 222 in a case where there is a change in at least one of the information related to the experience of the user or the attribute information of the user, as the information related to the user. For example, in a case where the user has performed "cooking" which is a new experience for the user, the storage control unit 238 updates the history data 222 by associating the user's experience and the user's emotion value of "delighted" indicating "(Cooking is) fun!", sensed through the five senses. For example, in a case where "cooking" is added to the "hobby" of the user, the storage control unit 238 updates the history data 222 so that "Fun! (meaning it is fun to cook as hobby!)" and the "emotion value of delighted" are associated with each other as described above.

In step S708, the storage control unit 238 determines whether the total value of the strength is a threshold or more. In a case where the total value of the strength is less than the threshold, the data including the action of the user is not stored in the history data 222, and the processing ends. In contrast, when the total value of the strength is the threshold or more, the processing proceeds to step S709.

In step S709, the action decided by the action decision unit 236, the information analyzed by the sensor module unit 210 from the current time point to a certain period before, and the state of the user recognized by the user state recognition unit 230 are to be stored in the history data 222.

As described above, the robot 100 includes the control unit that recognizes the action of the user, decides its own action using the history data updated based on the recognized action of the user and the information related to the user, and controls the control target based on the decided own action. Specifically, the robot 100 updates the stored history data in a case where there is a change in at least one of the information related to the experience of the user or the attribute information of the user, as the information related to the user. This makes it possible for the robot 100 to maintain the history data (emotion database) in the latest state, enabling emotion prediction with higher accuracy.

Specifically, the control unit of the robot 100 updates the history data by associating the user's experience and the emotion of the user, sensed through the five senses, as the information related to the user's experience. In this manner, when a certain user has new experience, the control unit of the robot 100 updates the history data of the user based on the experience, making it possible to maintain the history data (emotion database) in the latest state, enabling emotion prediction with higher accuracy.

In addition, the control unit of the robot 100 updates the history data based on, for example, attribute information of the user, including at least one of name, age, gender, interest, concern, hobby, tastes, lifestyle, personality, educational background, work history, place of residence, income, and family structure of the user. In this manner, when there is a change in the attribute information of a user, the control unit of the robot 100 updates the history data of the user based on the attribute information of the user, making it possible to maintain the history data (emotion database) in the latest state, enabling emotion prediction with higher accuracy.

Furthermore, having recognized the change in the information related to the user, the control unit of the robot 100 performs an utterance of confirming the presence or absence of the change to the user. Subsequently, the control unit of the robot 100 updates the history data in the case of occurrence of at least one of confirmation of a change in the information related to the user or an utterance notifying that there has been a change in the information related to the user from the user to the robot. In this manner, the control unit of the robot 100 can recognize a change in the information related to the user including the information related to the experience of the user and the attribute information of the user through the conversation with the user, and can update the history data (emotion database). This makes it possible for the robot 100 to maintain the history data (emotion database) in the latest state through conversation and dialogue with the user without acquiring the latest data each time, enabling emotion prediction with higher accuracy.

In addition, the control unit of the robot 100 recognizes a change in the experience or emotion of the user through conversation with the user, and updates the history data based on the change in the experience or emotion of the user. In this manner, the control unit of the robot 100 can recognize a change in the information related to the user including the information related to the experience of the user and the attribute information of the user through the conversation with the user, and can update the history data (emotion database). This makes it possible for the robot 100 to maintain the history data (emotion database) in the latest state through daily conversation and dialogue with the user, enabling emotion prediction with higher accuracy.

While the above embodiment is a case where the robot 100 recognizes the user using the face image of the user, the disclosed technology is not limited to this aspect. For example, the robot 100 may recognize the user using a voice uttered by the user, a mail address of the user, an ID of an SNS of the user, an ID card incorporating a wireless IC tag possessed by the user, or the like.

### (Seventh embodiment)

FIG. 27 is a diagram schematically illustrating an example of the control system 1 according to the present embodiment. As illustrated in FIG. 27, the control system 1 includes a plurality of robots 100, a cooperative device 400, and a server 300. Each of the plurality of robots 100 is managed by a user.

In addition, the robot 100 may be configured to decide the action of the robot 100 corresponding to the emotion of the user 10 by joining a text generation model (also referred to as an Artificial Intelligence (AI) chat engine) with an emotion engine. Specifically, the robot 100 may be configured to recognize an action of the user 10, determine an emotion of the user 10 behind the action of the user, and decide an action of the robot 100 corresponding to the determined emotion.

The present disclosure will describe an example in which various actions are executed toward a user by cooperation between a terminal device (including Personal Computer (PC)) 400a, smartphone 400b, and tablet 400c) which is the cooperative device 400, and the robot 100.

Specifically, the robot 100 recognizes the action of the user, decides its own action based on the recognized user's action and information related to the user, stored in the storing unit 220 and that has undergone predetermined privacy protection measures and security measures, and controls the control target based on the decided own action. Specifically, the robot 100 applies predetermined privacy protection measures and security measures on data related to the emotion of the user information and related to the user's personal information as the information related to the user, before storing the information.

As described above, the robot 100 recognizes the action of the user, and uses the action of the user and the information related to the user to select and decide the action by the robot 100 itself. The robot 100 in the present disclosure applies predetermined privacy protection measures and security measures on the above-described information related to the user before storing the information.

Specifically, the robot 100 applies predetermined privacy protection measures and predetermined security measures on the emotion of the user information, that is, information in which the user's experience and the emotion of the user sensed through five senses are associated with each other, and then stores the information. For example, the robot 100 applies predetermined privacy protection measures and security measures on information in which content such as "cooking" experienced by the user is associated with an emotion value of "delighted" of the user, such as "(Cooking is) fun!" of the user, and then stores the information. In the present disclosure, the predetermined privacy protection measures and security measures include enhancement of technical security from both sides of hardware and software in order to prevent leakage, unauthorized access, and unauthorized use of personal information. Specific examples of the measures include a combination of a plurality of measures such as security management of personal information, introduction and update of software for measures against unauthorized access, security measures by hardware such as Trusted Execution Environment (TEE), education for reduction of human errors, vulnerability investigation and measures, and information security threat monitoring. The privacy protection measures and the security measures described above are merely examples, and are not limited thereto, and may be replaced with a stronger, more robust and advanced measures. The similar applies hereinafter.

In addition, the robot 100 applies predetermined privacy protection measures and security measures on attribute information of the user, including at least one of name, age, gender, interest, concern, hobby, tastes, lifestyle, personality, educational background, work history, place of residence, income, and family structure of the user, as data related to user's personal information, and stores the information. For example, in a case where the user sets name, age, gender, interest, concern, hobby, tastes, lifestyle, personality, educational background, work history, place of residence, income, and family structure of the user, as information desired to be not disclosed to other people, the robot 100 applies predetermined privacy protection measures and security measures on the information so as not to allow leakage of the information to a third party and stores the information. The robot 100 may set predetermined degrees (strengths) of privacy protection measures and security measures for each item of data related to the personal information of the user and may store the data. For example, the robot 100 may set the strength of the privacy protection measures and the security measures to be low and store the "hobby, tastes, and lifestyle" as a setting that can be disclosed to a third party.

In addition, when a predetermined condition is satisfied for predetermined privacy protection measures and predetermined security measures in relation to the information related to the user stored by the storing unit 220, the robot 100 performs utterance to the user that the measures have been taken. For example, in a case where the information related to the user is stored in a state where all the above-described privacy protection measures and security measures have been set, the robot 100 performs utterance "Your information is securely managed!" to the user. In contrast, in a case where the information related to the user is stored in a state where the privacy protection measures and the security measures described above have not been set, the robot 100 can perform utterance, for example, "The measures are insufficient, so please review the settings!" to the user. In addition, when there is a question such as "Please check whether there is any problem with the current security measures." from the user, the robot 100 can perform utterance, for example, "It is in the latest state, so, there is no problem with measures!" in response to the question.

In addition, in a case where a predetermined risk in terms of security measures or privacy protection measures occurs with respect to the information related to the user stored by the storing unit 220, the robot 100 performs utterance to the user that the risk has occurred. For example, in a case where the information related to the user has suffered a security attack from the outside even with application of the above-described privacy protection measures and security measures, the robot 100 performs utterance to the user, "Your information is going to be stolen, so check it immediately!" or the like. In addition, even in a case where information of the user leaks due to the security attack as described above, the robot 100 can immediately perform utterance, for example, "Since there is a possibility that your information has been stolen, take measures immediately!" to the user.

Furthermore, in a case where predetermined privacy protection measures and security measures for the information related to the user stored by the storing unit 220 are to be updated, the robot 100 performs utterance to prompt the user to update the measures. Specifically, when major/minor version upgrade, release or launch of a new technology, release of information of a new security threat, or the like is conducted regarding the privacy protection measures and the security measures described above, the robot 100 prompts the user to update the measures. When there is a major update to the software for privacy protection measures and security measures, the robot 100 performs utterance, for example, "Update your security measures software!" to the user.

In addition, based on the state and action of the user, the robot 100 recognizes a change in information related to the user and performs an utterance. For example, when having recognized the state of the user as "The user is anxious about security measures.", the robot 100 can confirm the current security measures or the like and perform utterance "Your information is securely managed!" or the like.

In this manner, the robot 100 in the present disclosure performs an action in cooperation with the terminal device (PC, smartphone, tablet, etc.), so that the information related to the user can be stored and appropriately managed with application of predetermined privacy protection measures and security measures. That is, the robot 100 according to the present disclosure can execute an appropriate action for the user.

FIG. 28 is a diagram schematically illustrating a functional configuration of the robot 100. The robot 100 includes a control unit including a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, and a communication processing unit 280.

Among the components of the robot 100 illustrated in FIG. 28, the components other than the control target 252 and the sensor unit 200 are examples of components included in the action control system in the robot 100. The action control system of the robot 100 controls the control target 252 as a target.

The storing unit 220 includes a reaction rule 221 and history data 222. The history data 222 includes history of past emotion values of the user and history of actions of the user. The history of emotion values and actions is recorded for each user, for example, by being associated with identification information of the user. At least a part of the storing unit 220 is implemented by a storage medium such as memory. A person DB that stores a face image of the user, attribute information of the user, and the like may be included. The attribute information of the user here may include name, age, gender, interest, concern, hobby, tastes, lifestyle, personality, educational background, work history, place of residence, income, and family structure of the user. Among the components of the robot 100 illustrated in FIG. 2, the functions of the components other than the control target 252, the sensor unit 200, and the storing unit 220 can be implemented by the CPU operating based on a program. For example, the functions of these components can be implemented as the operation of the CPU by basic software (OS) and a program operating on the OS.

The voice emotion recognition unit 211 of the sensor module unit 210 analyzes the voice of the user detected by the microphone 201 to recognize the emotion of the user. For example, the voice emotion recognition unit 211 extracts a feature such as a frequency component of voice and recognizes an emotion of the user based on the extracted feature. The utterance comprehension unit 212 analyzes the voice of the user detected by the microphone 201 and outputs textual information indicating utterance content of the user. For example, the utterance comprehension unit 212 can analyze content of the speech to the robot 100 such as "Please check whether there is any problem with the current security measures." by the user, and can output textual information indicating the utterance content of the user.

The expression recognition unit 213 recognizes the expression of the user and the emotion of the user from the image of the user captured by the 2D camera 203. For example, the expression recognition unit 213 recognizes the expression and emotion of the user based on the shapes, positional relationships, and the like of the eyes and the mouth. For example, the expression recognition unit 213 can recognize the expression and the emotion when the user is performing a predetermined action or making a speech to the robot 100. Note that the above-described "predetermined action" is an action performed by the user, such as utterance, movement, and body motion, and the type and content of the action are not particularly limited.

The user state recognition unit 230 recognizes the state of the user based on the information analyzed by the sensor module unit 210. For example, processing mainly related to perception is performed using the analysis result of the sensor module unit 210. For example, the user state recognition unit 230 generates perception information such as "The user has an anxious expression.", and "The user is asking about whether there is a problem with security measures.", and performs processing of understanding the meaning of the generated perception information. For example, the user state recognition unit 230 generates semantic information such as "The user is anxious about security measures.".

The action recognition unit 234 recognizes an action of the user based on the information analyzed by the sensor module unit 210 and the state of the user recognized by the user state recognition unit 230. For example, the information analyzed by the sensor module unit 210 and the recognized state of the user are input to a neural network trained in advance to acquire the probability of each of a plurality of predetermined action classifications (for example, "smile", "get angry", "ask a question", and "expressing sorrow"), and the action classification having the highest probability is to be recognized as the action of the user. For example, the action recognition unit 234 recognizes the action of the user, such as "holding a terminal device", "operating a terminal device", or "performing a predetermined action".

As described above, in the present embodiment, the robot 100 acquires the utterance content of the user after specifying the user. In the acquisition and use of the utterance content, the action control system of the robot 100 according to the present embodiment considers protection of personal information and privacy of the user in addition to acquisition of necessary consent according to laws and regulations from the user.

The action decision unit 236 may decide an action corresponding to the action of the user based on the emotion of the robot 100. For example, when the emotion value of "angry" or "sad" of the robot 100 has increased in a case where the robot is abused by the user, in a case where the user takes an arrogant attitude (that is, in a case where the user's reaction is unfavorable), in a case where the voice of the user cannot be detected due to surrounding noise, in a case where the remaining battery level of the robot 100 is low, or the like, the action decision unit 236 may decide an action corresponding to the increase in the emotion value of "angry" or "sad" as the action corresponding to the action of the user. In addition, in a case where the emotion value of "delighted" or "joyful" of the robot 100 has increased in a case where the user's reaction is favorable, a case where the remaining battery level of the robot 100 is high, or the like, the action decision unit 236 may decide an action corresponding to the increase in the emotion value of "delighted" or "joyful" as an action corresponding to the action of the user. The action decision unit 236 may decide an action different from the action for the user that has increased the emotion values of "angry" and "sad" of the robot 100, as an action for the user that has increased the emotion values of "delighted" and "joyful" of the robot 100. In this manner, the action decision unit 236 may decide various actions depending on the emotion itself of the robot or how the user has changed the emotion of the robot 100 by the action of the user.

The action decision unit 236 according to the present embodiment decides the action of the robot 100 as the action corresponding to the action of the user based on a combination of the past emotion value and the current emotion value of the user, the emotion value of the robot 100, the action of the user, and the reaction rule 221. For example, in a case where the past emotion value of the user is a positive value and the current emotion value is a negative value, the action decision unit 236 decides an action for changing the emotion value of the user to a positive value as the action corresponding to the action of the user.

For example, the reaction rule 221 prescribes an action of the robot 100 corresponding to an action pattern such as holding the terminal device in hand, operating the terminal device, performing a predetermined action, and performing an utterance related to desire of the user. An example of the utterance related to the request of the user may be an inquiry to the robot 100 such as "Please check whether there is any problem with the current security measures".

Having decided to store the data including the action of the user in the history data 222, the storage control unit 238 stores the action decided by the action decision unit 236, the information (for example, any surrounding information including data such as a sound, an image, and a smell of the place) analyzed by the sensor module unit 210 from the current time point to a certain period before, and the state of the user (for example, the expression and emotion of the user) recognized by the user state recognition unit 230 in the history data 222.

The storage control unit 238 applies predetermined privacy protection measures and security measures on data related to the user's emotion information and related to the user's personal information as the information related to the user, before storing the information.

As described above, the storage control unit 238 applies predetermined privacy protection measures and predetermined security measures on the user's emotion information, that is, information in which the user's experience and the emotion of the user sensed through five senses are associated with each other, and then stores the information. For example, the storage control unit 238 applies predetermined privacy protection measures and security measures on information in which content such as "cooking" experienced by the user is associated with an emotion value of "delighted" of the user, such as "(Cooking is) fun!" of the user, and then stores the information.

In addition, as described above, the storage control unit 238 stores the attribute information of the user including at least one of the user's name, age, gender, interest, concern, hobby, tastes, lifestyle, personality, educational background, work history, place of residence, income, and family structure as data related to personal information of the user with predetermined privacy protection measures and security measures. For example, in a case where the user sets name, age, gender, interest, concern, hobby, tastes, lifestyle, personality, educational background, work history, place of residence, income, and family structure of the user, as information desired to be not disclosed to other people, the storage control unit 238 applies predetermined privacy protection measures and security measures on the information so as not to allow leakage of the information to a third party and stores the information. The storage control unit 238 may also set predetermined degrees (strengths) of privacy protection measures and security measures for each item of data related to the personal information of the user and may store the data. For example, the storage control unit 238 may set the strength of the privacy protection measures and the security measures to be low and store the "hobby, tastes, and lifestyle" as a setting that can be disclosed to a third party.

The action control unit 250 controls the control target 252 based on the action decided by the action decision unit 236. For example, when the action decision unit 236 has determined an action including utterance, the action control unit 250 controls to output a voice from a speaker included in the control target 252. At this time, the action control unit 250 may decide the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion decision unit 232.

Furthermore, when a predetermined condition is satisfied for predetermined privacy protection measures and predetermined security measures in relation to the information related to the user stored by the storing unit 220, the action control unit 250 performs utterance to the user that the measures have been taken. For example, in a case where the information related to the user is stored in a state where all the above-described privacy protection measures and security measures have been set, the action control unit 250 performs utterance "Your information is securely managed!" to the user. In contrast, in a case where the information related to the user is stored in a state where the privacy protection measures and the security measures described above are not set, the action control unit 250 can perform utterance, for example, "The measures are insufficient, so please review the settings!" to the user. In addition, when there is a question such as "Please check whether there is any problem with the current security measures." from the user, the action control unit 250 can perform utterance, for example, "It is in the latest state, so, there is no problem with measures!" in response to the question.

In addition, in a case where a predetermined risk in terms of security measures or privacy protection measures occurs with respect to the information related to the user stored by the storing unit 220, the action control unit 250 performs utterance to the user that the risk has occurred. For example, in a case where the information related to the user has suffered a security attack from the outside even with application of the above-described privacy protection measures and security measures, the action control unit 250 performs utterance to the user, "Your information is going to be stolen, so check it immediately!" or the like. In addition, even in a case where information of the user leaks due to the security attack as described above, the action control unit 250 can immediately perform utterance, for example, "Since there is a possibility that your information has been stolen, take measures immediately!" to the user.

Furthermore, in a case where predetermined privacy protection measures and security measures for the information related to the user stored by the storing unit 220 are to be updated, the action control unit 250 performs utterance to prompt the user to update the measures. Specifically, when major/minor version upgrade, release or launch of a new technology, release of information of a new security threat, or the like is conducted regarding the privacy protection measures and the security measures described above, the action control unit 250 prompts the user to update the measures. When there is a major update to the software for privacy protection measures and security measures, the action control unit 250 performs utterance, for example, "Update your security measures software!" to the user.

In addition, based on the state and action of the user, the action control unit 250 recognizes a change in information related to the user and performs an utterance. For example, when having recognized the state of the user as "The user is anxious about security measures.", the action control unit 250 can confirm the current security measures or the like and perform utterance "Your information is securely managed!" or the like.

FIG. 29 is a diagram schematically illustrating an example of an operation flow related to an operation of deciding an action of the robot 100. The operation flow illustrated in FIG. 29 is repeatedly executed. At this time, it is assumed that information analyzed by the sensor module unit 210 is input. Note that "S" in the operation flow represents a step to be executed.

First, in step S801, the user state recognition unit 230 recognizes the state of the user based on the information analyzed by the sensor module unit 210. For example, the user state recognition unit 230 generates perception information such as "The user has an anxious expression.", and "The user is asking about whether there is a problem with security measures.", and performs processing of understanding the meaning of the generated perception information. For example, the user state recognition unit 230 generates semantic information such as "The user is anxious about security measures.".

In step S802, the emotion decision unit 232 decides an emotion value indicating the emotion of the user based on the information analyzed by the sensor module unit 210 and the state of the user recognized by the user state recognition unit 230.

In step S803, the emotion decision unit 232 decides an emotion value indicating the emotion of the robot 100 based on the information analyzed by the sensor module unit 210 and the state of the user recognized by the user state recognition unit 230. The emotion decision unit 232 adds the decided emotion value of the user to the history data 222.

In step S804, the action recognition unit 234 recognizes the action classification of the user based on the information analyzed by the sensor module unit 210 and the state of the user recognized by the user state recognition unit 230. For example, the action recognition unit 234 recognizes the action of the user, such as "holding a terminal device", "operating a terminal device", or "performing a predetermined action".

In step S805, the action decision unit 236 decides the action of the robot 100 based on the combination of the current emotion value of the user decided in step S102 and the past emotion value included in the history data 222, the emotion value of the robot 100, the action of the user recognized by the action recognition unit 234, and the reaction rule 221.

In step S806, the action control unit 250 controls the control target 252 based on the action decided by the action decision unit 236. Furthermore, when a predetermined condition is satisfied for predetermined privacy protection measures and predetermined security measures in relation to the information related to the user stored by the storing unit 220, the action control unit 250 performs utterance to the user that the measures have been taken. In addition, in a case where a predetermined risk in terms of security measures or privacy protection measures occurs with respect to the information related to the user stored by the storing unit 220, the action control unit 250 performs utterance to the user that the risk has occurred. In addition, in a case where predetermined privacy protection measures and security measures for the information related to the user stored by the storing unit 220 are to be updated, the action control unit 250 performs utterance to prompt the user to update the measures. In addition, based on the state and action of the user, the action control unit 250 recognizes a change in information related to the user and performs an utterance.

In step S807, the storage control unit 238 calculates a total value of the strength based on the strength of the action predetermined for the action decided by the action decision unit 236 and the emotion value of the robot 100 decided by the emotion decision unit 232. On the other hand, the storage control unit 238 applies predetermined privacy protection measures and security measures on data related to the emotion of the user information and related to the user's personal information as the information related to the user, before storing the information. For example, the storage control unit 238 applies predetermined privacy protection measures and predetermined security measures on the emotion of the user information, that is, information in which the user's experience and the emotion of the user sensed through five senses are associated with each other, and then stores the information. For example, the storage control unit 238 applies predetermined privacy protection measures and security measures on attribute information of the user, including at least one of name, age, gender, interest, concern, hobby, tastes, lifestyle, personality, educational background, work history, place of residence, income, and family structure of the user, as data related to user's personal information, and stores the information.

In step S808, the storage control unit 238 determines whether the total value of the strength is a threshold or more. In a case where the total value of the strength is less than the threshold, the data including the action of the user is not stored in the history data 222, and the processing ends. In contrast, when the total value of the strength is the threshold or more, the processing proceeds to step S109.

In step S809, the action decided by the action decision unit 236, the information analyzed by the sensor module unit 210 from the current time point to a certain period before, and the state of the user recognized by the user state recognition unit 230 are to be stored in the history data 222.

As described above, the robot 100 includes the control unit that recognizes the action of the user, decides its own action based on the recognized user's action and information related to the user, stored in the storing unit and that has undergone predetermined privacy protection measures and security measures, and controls the control target based on the decided own action. Specifically, the robot 100 applies predetermined privacy protection measures and security measures on data related to the emotion of the user information and related to the user's personal information as the information related to the user, before storing the information. This makes it possible for the robot 100 to prevent leakage of personal information and emotion data of the user and protect privacy of the user.

Specifically, the control unit of the robot 100 applies predetermined privacy protection measures and predetermined security measures on the emotion of the user information, that is, information in which the user's experience and the emotion of the user sensed through five senses are associated with each other, and then stores the information. In this manner, the control unit of the robot 100 can prevent leakage of information that is not desired to be known to others, such as information related to the inner mind or real intention of the user, including the user's experience and emotion, and can protect the privacy of the user.

In addition, the control unit of the robot 100 applies predetermined privacy protection measures and security measures on attribute information of the user, including at least one of name, age, gender, interest, concern, hobby, tastes, lifestyle, personality, educational background, work history, place of residence, income, and family structure of the user, as data related to user's personal information, and stores the information. In this manner, the control unit of the robot 100 prevents leakage of personal information of the user and information that is not desired to be known to others, such as information related to the inner mind or real intention of the user. On the other hand, the robot 100 can also disclose the information set to be disclosed by the user by appropriately changing the strength of the security measures. Therefore, the robot 100 can not only protect the privacy of the user but appropriately manage the disclosure state.

Furthermore, when a predetermined condition is satisfied for predetermined privacy protection measures and predetermined security measures in relation to the information related to the user stored by the storing unit, the control unit of the robot 100 performs utterance to the user that the measures have been taken. This makes it possible for the robot 100 to transmit, through the conversation with the user, that the information related to the user is appropriately managed. Therefore, the robot 100 provides an effect of reducing the anxiety of the user, together with protecting the privacy of the user.

Furthermore, in a case where a predetermined risk in terms of security measures or privacy protection measures occurs with respect to the information related to the user stored by the storing unit, the control unit of the robot 100 performs utterance to the user that the risk has occurred. This makes it possible for the robot 100 to promptly notify the user, through the conversation with the user, that the information related to the user is exposed to danger. Therefore, the robot 100 protects the privacy of the user and prompts the user to take an action to enhance the security measures, thereby providing an effect of minimizing the damage.

In addition, in a case where predetermined privacy protection measures and security measures for the information related to the user stored by the storing unit are to be updated, the control unit of the robot 100 performs utterance to prompt the user to update the measures. This makes it possible for the robot 100 to notify the user that the security measures are not perfect through conversation with the user, and urge the user to reinforce the security measures. Accordingly, the robot 100 prompts the user to enhance protection of privacy of the user, thereby providing an effect of minimizing possible damage.

While the above embodiment is a case where the robot 100 recognizes the user using the face image of the user, the disclosed technology is not limited to this aspect. For example, the robot 100 may recognize the user using a voice uttered by the user, a mail address of the user, an ID of an SNS of the user, an ID card incorporating a wireless IC tag possessed by the user, or the like.

### (Eighth embodiment)

FIG. 13 schematically illustrates an example of a system 5 according to the present embodiment. The system 5 includes a robot 100, a robot 101, a robot 102, and a server 300.

Furthermore, the robot 100 has a function of recognizing an action of the user 10. The robot 100 recognizes the action of the user 10 by analyzing a face image of the user 10 acquired by a camera function and the voice of the user 10 acquired by a microphone function. The robot 100 decides an action to be executed by the robot 100 based on the recognized action of the user 10 or the like.

FIG. 30 schematically illustrates a functional configuration of the robot 100. The robot 100 includes a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, a power control unit 260, and a communication processing unit 280.

Among the components of the robot 100 illustrated in FIG. 30, the components other than the control target 252 and the sensor unit 200 are examples of components included in the action control system in the robot 100. The action control system of the robot 100 controls the control target 252 as a target.

The storing unit 220 includes a reaction rule 221 and history data 222. The history data 222 includes a history of past emotional states and actions of the user 10. For example, the history data 222 stores data of history of past emotion values and history of actions of the user 10. The emotion value and the action history are recorded for each user 10 by being associated with identification information of the user 10, for example. At least a part of the storing unit 220 is implemented by a storage medium such as memory. The storing unit 220 may include a person DB that stores a face image of the user 10, attribute information of the user 10, and the like. Among the components of the robot 100 illustrated in FIG. 30, the functions of the components other than the control target 252, the sensor unit 200, and the storing unit 220 can be implemented by the CPU operating based on a program.

The action decision unit 236 according to the present embodiment decides the action of the robot 100 as the action corresponding to the action of the user 10 based on a combination of the past emotion value and the current emotion value of the user 10, the emotion value of the robot 100, the action of the user 10, and the reaction rule 221. For example, in a case where the past emotion value of the user 10 is a positive value and the current emotion value is a negative value, the action decision unit 236 decides an action for changing the emotion value of the user 10 to a positive value as the action corresponding to the action of the user 10.

The reaction rule 221 defines the action of the robot 100 corresponding to the combination of the past emotion value and the current emotion value of the user 10, the emotion value of the robot 100, and the action of the user 10. For example, in a case where the past emotion value of the user 10 is a positive value, the current emotion value is a negative value, and the action of the user 10 is expressing sorrow, a combination of a gesture and utterance content to be used at the time of offering words with gesture to encourage the user 10 is prescribed as the action of the robot 100.

For example, in the reaction rule 221, the action of the robot 100 is determined for all combinations of the pattern of the emotion value of the robot 100 (1296 patterns being the fourth power of six values, namely, values "0" to "5" of "delighted", "angry", "sad", and "joyful"), the pattern of the combination of the past emotion value and the current emotion value of the user 10, and the action pattern of the user 10. That is, for each pattern of the emotion value of the robot 100, the action of the robot 100 corresponding to the action pattern of the user 10 is determined for each of the plurality of combinations such as the case where the combination of the past emotion value and the current emotion value of the user 10 include combinations of a negative value and a negative value, a negative value and a positive value, a positive value and a negative value, a positive value and a positive value, a negative value and a neutral value, and a neutral value and a neutral value. In a case where the user 10 has made an utterance that intends to have a conversation continued from a past topic such as "I want to talk about the topic I discussed earlier", for example, the action decision unit 236 may transition to the operation mode of deciding the action of the robot 100 using the history data 222.

The power control unit 260 controls each unit of the robot 100 to control the power consumption of the robot 100. For example, based on the emotional state of the user 10, the power control unit 260 controls the power consumption of a sensing unit, being a unit that senses the emotional state of the user. For example, the robot 100 according to the embodiment senses the emotion of the user by processes in which the sensor module unit 210 detects the user 10 with a voice, an image, or the like by the sensor unit 200, the user state recognition unit 230 recognizes the state of the user 10 based on the information analyzed by the sensor module unit 210, and the emotion decision unit 232 decides the emotional state of the user from the state of the user 10. The power control unit 260 controls power consumption of the sensing unit, specifically, the sensor unit 200, the sensor module unit 210, the user state recognition unit 230, and the emotion decision unit 232. The power control unit 260 controls the sensor unit 200, the sensor module unit 210, the user state recognition unit 230, and the emotion decision unit 232 so as to reduce the power consumption during a period in which the emotion information is not important. A period in which no person is detected by the microphone 201 or the 2D camera 203 is a period in which the user 10 is not around and the emotion information of the user 10 cannot be recognized, and thus the emotion information is not important. The power control unit 260 controls the sensor unit 200, the sensor module unit 210, the user state recognition unit 230, and the emotion decision unit 232 so as to reduce the power consumption during a period in which no person is detected. For example, the power control unit 260 controls the power consumption by controlling the cycle of sensing the emotional state by the sensor unit 200, the sensor module unit 210, the user state recognition unit 230, and the emotion decision unit 232. For example, the power control unit 260 extends the sampling cycle of the microphone 201 or the image capturing cycle of the 2D camera 203 to lengthen the cycle of sensing the emotional state, thereby lowering the power consumption. In addition, the power control unit 260 controls power consumption by controlling any of the number of processors that execute processing of the user state recognition unit 230 and the emotion decision unit 232 or the operating frequency of the processor. For example, in a case where the robot 100 executes the processing of the user state recognition unit 230 and the emotion decision unit 232 by assigning the processing to one or more processors, the power control unit 260 performs control to reduce the number of processors to execute the processing of the user state recognition unit 230 and the emotion decision unit 232 and lower the operating frequency of the processor. With this configuration, the power control unit 260 can reduce the power consumption of the robot 100 during a period in which no person is detected.

In addition, the power control unit 260 performs control to reduce the power consumption during a period in which the necessity of mental health care of the user 10 is lower than during a period in which the necessity of mental health care is high. For example, when the emotion of the user 10 is in a positive state, the necessity of mental health care of the user 10 is low. In contrast, when the emotion of the user 10 is in a neutral state or a negative state, the necessity of mental health care of the user 10 is high. For example, the power control unit 260 determines the state as a positive state when emotion values are large in bright emotions such as "delighted", "joyful", "pleasant", "secure", "excited", "relieved", and "fulfilled", "delighted", "joyful", or "pleasant", and the emotion values are small in negative feelings such as "angry", "sad", "unpleasant", "anxious", "sorrowful", "worried", and "empty". In contrast, the power control unit 260 determines the state as a negative state when emotion values are small in bright emotions such as "delighted", "joyful", "pleasant", "secure", "excited", "relieved", and "fulfilled", "delighted", "joyful", or "pleasant", and the emotion values are large in negative feelings such as "angry", "sad", "unpleasant", "anxious", "sorrowful", "worried", and "empty". When the emotion of the user 10 is in a positive state even in a case where a person is detected, the power control unit 260 controls the sensor unit 200, the sensor module unit 210, the user state recognition unit 230, and the emotion decision unit 232 so that the power consumption decreases by defining the state as a period in which the necessity of mental health care is low.

FIG. 31 is a diagram schematically illustrating an example of an operation flow related to power control of the robot 100. The operation flow illustrated in FIG. 31 is repeatedly executed. At this time, it is assumed that information analyzed by the sensor module unit 210 is input. Note that "S" in the operation flow represents a step to be executed.

First, in step S900, the power control unit 260 determines whether it is a period in which the emotion information is not important. When no person is detected, the power control unit 260 determines that it is a period in which the emotion information is not important (step S900: Yes), and proceeds to step S902. In contrast, when a person is detected, the power control unit 260 determines that the emotion information is important in the period (step S900: No), and proceeds to step S901.

In step S901, the power control unit 260 determines whether it is a period in which the necessity of mental health care of the user 10 is low. When the emotion of the user 10 is in a positive state, the power control unit 260 determines that it is a period in which the necessity of mental health care of the user 10 is low (step S901: Yes), and proceeds to step S902. In contrast, when the emotion of the user 10 is a neutral state and a negative state, the power control unit 260 determines that it is a period in which the necessity of mental health care of the user 10 is high (step S901: No), and proceeds to step S103.

In step S902, the power control unit 260 performs control to reduce power consumption. For example, the power control unit 260 controls the sensor unit 200, the sensor module unit 210, the user state recognition unit 230, and the emotion decision unit 232 to reduce power consumption.

On the other hand, in step S903, the power control unit 260 performs normal control of power consumption. For example, the power control unit 260 controls the sensor unit 200, the sensor module unit 210, the user state recognition unit 230, and the emotion decision unit 232 so as to achieve normal power consumption.

As described above, the robot 100 includes the sensing unit (sensor unit 200, sensor module unit 210, user state recognition unit 230, and emotion decision unit 232) and the power control unit 260. The sensing unit senses the emotional state of the user 10. The power control unit 260 controls power consumption based on the sensed emotional state of the user 10. With this configuration, the power consumption of the robot 100 can be improved. For example, the power consumption of the robot 100 can be optimized in accordance with the emotional state of the user 10.

In addition, the power control unit 260 controls the sensing unit so as to reduce the power consumption during a period in which the emotion information is not important. With this configuration, the power consumption of the robot 100 can be improved during a period in which the emotion information is not important.

In addition, the power control unit 260 controls power consumption by controlling any of a cycle in which an emotional state is sensed by the sensing unit, the number of processors that execute processing of sensing the emotional state, and an operating frequency of the processor. With this configuration, the power consumption of the robot 100 can be improved.

In addition, the power control unit 260 controls the sensing unit so as to reduce the power consumption during a period in which the necessity of mental health care of the user 10 is lower than during a period in which the necessity of mental health care is high. This makes it possible to achieve both the power saving of the robot 100 and the mental health care of the user 10.

### (Ninth embodiment)

FIG. 1 is a diagram schematically illustrating an example of a control system 1 according to the present embodiment. As illustrated in FIG. 1, the control system 1 includes a plurality of robots 100, a cooperative device 400, and a server 300. Each of the plurality of robots 100 is managed by a user.

The present disclosure will describe an example in which the robot 100 recognizes the emotion of the user based on an emotion recognition model generated for each user using information related to an operation of the user as input data.

For example, the robot 100 uses a machine learning algorithm to generate an emotion recognition model personalized for each user so as to output the emotion of the user using information (including a change in the expression of the user and the pitch of voice of the user) related to the operation of each user as input data. Subsequently, the robot 100 uses the emotion recognition model personalized for each user to recognize the emotion of the user from the operation of the user. This makes it possible for the robot 100 to recognize the emotion of the user using the emotion recognition model personalized to a specific user, enabling appropriate recognition of the emotion from a characteristic action (habit) of the user.

In addition, in accordance with the recognized user's emotion, the robot 100 decides its own action and executes an action in cooperation with the cooperative device 400. For example, in a case where the recognized user's emotion is "delighted", the robot 100 may operate the camera being the cooperative device 400 to take a picture of the user. Additionally, in a case where the recognized emotion of the user is "sad", for example, the robot 100 may perform an action of comforting the user by operating a musical instrument being the cooperative device 400.

Furthermore, the robot 100 uses image data including the user's face as an input, and recognizes the emotion of the user from the characteristic operation of each portion constituting the user's expression, based on the emotion recognition model. For example, in a case where a specific user has a habit of narrowing their eyes when smiling, the robot 100 can recognize the emotion using the habit of the specific user as a determination indicator by using image data including the face of the user as an input. That is, by recognizing the emotion particularly from a change in the expression considered to be deeply connected to the emotion, the robot 100 can more appropriately recognize the emotion of the user.

In this manner, the robot 100 in the present disclosure uses the emotion recognition model individually generated for each user with the operation of the user such as the user's voice or habit as an input, making it possible to perform emotion recognition for each user with high accuracy.

FIG. 32 is a diagram schematically illustrating a functional configuration of the robot 100. The robot 100 includes a control unit including a sensor unit 200, a sensor module unit 210, a storing unit 220, an emotion recognition unit 233, an emotion decision unit 232, an action recognition unit 234, an action decision unit 236, a storage control unit 238, an action control unit 250, a control target 252, and a communication processing unit 280.

Among the components of the robot 100 illustrated in FIG. 32, the components other than the control target 252 and the sensor unit 200 are examples of components included in the action control system in the robot 100. The action control system of the robot 100 controls the control target 252 as a target.

The storing unit 220 includes a reaction rule 221, history data 222, and an emotion recognition model 223. The history data 222 includes history of past emotion values of the user and history of actions of the user. The history of emotion values and actions is recorded for each user, for example, by being associated with identification information of the user. The emotion recognition model 223 is a machine learning model that outputs the type of emotion of the user using information related to the operation of the user as input data, and is individually generated for each user. At least a part of the storing unit 220 is implemented by a storage medium such as memory. A person DB that stores a face image of the user, attribute information of the user, and the like may be included. Among the components of the robot 100 illustrated in FIG. 32, the functions of the components other than the control target 252, the sensor unit 200, and the storing unit 220 can be implemented by the CPU operating based on a program.

The sensor module unit 210 includes a voice emotion recognition unit 211, an utterance comprehension unit 212, an expression recognition unit 213, and a face recognition unit 214. Information detected by the sensor unit 200 is input to the sensor module unit 210. The sensor module unit 210 analyzes the information detected by the sensor unit 200 and outputs an analysis result to the emotion recognition unit 233.

The voice emotion recognition unit 211 of the sensor module unit 210 analyzes the voice of the user detected by the microphone 201. For example, the voice emotion recognition unit 211 extracts features such as frequency components of a voice. The utterance comprehension unit 212 analyzes the voice of the user detected by the microphone 201 and outputs textual information indicating utterance content of the user. For example, the utterance comprehension unit 212 analyzes the pitch of the user's voice in the utterance, the speed of the utterance, and the like.

The expression recognition unit 213 recognizes the expression of the user from the image of the user captured by the 2D camera 203. For example, the expression recognition unit 213 recognizes the expression of the user based on the shapes, positional relationships, and the like of the eyes and the mouth. For example, the expression recognition unit 213 recognizes that the user is smiling from the image of the user having characteristics such as raised mouth corners and lowered eye corners.

The face recognition unit 214 recognizes the face of the user. The face recognition unit 214 recognizes each user by checking the match between a face image stored in a person DB (not illustrated) and a face image of the user captured by the 2D camera 203.

The emotion recognition unit 233 recognizes the emotion of the user based on the emotion recognition model 223 stored in the storing unit 220. For example, the emotion recognition unit 233 uses the emotion recognition model 223 corresponding to a specific user to decide an emotion value indicating the emotion of the user from the information analyzed by the sensor module unit 210 described above. Note that the emotion recognition unit 233 selects the emotion recognition model 223 corresponding to the user recognized by the above-described face recognition unit 214 from the plurality of emotion recognition models 223 to recognize the emotion of the user.

The emotion decision unit 232 decides an emotion value indicating the emotion of the robot 100 based on the emotion of the user recognized by the emotion recognition unit 233.

Specifically, the emotion decision unit 232 decides an emotion value indicating the emotion of the robot 100 in accordance with a rule for updating the emotion value of the robot 100 prescribed in association with the emotion of the user recognized by the emotion recognition unit 233.

For example, when the emotion recognition unit 233 indicates that the emotion value of the user is a negative value, the emotion decision unit 232 increases the emotion value of "sad" of the robot 100. When the emotion recognition unit 233 indicates that the emotion value of the user is a positive value, the emotion value of "delighted" of the robot 100 is increased.

The emotion decision unit 232 may decide the emotion value indicating the emotion of the robot 100 in further consideration of the state of the robot 100. For example, in a case where the remaining battery level of the robot 100 is low, a case where the surrounding environment of the robot 100 is completely dark, or the like, the emotion value of "sad" of the robot 100 may be increased. Furthermore, in the case of the user who desires to continue the dialog even though the remaining battery level is low, the emotion value of "anger" may be increased.

The action recognition unit 234 recognizes an action of the user based on the information analyzed by the sensor module unit 210 and the emotion of the user recognized by the emotion recognition unit 233. For example, the information analyzed by the sensor module unit 210 and the recognized emotion of the user are input to a neural network trained in advance to acquire the probability of each of a plurality of predetermined action classifications (for example, "smile", "get angry", "ask a question", and "expressing sorrow"), and the action classification having the highest probability is to be recognized as the action of the user. For example, the action recognition unit 234 recognizes that the user is smiling based on information such as laughter emitted from the user, an expression of smile, and an emotion value of the user indicating a positive value.

As described above, in the present embodiment, the robot 100 acquires the utterance content of the user after specifying the user. In the acquisition and use of the utterance content, the action control system of the robot 100 according to the present embodiment considers protection of personal information and privacy of the user in addition to acquisition of necessary consent according to laws and regulations from the user.

Based on the current emotion value of the user decided by the emotion recognition unit 233, the history data 222 of the past emotion values decided by the emotion recognition unit 233 before the current emotion value of the user is decided, and the emotion value of the robot 100, the action decision unit 236 decides an action corresponding to the action of the user recognized by the action recognition unit 234. While the present embodiment will describe a case where the action decision unit 236 uses one most recent emotion value included in the history data 222 as the past emotion value of the user, the disclosed technology is not limited to this aspect. For example, the action decision unit 236 may use a plurality of most recent emotion values as the past emotion values of the user, or may use emotion values that are earlier by a unit period such as a day before. In addition, the action decision unit 236 may decide an action corresponding to the action of the user in further consideration of the history of past emotion values of the robot 100 in addition to the current emotion value of the robot 100. The action decided by the action decision unit 236 includes a gesture performed by the robot 100 or utterance content of the robot 100.

The action decision unit 236 may decide an action corresponding to the action of the user based on the emotion of the robot 100. For example, when the emotion value of "angry" or "sad" of the robot 100 has increased in a case where the robot is abused by the user, in a case where the user takes an arrogant attitude (that is, in a case where the user's reaction is unfavorable), in a case where the voice of the user cannot be detected due to surrounding noise, in a case where the remaining battery level of the robot 100 is low, or the like, the action decision unit 236 may decide an action corresponding to the increase in the emotion value of "angry" or "sad" as the action corresponding to the action of the user.

In addition, in a case where the emotion value of "delighted" or "joyful" of the robot 100 has increased in a case where the user's reaction is favorable, a case where the remaining battery level of the robot 100 is high, or the like, the action decision unit 236 may decide an action corresponding to the increase in the emotion value of "delighted" or "joyful" as an action corresponding to the action of the user. The action decision unit 236 may decide an action different from the action for the user that has increased the emotion values of "angry" and "sad" of the robot 100, as an action for the user that has increased the emotion values of "delighted" and "joyful" of the robot 100. In this manner, the action decision unit 236 may decide various actions depending on the emotion itself of the robot or how the user has changed the emotion of the robot 100 by the action of the user.

The action decision unit 236 according to the present embodiment decides the action of the robot 100 as the action corresponding to the action of the user based on a combination of the past emotion value and the current emotion value of the user, the emotion value of the robot 100, the action of the user, and the reaction rule 221. For example, in a case where the past emotion value of the user is a positive value and the current emotion value is a negative value, the action decision unit 236 decides an action for changing the emotion value of the user to a positive value as the action corresponding to the action of the user.

For example, the reaction rule 221 prescribes an action of the robot 100 corresponding to an action pattern such as a case where the user is smiling or a case where the user is expressing sorrow.

In a case where the storage control unit 238 decides to store the data including the action of the user in the history data 222, the action decided by the action decision unit 236, the information (for example, any surrounding information such as data such as a sound, an image, and a smell of the place.) analyzed by the sensor module unit 210 from the current time point to a certain period before, and the emotion of the user recognized by the emotion recognition unit 233 are to be stored in the history data 222.

The action control unit 250 controls the control target 252 based on the action decided by the action decision unit 236. For example, when the action decision unit 236 has determined an action including utterance, the action control unit 250 controls to output a voice from a speaker included in the control target 252. At this time, the action control unit 250 may decide the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion decision unit 232. For example, in a case where the emotion value of the user is decided to be a negative value, causing the emotion value of "sad" of the robot 100 to be a relatively large value, the action control unit 250 controls its own arm being the control target 252 to play the musical instrument being the cooperative device 400 to take an action of alleviating the unpleasant feeling of the user.

FIG. 33 is a diagram schematically illustrating an example of an operation flow related to an operation of deciding an action of the robot 100. The operation flow illustrated in FIG. 33 is repeatedly executed. At this time, it is assumed that information analyzed by the sensor module unit 210 is input. Note that "S" in the operation flow represents a step to be executed.

First, in step S1001, the emotion recognition unit 233 recognizes the emotion of the user based on the information analyzed by the sensor module unit 210. For example, using the emotion recognition model 223, the emotion recognition unit 233 recognizes the emotion of the user from information or the like analyzed by the expression recognition unit 213 included in the sensor module unit 210.

In step S1002, based on the recognized user's emotion, the emotion recognition unit 233 decides an emotion value indicating the emotion of the user.

In step S1003, the emotion decision unit 232 decides an emotion value indicating the emotion of the robot 100 based on the emotion value decided by the emotion recognition unit 233. The emotion decision unit 232 adds the decided emotion value of the user to the history data 222.

In step S1004, the action recognition unit 234 recognizes the action classification of the user based on the information analyzed by the sensor module unit 210 and the emotion of the user recognized by the emotion recognition unit 233. For example, the action recognition unit 234 recognizes the action of the user, such as "laughing" and "dancing".

In step S1005, the action decision unit 236 decides the action of the robot 100 based on the combination of the current emotion value of the user decided in step S102 and the past emotion value included in the history data 222, the emotion value of the robot 100, the action of the user recognized by the action recognition unit 234, and the reaction rule 221.

In step S1006, the action control unit 250 controls the control target 252 based on the action decided by the action decision unit 236. For example, the action control unit 250 decides to sing or play a musical instrument based on its own emotion value, and controls a speaker or an arm, which is the control target 252.

In step S1007, the storage control unit 238 calculates a total value of the strength based on the strength of the action predetermined for the action decided by the action decision unit 236 and the emotion value of the robot 100 decided by the emotion decision unit 232.

In step S1008, the storage control unit 238 determines whether the total value of the strength is a threshold or more. In a case where the total value of the strength is less than the threshold, the data including the action of the user is not stored in the history data 222, and the processing ends. In contrast, when the total value of the strength is the threshold or more, the processing proceeds to step S109.

In step S1009, the action decided by the action decision unit 236, the information analyzed by the sensor module unit 210 from the current time point to a certain period before, and the emotion of the user recognized by the emotion recognition unit 233 are to be stored in the history data 222.

As described above, the robot 100 includes the emotion recognition unit that recognizes the emotion of the user based on the emotion recognition model generated for each user using the information related to the operation of the user as input data. With this configuration, the robot 100 can accurately recognize the emotion of the user from the user's specific habit or the like by using the emotion recognition model corresponding to each user.

In addition, the robot 100 further includes the action control unit that decides its own action in accordance with the emotion recognized by the emotion recognition unit and controls the control target based on the determined own action. With this configuration, the robot 100 can perform an action to enliven the scene, an action to comfort the user, and the like according to the emotion of the user.

The emotion recognition unit of the robot 100 uses image data including the user's face as an input, and recognizes the emotion of the user from the characteristic operation of each portion constituting the user's expression, based on the emotion recognition model. With this operation, by recognizing the emotion particularly from a change in the expression considered to be deeply connected to the emotion, the robot 100 can recognize the emotion of the user with higher accuracy.

While the above embodiment is a case where the robot 100 recognizes the user using the face image of the user, the disclosed technology is not limited to this aspect. For example, the robot 100 may recognize the user using a voice uttered by the user, a mail address of the user, an ID of an SNS of the user, an ID card incorporating a wireless IC tag possessed by the user, or the like.

### (Tenth embodiment)

FIG. 13 schematically illustrates an example of a system 5 according to the present embodiment. The system 5 includes a robot 100, a robot 101, a robot 102, and a server 300.

Furthermore, the robot 100 has a function of recognizing an action of the user 10. The robot 100 recognizes the action of the user 10 by analyzing a face image of the user 10 acquired by a camera function and the voice of the user 10 acquired by a microphone function. The robot 100 decides an action to be executed by the robot 100 based on the recognized action of the user 10 or the like.

FIG. 34 schematically illustrates a functional configuration of the robot 100. The robot 100 includes a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, and a communication processing unit 280.

Among the components of the robot 100 illustrated in FIG. 34, the components other than the control target 252 and the sensor unit 200 are examples of components included in the action control system in the robot 100. The action control system of the robot 100 controls the control target 252 as a target.

The storing unit 220 includes a reaction rule 221 and history data 222. The history data 222 includes a history of past emotional states and actions of the user 10. For example, the history data 222 stores data of history of past emotion values and history of actions of the user 10. The emotion value and the action history are recorded for each user 10 by being associated with identification information of the user 10, for example. At least a part of the storing unit 220 is implemented by a storage medium such as memory. The storing unit 220 may include a person DB that stores a face image of the user 10, attribute information of the user 10, and the like. Among the components of the robot 100 illustrated in FIG. 34, the functions of the components other than the control target 252, the sensor unit 200, and the storing unit 220 can be implemented by the CPU operating based on a program.

The action decision unit 236 according to the present embodiment decides the action of the robot 100 as the action corresponding to the action of the user 10 based on a combination of the past emotion value and the current emotion value of the user 10, the emotion value of the robot 100, the action of the user 10, and the reaction rule 221. For example, in a case where the past emotion value of the user 10 is a positive value and the current emotion value is a negative value, the action decision unit 236 decides an action for changing the emotion value of the user 10 to a positive value as the action corresponding to the action of the user 10.

The reaction rule 221 defines the action of the robot 100 corresponding to the combination of the past emotion value and the current emotion value of the user 10, the emotion value of the robot 100, and the action of the user 10. For example, in a case where the past emotion value of the user 10 is a positive value, the current emotion value is a negative value, and the action of the user 10 is expressing sorrow, a combination of a gesture and utterance content to be used at the time of offering words with gesture to encourage the user 10 is prescribed as the action of the robot 100.

For example, in the reaction rule 221, the action of the robot 100 is determined for all combinations of the pattern of the emotion value of the robot 100 (1296 patterns being the fourth power of six values, namely, values "0" to "5" of "delighted", "angry", "sad", and "joyful"), the pattern of the combination of the past emotion value and the current emotion value of the user 10, and the action pattern of the user 10. That is, for each pattern of the emotion value of the robot 100, the action of the robot 100 corresponding to the action pattern of the user 10 is determined for each of the plurality of combinations such as the case where the combination of the past emotion value and the current emotion value of the user 10 include combinations of a negative value and a negative value, a negative value and a positive value, a positive value and a negative value, a positive value and a positive value, a negative value and a neutral value, and a neutral value and a neutral value. In a case where the user 10 has made an utterance that intends to have a conversation continued from a past topic such as "I want to talk about the topic I discussed earlier", for example, the action decision unit 236 may transition to the operation mode of deciding the action of the robot 100 using the history data 222.

The action control unit 250 controls the control target 252 based on the action decided by the action decision unit 236. For example, when the action decision unit 236 has determined an action including utterance, the action control unit 250 controls to output a voice from a speaker included in the control target 252.

Meanwhile, when having a conversation with a similar gesture, way of speaking, or the wording, the mental connection with the user 10 will be improved, leading to an improvement of the relationship. In particular, when the emotion of the user 10 is in a positive state, the relationship is likely to be improved.

Therefore, the action control unit 250 may control the control target 252 to express an emotion corresponding to the estimated emotion of the user 10 in alignment with the recognized state of the user 10. For example, the robot 100 according to the embodiment has a configuration in which the sensor module unit 210 detects the user 10 with a voice, an image, or the like by the sensor unit 200, and the user state recognition unit 230 recognizes the state of the user 10 based on the information analyzed by the sensor module unit 210. Subsequently, the emotion decision unit 232 decides the emotional state of the user 10 from the recognized state of the user 10 to estimate the emotion of the user 10. The action control unit 250 controls the control target 252 to express an emotion corresponding to the emotion of the user 10 estimated by the emotion decision unit 232 in alignment with the state of the user 10 recognized by the user state recognition unit 230. When the emotion of the user 10 estimated by the emotion decision unit 232 is a positive state, the action control unit 250 controls the control target 252 to express an emotion corresponding to the estimated emotion of the user 10 in alignment with the state of the user 10 recognized by the user state recognition unit 230. For example, the action control unit 250 determines the state as a positive state when emotion values are large in bright emotions such as "delighted", "joyful", "pleasant", "secure", "excited", "relieved", and "fulfilled", "delighted", "joyful", or "pleasant", and the emotion values are small in negative feelings such as "angry", "sad", "unpleasant", "anxious", "sorrowful", "worried", and "empty". In contrast, the action control unit 250 determines the state as a negative state when emotion values are small in bright emotions such as "delighted", "joyful", "pleasant", "secure", "excited", "relieved", and "fulfilled", "delighted", "joyful", or "pleasant", and the emotion values are large in negative feelings such as "angry", "sad", "unpleasant", "anxious", "sorrowful", "worried", and "empty". When the emotion of the user 10 is a positive state, the action control unit 250 controls the control target 252 to express an emotion corresponding to the estimated emotion of the user 10 in the same state as the state of the user 10. For example, the user state recognition unit 230 decides the speech speed of the voice based on the emotion value of the user 10. In addition, for example, the user state recognition unit 230 detects the user 10 with a voice, an image, or the like by the sensor unit 200, and recognizes any characteristic of the gesture, the way of speaking, or the wording of the user 10. The action control unit 250 controls the control target 252 so as to express an emotion corresponding to the estimated emotion of the user 10 using any one of the gesture, the way of speaking, and the wording as the same characteristic as the user 10. In addition, for example, the user state recognition unit 230 recognizes any of the expression, the tone of the voice, and the nuances of words of the user 10. The action control unit 250 controls the control target 252 so as to express an emotion corresponding to the estimated emotion of the user 10 by setting any of the expression, the tone of the voice, and the nuances of the words to the same state as the state of the user 10. Expressing, by the robot 100 toward the user 10, the emotion corresponding to the emotion of the user 10 in this manner improves a mental connection between the user 10 and the robot 100, leading to an improvement of the relationship.

Note that the action control unit 250 may decide the speech speed of the voice based on the emotion value of the robot 100. For example, when the emotion of the user 10 is in a positive state, the action control unit 250 decides the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion decision unit 232.

FIG. 35 schematically illustrates an example of an operation flow related to an operation of deciding an action in the robot 100. The operation flow illustrated in FIG. 35 is repeatedly executed. At this time, it is assumed that information analyzed by the sensor module unit 210 is input. Note that "S" in the operation flow represents a step to be executed.

First, in step S1100, the state of the user 10 is recognized. For example, the user state recognition unit 230 recognizes the state of the user 10 based on the information analyzed by the sensor module unit 210.

In step S1102, the emotion of the user 10 is estimated based on the recognized state of the user 10. For example, the emotion decision unit 232 decides an emotion value indicating the emotion of the user 10 based on the information analyzed by the sensor module unit 210 and the state of the user 10 recognized by the user state recognition unit 230.

In step S1103, the emotion decision unit 232 decides an emotion value indicating the emotion of the robot 100 based on the information analyzed by the sensor module unit 210 and the state of the user 10 recognized by the user state recognition unit 230. The emotion decision unit 232 adds the decided emotion value of the user 10 to the history data 222.

In step S1104, the action recognition unit 234 recognizes the action classification of the user 10 based on the information analyzed by the sensor module unit 210 and the state of the user 10 recognized by the user state recognition unit 230.

In step S1106, the action decision unit 236 decides the action of the robot 100 based on the combination of the current emotion value of the user 10 decided in step S102 and the past emotion value of the user 10, the emotion value of the robot 100, the action of the user 10 recognized by the action recognition unit 234, and the reaction rule 221.

In step S1108, the action control unit 250 controls the control target 252 based on the action decided by the action decision unit 236. At this time, when the emotion of the user 10 estimated by the emotion decision unit 232 is a positive state, the action control unit 250 controls the control target 252 to express an emotion corresponding to the estimated emotion of the user 10 in alignment with the state of the user 10 recognized by the user state recognition unit 230. For example, when the emotion of the user 10 is a positive state, the action control unit 250 controls the control target 252 to express an emotion corresponding to the estimated emotion of the user 10 in the same state as the state of the user 10. In addition, when the emotion of the user 10 is in a positive state, the action control unit 250 decides the speech speed of the voice based on the emotion value of the robot 100.

In step S1110, the storage control unit 238 calculates a total value of the strength based on the strength of the action predetermined for the action decided by the action decision unit 236 and the emotion value of the robot 100 decided by the emotion decision unit 232.

In step S1112, the storage control unit 238 determines whether the total value of the strength is a threshold or more. In a case where the total value of the strength is less than the threshold, the data including the action of the user 10 is not stored in the history data 222, and the processing ends. In contrast, when the total value of the strength is the threshold or more, the processing proceeds to step S1114.

In step S1114, the action decided by the action decision unit 236, the information analyzed by the sensor module unit 210 from the current time point to a certain period before, and the state of the user 10 recognized by the user state recognition unit 230 are to be stored in the history data 222.

As described above, the robot 100 includes the recognition unit (the sensor unit 200, the sensor module unit 210, and the user state recognition unit 230), the estimation unit (the emotion decision unit 232), and the control unit (the action control unit 250). The recognition unit recognizes the state of the user 10. The estimation unit estimates the emotion of the user 10 based on the state of the user 10 recognized by the recognition unit. The control unit controls the control target 252 to express an emotion corresponding to the emotion of the user 10 estimated by the estimation unit in alignment with the state of the user 10 recognized by the recognition unit. This can improve the relationship between the user 10 and the robot 100.

In addition, when the emotion of the user 10 estimated by the estimation unit is a positive state, the control unit controls the control target so as to express an emotion corresponding to the emotion of the user 10 in alignment with the state of the user 10 recognized by the recognition unit. By aligning the emotion with the state of the user 10 when the emotion of the user 10 is positive in this manner, the mental connection is improved, making it possible to improve the relationship between the user 10 and the robot 100.

In addition, the control unit controls the control target 252 to express an emotion corresponding to the emotion of the user 10 estimated by the estimation unit in the same state as the state of the user 10. By controlling the control target 252 by the robot 100 so as to express the emotion in the same state as the state of the user 10 in this manner, the mental connection is improved, leading to an improvement of the relationship between the user 10 and the robot 100.

The recognition unit recognizes any characteristic of the gesture, the way of speaking, or the wording of the user 10. The control unit controls the control target 252 so as to express an emotion corresponding to the emotion of the user 10 estimated by the estimation unit using any one of the gesture, the way of speaking, and the wording as the same characteristic as the user 10. In this manner, with the control of the control target 252, by the robot 100, to express the emotion using any of the gesture, the way of speaking, and the wording as the same feature as the user 10, the mental connection is improved, leading to an improvement of the relationship between the user 10 and the robot 100.

In addition, the recognition unit recognizes any of the expression, the tone of the voice, and the nuances of the words of the user 10. The control unit controls the control target 252 so as to express an emotion corresponding to the emotion of the user 10 estimated by the estimation unit by setting any of the expression, the tone of the voice, and the nuances of the words to be in the same state as the state of the user 10. In this manner, by controlling the control target 252, by the robot 100, so as to express the emotion while setting any of the expression, the tone of the voice, and the nuances of the words to be in the same state as the user 10, the mental connection is improved, leading to an improvement of the relationship between the user 10 and the robot 100.

### (Eleventh embodiment)

### [1. Providing device]

An example of the providing device 500 according to the embodiment will be described with reference to FIG. 36. FIG. 36 is a block diagram illustrating an example of a configuration of a providing device 500. The providing device 500 provides information related to a character such as an avatar. The providing device 500 is implemented by an Artificial Intelligence (AI) robot or the like capable of recognizing emotions such as Pepper (registered trademark), for example, and is used for planning or the like in a company, an individual, or the like. In the example illustrated in FIG. 36, the providing device 500 includes an acquisition unit 510, a control unit 520, a providing unit 530, and a storage unit 540.

### (Acquisition unit 510)

The acquisition unit 510 acquires at least one of information related to character setting and information related to the user. In the example illustrated in FIG. 36, the acquisition unit 510 further acquires information related to a character. An example of acquisition by the acquisition unit 510 will be described with reference to FIG. 37. FIG. 37 is a diagram for illustrating an example of the providing device 500. For example, the acquisition unit 510 acquires information related to existing characters in the television, animation, and publishing industries such as Doraemon (registered trademark) whose rights belong to the rights holder of the character in FIG. 37. The description returns to FIG. 36. The acquisition unit 510 may acquire information related to a setting of a character requested by an individual user other than an existing character, such as a separated family member or a fictitious character. The acquisition unit 510 may acquire information related to at least one of the use of the character, the target market, and an external image.

The acquisition unit 510 may acquire information related to the personality of the user, such as information related to at least one of memories, texts (for example, diaries, documents, and the like), photographs, moving images, and conversations of the user. As an example, the acquisition unit 510 acquires information related to at least one of memories and diaries of the user, which are elements included in the user's personality in FIG. 37. As another example, in a case where the user is a living person or an accessible person, the acquisition unit 510 acquires information related to the user's personality, such as at least one of the user's talking habit, voice, movement of emotion, tastes/preference, thought pattern (way of thinking), and personality, analyzed from a simple conversation with the user, in which the user answers a predetermined question in front of the camera. The acquisition unit 510 may acquire information related to the user's personality such as a change in the emotion of the user by recognizing the emotion of the user or may acquire information in which the emotion of the user has been recognized in advance. Since the emotion recognition method is similar to the methods described in Patent Literatures 2 to 6, the detailed description thereof will be omitted. The emotion recognition method is not limited to these methods, and other known methods may be used.

As another example, in a case where the user is an inaccessible person such as a historical person, the acquisition unit 510 acquires information related to the user's personality, such as at least one of the user's taste/preference, thought pattern, or personality, analyzed from information related to texts, such as a document or a diary. The acquisition unit 510 may acquire the information related to the personality of the user by analyzing the information related to the conversation or the text with the user, or may acquire the information related to the personality of the user analyzed in advance from the information related to the conversation or the text. The acquisition unit 510 may acquire information related to evaluation by the user for the information related to the character provided by the providing unit 530. For example, the acquisition unit 510 acquires reviews from clients such as rights holders of the character and general individuals with respect to the finished quality in the information related to the character provided by the providing unit 530. Furthermore, the acquisition unit 510 may acquire information related to the appearance of the user from an image, a moving image, or the like of the user. The acquisition unit 510 may acquire the information related to the appearance of the user by capturing the user with a camera or the like. Furthermore, the acquisition unit 510 may acquire information related to the voice of the user from the recording, moving image, or the like of the user. The acquisition unit 510 may acquire the information related to the voice of the user by recording the voice of the user with a microphone.

### (Control unit 520)

The control unit 520 performs overall control of the providing device 500. As an example, the control unit 520 is implemented by executing various programs stored in a storage device inside the providing device 500 using RAM as a work area by a Central Processing Unit (CPU), a Micro Processing Unit (MPU), or the like. As another example, the control unit 520 is implemented by an integrated circuit such as an Application Specific Integrated Circuit (ASIC) or a Field Programmable Gate Array (FPGA). In the example illustrated in FIG. 36, the control unit 520 includes a trained model generator 521 and a generation unit 522.

### (Trained model generator 521)

The trained model generator 521 uses at least one of information related to the setting and information related to the user acquired by the acquisition unit 510 and the information related to the character to generate the trained model 541 that outputs information such that, when at least one of the information related to the setting and the information related to the user has been input to the model, the information related to the character is to be output. For example, using the information related to the setting, the information related to the user, and the information related to the character acquired by the acquisition unit 510 as teaching data, the trained model generator 521 generates a text generation model or an image generation model having the dialogue function including the trained model 541 that outputs information such that, when the information related to the setting and the information related to the user have been input to the model, the information related to the character is to be output. The trained model generator 521 may re-train the trained model 541 using the information related to the evaluation of the user acquired by the acquisition unit 510 and the information related to the character provided by the providing unit 530. For example, the trained model generator 521 re-trains the text generation model or the image generation model including the trained model 541 and having the dialogue function using the information related to the evaluation of the user acquired by the acquisition unit 510 and the information related to the character provided by the providing unit 530 as teaching data. The text generation model having a dialogue function is implemented by a technique such as Chat Generative Pretrained Transformer) (ChatGPT), for example.

### (Generation unit 522)

The generation unit 522 generates information related to a character using the trained model 541 that outputs information such that, when at least one of the information related to the setting acquired by the acquisition unit 510 and the information related to the user has been input to the model, information related to the character is to be output. This makes it possible for the generation unit 522 to generate the information related to the character in one-stop operation. As an example, the generation unit 522 inputs at least one of the information related to the setting and the information related to the user to the trained model 541, and generates the information related to at least one of: the information related to at least one of the script, voice, and design of the character; and the information related to the rights of the character. As another example, the generation unit 522 inputs information related to at least one of the use of the character, the target market, and the external image acquired by the acquisition unit 510 to the trained model 541, and generates information related to the character. As another example, the generation unit 522 inputs the information related to the setting of the character desired by the user acquired by the acquisition unit 510 to the trained model 541, and generates information related to a character desired by an individual user other than the existing character, such as a separated family or a fictitious character.

The generation unit 522 may generate the information related to the rights of the character when the information related to the existing character has been acquired by the acquisition unit 510. The generation unit 522 may generate information related to at least one of the rights holder and the related person of the character. As another example, the generation unit 522 may input the information related to the user acquired by the acquisition unit 510 to the trained model 541 to generate information related to a character corresponding to the characteristics of the user, such as the appearance, personality, or voice of the user. For example, the generation unit 522 inputs information related to the personality of the user, such as information related to at least one of memories, texts (for example, diaries and documents), photographs, moving images, and conversations of the user acquired by the acquisition unit 510, to the trained model 541 to generate information related to the character. The generation unit 522 cannot completely copy the elements constituting the personality such as the way of thinking and memories of the desired person, but can generate a character that closely resembles the personality of the desired person. In addition, by inputting information related to the imagined person image to the text generation model or the image generation model having a dialogue function such as ChatGPT and including the trained model 541, the generation unit 522 can easily perform fine adjustment or examinations on the character. The generation unit 522 may generate the information related to the character using the trained model 541 retrained using the information related to the evaluation of the user acquired by the acquisition unit 510 and the information related to the character provided by the providing unit 530. With this configuration, the generation unit 522 can refine the information related to the character.

### (Providing unit 530)

The providing unit 530 provides information related to the character generated by the generation unit 522. This makes it possible for the providing unit 530 to provide the information related to the character in one-stop operation. For example, as a business, the providing unit 530 can provide, to a client, one-stop generation processing from the input of setting information requested from a client such as a character rights holder or a general individual to the trained model 541 through the output of information related to the character. In addition, the providing unit 530 can provide, in one-stop operation, from confirmation of the quality of finish for the information related to the character through the processing of refining the quality based on the reviews by the client for the information related to the character. In addition, by providing information related to characters in one-stop operation, the providing unit 530 can make character content creation easier to start, making it possible to achieve an explosive spread of character content.

The providing unit 530 may provide information related to at least one of: the information related to at least one of the script, voice, and design of the character generated by the generation unit 522; and the information related to the rights of the character. For example, the providing unit 530 provides the user with information related to the script, voice, and design of the character generated by the generation unit 522 and information related to the rights of the character. This makes it possible for the providing unit 530 to provide the user with information in one-stop operation from character script, voice, and design generation processing that should be originally performed by the character production company in FIG. 2 through rights handling such as rights negotiations related to the rights of an existing character with the character production company or the like. In addition, by providing the user with the information related to the rights of the character, the providing unit 530 can prompt the user to perform rights negotiations. The providing unit 530 may provide information related to at least one of the rights holder and the administrator of the character generated by the generation unit 522. With this configuration, the providing unit 530 can specify the rights holder and the administrator of the character production company or the like, and make it easy for the user or the like to perform rights negotiations.

The providing unit 530 may provide information related to a character installed in the content. With this configuration, the providing unit 530 can provide information related to the actualized character utilized for the content in one-stop operation. For example, the providing unit 530 provides information related to a character installed in at least one of a robot such as a home robot, a signage of a store or the like, the web, a stuffed toy, and an advertisement. The providing unit 530 may provide the user or the like with at least one of the robot, the signage, the web, the stuffed toy, and the advertisement in which the information related to the character is installed, or may provide the user or the like with the information related to the character by causing the information related to the character to be installed in at least one of the robot, the signage, the web, the stuffed toy, and the advertisement of the belongings of the user or the like.

Hereinafter, an example of provision by the providing unit 530 will be described with reference to FIG. 38. FIG. 38 is a diagram for illustrating an example of the providing device 500. In the example illustrated in FIG. 38, the providing unit 530 provides the user with information related to a personalized character such as a distant grandchild character installed in a home robot such as Pepper. The providing unit 530 also provides the user with a chat based on memories, reminding of medicine, health check, and transmission of a moving image to family members using the grandchild's character. In addition, the providing unit 530 reproduces the setting of the grandchild character by utterances and gestures by the robot. In this manner, the providing unit 530 can provide the actualization processing related to the actualization of the character in FIG. 37 in one-stop operation. In addition, the providing unit 530 can provide relaxation by conversation with a family member or a departed person. While the example illustrated in FIG. 38, the providing unit 530 provides a family character, there is a case where a character of a historical figure or a famous person is generated by the generation unit 522. In this case, it is possible to provide a character of a historical figure or a famous person and entertain the user by conversation with the historical figure or the famous person.

### (Storage unit 540)

The storage unit 540 stores various data and various programs such as information related to setting, information related to a user, information related to a character, and the trained model 541. The storage unit 540 is implemented by, for example, a semiconductor memory element such as Random Access Memory (RAM) or flash memory, or a storage device such as a hard disk or an optical disk.

### [2. Providing method]

Next, an example of processing performed by the providing device 500 according to the embodiment will be described with reference to FIG. 39. FIG. 39 is a flowchart illustrating an example of a flow of processing of the providing device 500.

In step S1, the acquisition unit 510 acquires at least one of information related to character setting and information related to the user. For example, when having received a request related to a character from the user, the acquisition unit 510 acquires at least one of information related to character setting and information related to the user.

In step S2, the generation unit 522 generates information related to a character using the trained model 541 that outputs information such that, when at least one of the information related to the setting acquired by the acquisition unit 510 and the information related to the user has been input to the model, information related to the character is to be output.

In step S3, the providing unit 530 provides information related to the character generated by the generation unit 522. For example, the providing unit 530 provides the user with information related to a character installed in at least one of a robot such as a home robot, a signage of a store or the like, the web, a stuffed toy, and an advertisement.

### [3. Hardware Configuration]

FIG. 16 is a diagram illustrating an example of a hardware configuration of the providing device 500. The program installed in the computer 1200 functioning as the providing device 500 can cause the computer 1200 to function as one or more "units" of the device according to the embodiment, or cause the computer 1200 to execute operations or one or more "units" associated with the device, and can cause the computer 1200 to execute processes or process steps according to the embodiment. Such a program may be executed by the CPU 1212 to cause the computer 1200 to execute certain operations associated with some or all of the blocks in the flowcharts and block diagrams described in the present specification.

The computer 1200 according to the embodiment includes a CPU 1212, RAM 1214, and a graphics controller 1216, which are interconnected by a host controller 1210. The computer 1200 further includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 further includes a legacy input/output unit such as ROM 1230 and a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 obtains image data generated by the CPU 1212 in a frame buffer or the like provided in the RAM 1214 or directly in the RAM 1214, and causes the image data to be displayed on a display device 1218.

The communication interface 1222 communicates with other electronic devices via a network. The storage device 1224 stores programs and data used by the CPU 1212 in the computer 1200. The DVD drive 1226 reads a program or data from a DVD-ROM 1227 or the like and provides the read program or data to the storage device 1224. The IC card drive reads programs and data from an IC card and/or writes programs and data to the IC card.

The ROM 1230 stores therein programs dependent on hardware of the computer 1200, such as a boot program and the like executed by the computer 1200 at the time of activation. The input/output chip 1240 may connect various input/output units to the input/output controller 1220 via a USB port, a parallel port, a serial port, a keyboard port, a mouse port, or the like.

The program is provided by a computer-readable storage medium such as the DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 so as to provide cooperation between the programs and various types of hardware resources described above. The apparatus or method may be configured by implementing operation or processing of information in accordance with use of the computer 1200.

For example, when communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM 1227, or the IC card, transmits the read transmission data to the network, or writes reception data received from the network into a reception buffer area or the like provided on the recording medium.

In addition, the CPU 1212 may allow the RAM 1214 to read all or a necessary portion of a file or database stored in an external recording medium such as the storage device 1224, a DVD drive 1226 (DVD-ROM 1227), or the IC card, and may execute various types of processing on data on the RAM 1214. Next, the CPU 1212 may perform write-back of the processed data to the external recording medium.

Various types of information, such as various types of programs, data, tables, and databases, may be stored in a recording medium and subjected to information processing. The CPU 1212 may execute various types of processing on data read from the RAM 1214, including various types of operations, information processing, condition determination, conditional branching, unconditional branching, information search/replacement, and the like, which are described throughout the present disclosure and designated by a command sequence of a program, and writes back the results of processing to the RAM 1214. In addition, the CPU 1212 may search for information in a file, a database, or the like in the recording medium. For example, when a plurality of entries, each having an attribute value of a first attribute associated with an attribute value of a second attribute, is stored in the recording medium, the CPU 1212 may search for an entry in which the attribute value of the first attribute matches a designated condition from the plurality of entries, read the attribute value of the second attribute stored in the entry, and thereby acquire the attribute value of the second attribute associated with the first attribute satisfying the predetermined condition.

The above-described program or software modules may be stored in a computer-readable storage medium on the computer 1200 or in the vicinity of the computer 1200. In addition, a recording medium such as a hard disk or RAM provided in a server system connected to a dedicated communication network or the Internet can be used as a computer-readable storage medium, thereby providing the program to the computer 1200 via the network.

The blocks in the flowcharts and block diagrams may represent stages of a process in which an operation is performed or "units" of an apparatus that are responsible for performing the operation. Specific stages and "units" may be implemented by dedicated circuits, programmable circuits provided together with computer-readable instructions stored on a computer-readable storage medium, or by a processor provided together with computer-readable instructions stored on a computer-readable storage medium. Dedicated circuits may include digital or analog hardware circuit, and may include integrated circuits (ICs) or discrete circuits. Programmable circuits may include reconfigurable hardware circuits including, for example, logical conjunction, logical disjunction, exclusive OR, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, and as a result, the computer-readable storage medium including instructions stored in the device is to have a product including instructions that can be executed to create means for executing operations designated in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), a digital versatile disk (DVD), a Blu-ray (registered trademark) disk, a memory stick, and an integrated circuit card.

The computer-readable instructions may include either source code or object code written in any combination of one or more programming languages, including assembler instructions, instruction-set-architecture (ISA) instructions, machine instructions, machine-dependent instructions, microcode, firmware instructions, statesetting data, or an object oriented programming language such as Smalltalk, JAVA (registered trademark), and C++, and conventional procedural programming languages, such as the "C" programming language or similar programming languages.

The computer-readable instructions may be provided for a processor or programmable circuits of a general purpose computer, special purpose computer, or other programmable data processing apparatus, either locally or over a local area network (LAN), a wide area network (WAN) such as the Internet so as to cause the processor or programmable circuits of the general purpose computer, special purpose computer, or other programmable data processing apparatus to execute the computer-readable instructions in order to generate means to execute the operations designated in the flowcharts or block diagrams. Examples of the processor include a computer processor, a processing unit, a microprocessor, a digital signal processor, a controller, and a microcontroller.

### (Twelfth embodiment)

FIG. 40 schematically illustrates an example of a system 5 according to the present embodiment. FIG. 41 is a diagram illustrating an example of an emotion value change. The system 5 includes a server 300, a robot 100a, and a robot 100b. The robot 100a and the robot 100b communicate with the server 300 through the communication network 20 to exchange information.

The user 10a is a user of the robot 100a. The user 10b is a user of the robot 100b. The robot 100b has substantially the same function as the robot 100a. Accordingly, the system 5 will be described by collectively denoting the robot 100a and the robot 100b as the robot 100.

The robot 100 performs various operations in accordance with the situation, such as moving the head and the limbs, having a conversation with the user 10, or providing a video to the user 10 in accordance with the situation. At this time, the robot 100 decides an operation in cooperation with the server 300. For example, the robot 100 transmits, to the server 300, detection information such as a face image of the user 10 acquired by the camera function and a voice of the user 10 acquired by the microphone function. The server 300 analyzes the detection information received from the robot 100, decides an operation to be taken by the robot 100, and transmits operation information representing the decided operation to the robot 100. The robot 100 operates in accordance with the operation information received from the server 300.

The robot 100 has an emotion value indicating its own emotion. For example, the robot 100 has an emotion value indicating intensity of each emotion such as "happy", "joyful", "sorrowful", "scared", and "excited". The emotion value of the robot 100 is decided by the server 300. The server 300 causes the robot 100 to perform an operation corresponding to the decided emotion. For example, when having a conversation in a state of having a large emotion value of excitement with the user 10, the robot 100 is controlled to perform utterance quickly. In this manner, the robot 100 can express its own emotion by action or the like.

Based on the detection information received from the robot 100, the server 300 updates the current state of the robot 100 using a neural network. The state of the robot 100 includes an emotion of the robot 100. Accordingly, the server 300 decides the emotion of the robot 100 using the neural network.

In addition, the robot 100 causes the server 300 to record data such as video data of the user 10 acquired by the camera function. The robot 100 acquires the data such as video data from the server 300 as necessary, and provides the acquired data to the user 10. The robot 100 generates video data and causes the server 300 to record the generated video data such that, the stronger the intensity of the own emotion, the larger the information volume contained in the video data. For example, in a case where information in a high-compression format such as skeleton data is recorded, the robot 100 switches to recording of information in a low-compression format such as an HD moving image in accordance with an event in which the emotion value of its own excitement exceeds a threshold. According to the system 5, it is possible to leave high-definition video data at a time of a high emotion state of the robot 100 as a record. In addition, the robot 100 generates video data and causes the server 300 to record the generated video data such that, the stronger the intensity of the emotion of the user 10, the larger the information volume of the video data to generate. Specifically, in a case where information in a high-compression format such as skeleton data is recorded, the robot 100 switches to recording of information in a low-compression format such as an HD moving image in accordance with an event in which the emotion value of excitement in the user 10 exceeds a threshold. According to the system 5, it is possible to leave high-definition video data at a time of a high emotion state of the user 10 as a record.

In addition, even in a case where the intensity of the emotion of the robot or the user is not strong as in state 2 of FIG. 41, when the emotion of the robot 100 or the emotion of the user has rapidly changed, the robot 100 generates video data having a large information volume and causes the server 300 to record the generated data. For example, when information in a high-compression format such as skeleton data is being recorded, the robot 100 switches to the recording of information in a low-compression format such as an HD moving image in accordance with the event in which the change in the emotion value exceeds the threshold, even when the emotion value of excitement of the robot 100 or the user is the threshold or less. According to the system 5, it is possible to leave, as a record, high-definition video data when emotions of the robot 100 and the user 10 have changed drastically. In addition, the robot 100 may change the information volume of the video data in accordance with the degree of change in emotion. Specifically, the robot 100 sets the compression rate of the video data such that, the larger the degree of change in the emotion of the robot 100 or the user, the lower the compression rate of the video data will be. As another example, the robot 100 may change the format of information to be recorded such as text alone -> image alone -> voice and image -> low quality video -> high quality video, in the ascending order of the degree of change in the emotion of the robot 100 or the user. In addition, the robot 100 is not limited to changing the compression rate or the format of the information, and may change the length and data amount of the video data. This makes it possible to leave, as a record, video data with higher definition when the emotion of the robot 100 or the user 10 has changed more drastically.

In addition, the robot 100 may change information to be stored in accordance with continuity of change in emotions of the robot 100 or in the user 10 as in state 1 of FIG. 41. For example, in a case where a cumulative value of the emotion values within a predetermined time exceeds a threshold, the robot 100 generates video data having a large information volume and causes the server 300 to record the generated data. In addition, the robot 100 may change information to be stored in accordance with a combination of ups and downs in the change (inclination) in emotion, or the degree of the inclination, within a predetermined time. For example, in a case where the inclination indicating the change in the emotion value is a combination of sudden rise -> moderate for a certain time - > sudden fall, occurring within a predetermined time, the robot 100 generates video data having a large information volume and causes the server 300 to record the generated data. With this configuration, for example, regarding a scene where the user is nervous due to pressure or the like, it is possible to leave video data in a situation where the user feels the time long even though the absolute value of the emotion is not relatively large (where the emotion value of a certain value or more continues for a predetermined time) as a record.

In addition, the robot 100 tags information to be recorded in a case where the emotion value of the robot or the emotion value of the robot 100 exceeds a threshold or in a case where a change in the emotion value exceeds a threshold. Specifically, the robot 100 tags the video data with information detected by a sensor included in the robot 100 or information indicating the emotion value of the user or the emotion value of the robot 100. Examples of information to be tagged include surrounding information (information regarding objects existing in the surroundings, etc.), smell, temperature, humidity, position information, weather, the number of people in the surroundings, facial expressions, emotions, etc. With this configuration, when confirming the recorded information, the user 10 can clearly recall the situation at the time, etc. from the tagged information. In addition, tagging makes it possible to easily find information related to a specific situation from the recorded information in the case of searching for the information.

FIG. 42 is a diagram schematically illustrating a block configuration of the server 300 and the robot 100. The robot 100b includes a sensor unit 200, a processing unit 152, a control target 252, a communication unit 158, and a display unit 157. The server 300 includes a processing unit 302, a storing unit 380, and a communication unit 308. The processing unit 302 includes an initial value setting unit 310, an external input data generation unit 330, a parameter processing unit 340, an operation decision unit 350, a switching control unit 360, and a recording control unit 370. The storing unit 380 stores an operation decision rule 382, definition information 384, a parameter initial value 386, a parameter 388 being a latest parameter, a recording format switching rule 390, and recording data 292.

In the robot 100, the sensor unit 200 includes sensors such as a microphone 201, a 2D camera 203, a 3D depth sensor 202, and a distance sensor 204. Each sensor included in the sensor unit 200 continuously detects information. The sensor information detected by the sensor unit 200 is output to the processing unit 152. The 2D camera 203 is an example of an image sensor that continuously images an object, and generates video information by imaging with visible light. The 3D depth sensor 202 detects the contour of an object by continuously projecting an infrared pattern and analyzing the infrared pattern from the infrared image continuously captured by the infrared camera. Note that the sensor unit 200 may further include various other sensors such as a clock, a gyro sensor, a touch sensor, a motor feedback sensor, a remaining battery level detection sensor, an odor sensor, a temperature sensor, a humidity sensor, and a Global Positioning System (GPS) sensor.

The processing unit 152 is formed of a processor such as a CPU. The processing unit 152 controls to transmit, to the server 300, sensor information continuously detected by each sensor included in the sensor unit 200, through the communication unit 158. In addition, the processing unit 152 processes at least part of the sensor information continuously detected by each sensor included in the sensor unit 200 to generate information for recording. The processing unit 152 generates either information in the first recording format or information in the second recording format having a larger information volume than the volume of information in the first recording format. The information in the first recording format is information in a high-compression format, for example, and the information in the second recording format is information in a low-compression format, for example. For example, based on skeleton information continuously detected by the 3D depth sensor 202, the processing unit 152 generates shape data such as skeleton data of an object as information in the first recording format. In addition, the processing unit 152 generates full HD video data and voice data from the video information captured by the 2D camera 203 and the audio information detected by the microphone 201. The full HD video data is an example of moving image data having more information than the shape data of the object.

The communication unit 158 transmits, to the server 300, the information in the first recording format or the information in the second recording format, which have been generated by the processing unit 152. In the server 300, the recording control unit 370 stores, in the recording data 392, the information in the first recording format or the information in the second recording format received by the communication unit 308 from the robot 100. The recording control unit 370 stores, in the recording data 392, the information received from each robot 100 in association with the information identifying each robot 100.

In the robot 100, the communication unit 158 acquires the information stored in the recording data 392 from the server 300. The communication unit 158 functions as a recording information reception unit that acquires information in the second recording format including moving image data, recorded by the recording control unit 370. Based on the moving image data included in the information in the second recording format received by the communication unit 158, the processing unit 152 generates a video to be presented to the user 10. The processing unit 152 functions as a video generation unit that generates a video to be presented to the user 10.

In addition, the communication unit 158 receives the operation information indicating the operation content from the server 300. The processing unit 152 controls the control target 252 based on the operation content received by the communication unit 158. The control target 252 includes: a speaker; a motor that drives each unit of the robot 100 such as limbs; and a light emitting device. When having received the information indicating the speech content from the server 300, the processing unit 152 controls to output a voice in accordance with the received utterance content from the speaker. In addition, by controlling the drive motor of the limb portion, the processing unit 152 can control a part of the action of the robot 100. In addition, by controlling these motors, the processing unit 152 can express a part of the emotion of the robot 100.

In the server 300, the communication unit 308 outputs the information received from the robot 100 to the processing unit 302. The initial value setting unit 310 stores the initial value of the parameter indicating the initial state of the neural network received by the communication unit 308 in the parameter initial value 386 in the storing unit 380. Note that the initial value of the parameter of the neural network may be predetermined in the server 300, or may be changeable by the user 10 via the communication network 90.

The external input data generation unit 330 processes at least part of the sensor information received by the communication unit 308, generates input information to be input from the outside of the neural network, and outputs the generated input information to the parameter processing unit 340. The parameter processing unit 340 performs calculations of the neural network based on the input information and based on the current parameters 388 and the definition information 384 of the neural network, which are stored in the storing unit 380.

The artificial neuron in the neural network includes: a plurality of artificial neurons defining the situation of the robot 100; a plurality of emotion artificial neurons defining a plurality of emotions of the robot 100 itself; and a plurality of internal secretion artificial neurons defining a generation state of an internally secreted substance of the robot 100 itself. The parameter processing unit 340 calculates a parameter representing an internal state of a plurality of artificial neurons in the neural network based on the input information generated by the external input data generation unit 330. For example, based on the input information generated by the external input data generation unit 330, the parameter processing unit 340 updates the parameters of the current internal state of the plurality of artificial neurons, etc. defining the situation of the robot 100. In addition, the parameter processing unit 340 calculates a parameter of an internal state of another artificial neuron in the neural network. This leads to calculation of the parameter of the internal state of the emotion artificial neuron defining the emotion of "happy", for example. The parameter of the internal state of the emotion artificial neuron is an example of an index representing the intensity of the emotion of "happy". This enables the parameter processing unit 340 to decide the intensity of the emotion in the control system based on the internal state of the emotion artificial neuron. In this manner, the parameter processing unit 340 functions as an emotion decision unit that decides the intensity of the emotion using the neural network based on at least part of the information detected by the sensor included in the sensor unit 200.

The parameters of the neural network calculated by the parameter processing unit 340 are supplied to the switching control unit 360 and the operation decision unit 350. Based on the parameter supplied from the parameter processing unit 340, the switching control unit 360 decides the recording format of the information to be generated by the processing unit 152 of the robot 100. In a case where it is necessary to switch the recording format of the information to be generated by the processing unit 152, the switching control unit 360 controls to transmit an instruction to switch the recording format to the robot 100 through the communication unit 308. The processing unit 152 in the robot 100 switches the recording format in accordance with the instruction received from the server 300.

For example, when having the processing unit 152 generate the information in the first recording format, the switching control unit 360 transmits, to the robot 100, an instruction to switch the recording format of the information to be generated by the processing unit 152 from the first recording format to the second recording format in accordance with an increase in the intensity of the emotion decided by the parameter processing unit 340. In this manner, the switching control unit 360 switches the recording format of the information to be recorded by the recording control unit 370 from the first recording format to the second recording format in accordance with an increase in the intensity of the emotion decided by the parameter processing unit 340. This makes it possible to leave the information at a time of a high emotion state of the robot 100 as a record in detail. In addition, the processing unit 152 in the robot 100 acquires the moving image data in the second recording format acquired from the server 300, and generates a video to be presented to the user 10. Therefore, the user 10 can enjoy the information at a time of a high emotion state of the robot 100 as a video.

In addition, the switching control unit 360 transmits an instruction to switch the recording format of the information to be generated by the processing unit 152 from the first recording format to the second recording format to the robot 100 in accordance with an increase in the intensity of the emotion of the user 10. In this manner, the switching control unit 360 switches the recording format of the information to be recorded by the recording control unit 370 from the first recording format to the second recording format in accordance with an increase in the intensity of the emotion decided by the parameter processing unit 340. This makes it possible to leave the information at a time of a high emotion state of the user 10 as a record in detail. In addition, the processing unit 152 in the robot 100 acquires the moving image data in the second recording format acquired from the server 300, and generates a video to be presented to the user 10. Therefore, the user 10 can enjoy the information at a time of its own high emotion state as a video. The emotion of the user can be detected based on a voice or an expression detected from the user 10, for example. In addition, the switching control unit 360 may recognize a change in the emotion of the user 10 based on detection of an impact by a touch sensor (not illustrated) included in the sensor unit 200. For example, in a case where an impact is detected by the touch sensor included in the sensor unit 200, the switching control unit 360 may recognize that the emotion of the user 10 has worsened.

When the processing unit 152 is caused to generate the information in the second recording format, the switching control unit 360 transmits, to the robot 100, an instruction to switch the recording format of the information to be generated by the processing unit 152 from the second recording format to the first recording format in accordance with a decrease in the intensity of the emotion of the robot 100 or the intensity of the emotion of the user decided by the parameter processing unit 340. In this manner, the switching control unit 360 switches the recording format of the information to be recorded by the recording control unit 370 from the second recording format to the first recording format in accordance with a decrease in the intensity of the emotion decided by the parameter processing unit 340 or the intensity of the emotion of the user.

In addition, the switching control unit 360 transmits an instruction to switch the recording format of the information to be generated by the processing unit 152 from the first recording format to the second recording format to the robot 100 in accordance with an increase in the change of emotion of the user 10 or the robot 100. This makes it possible to leave the information at a time of a high emotion state of the user 10 or the robot 100 as a record in detail. In addition, the processing unit 152 in the robot 100 acquires the moving image data in the second recording format acquired from the server 300, and generates a video to be presented to the user 10. Therefore, the user 10 can enjoy the information at a time of a high emotion state of the user 10 themselves or the robot 100 as a video.

When having the processing unit 152 generate the information in the second recording format, the switching control unit 360 transmits, to the robot 100, an instruction to switch the recording format of the information to be generated by the processing unit 152 from the second recording format to the first recording format in accordance with the settlement of the change in the emotion of the robot 100 or the emotion of the user (the amount of change has decreased to the threshold or less) or in accordance with return of the emotion of the robot 100 or the emotion of the user to the emotion before the change. In this manner, the switching control unit 360 switches the recording format of the information to be recorded by the recording control unit 370 from the second recording format to the first recording format in accordance with the settlement of the change in the emotion of the robot 100 or the emotion of the user.

In addition, the switching control unit 360 may switch the recording format in accordance with continuity of changes in emotion of the robot 100 or emotion of the user 10. For example, the switching control unit 360 transmits, to the robot 100, an instruction to switch the recording format of the information to be generated by the processing unit 152 from the first recording format to the second recording format in a case where the cumulative value of the emotion value within the predetermined time exceeds a threshold. In addition, the switching control unit 360 may switch the recording format in accordance with a combination of ups and downs in the change (inclination) in emotion, or the degree of the inclination, within a predetermined time. For example, the switching control unit 360 transmits, to the robot 100, an instruction to switch the recording format of the information to be generated by the processing unit 152 from the first recording format to the second recording format in a case where the inclination indicating the change in the emotion value is a combination of sudden rise -> moderate for a certain time -> sudden fall, occurring within a predetermined time. With this configuration, for example, regarding a scene where the user is nervous due to pressure or the like, it is possible to leave video data in a situation where the user feels the time long even though the absolute value of the emotion is not relatively large (where the emotion value of a certain value or more continues for a predetermined time) as a record.

In addition, when switching the recording format of the information to be generated by the processing unit 152 from the first recording format to the second recording format, the recording control unit 370 transmits, to the robot 100, an instruction to tag the information in the second recording format. With this configuration, when confirming the recorded information, the user 10 can clearly recall the situation at the time, etc. from the tagged information. In addition, tagging makes it possible to easily find information related to a specific situation from the recorded information in the case of searching for the information.

The operation decision rule 382 prescribes an operation to be performed by the robot 100 in association with the state of the robot 100. For example, the operation decision rule 382 prescribes the operation to be performed by the robot 100 in association with the internal state of the artificial neuron of the neural network. For example, the operation decision rule 382 prescribes an operation of uttering a word expressing happiness in association with a condition of a high state of the emotion artificial neuron defining an emotion of "happy". In addition, the operation decision rule 382 determines an operation at the time of having sleepiness in association with the condition of a high internal state of the internal secretion artificial neuron defining the internally secreted substance corresponding to sleepiness.

The internally secreted substance means a substance that is secreted in the body and transmits a signal, such as a neurotransmitter and a hormone. In addition, internal secretion means that an internally secreted substance is secreted in the body. However, the internally secreted substance of the robot 100 itself is one of information that influences the operation of the robot 100, and does not mean that the robot 100 actually generates the internally secreted substance. Similarly, the emotion of the robot 100 itself is one of information that influences the operation of the robot 100, and does not mean that the robot 100 actually has an emotion.

The operation decision unit 350 decides the operation of the robot 100 based on the operation prescribed in the operation decision rule 382 in association with an activation state or an internal state of each artificial neuron decided by the parameter processing unit 340. The operation information indicating the operation decided by the operation decision unit 350 is transmitted from the communication unit 308 to the robot 100. The processing unit 152 in the robot 100 controls the control target 252 to perform the operation indicated by the information received from the server 300. This makes it possible for the robot 100 to perform an appropriate operation corresponding to the current emotion of the robot 100.

FIG. 43 schematically illustrates a neural network 600. The neural network 600 is an exemplary neural network for illustrating the operation of the parameter processing unit 340. The neural network 600 includes a plurality of artificial neurons, including an artificial neuron 1, an artificial neuron 2, an artificial neuron 3, an artificial neuron 4, an artificial neuron 5, an artificial neuron 6, an artificial neuron 7, an artificial neuron 8, an artificial neuron 9, an artificial neuron a, an artificial neuron b, and an artificial neuron c. The neural network 600 includes a plurality of artificial synapses, including an artificial synapse 601, an artificial synapse 602, an artificial synapse 603, an artificial synapse 604, an artificial synapse 605, an artificial synapse 606, an artificial synapse 607, an artificial synapse 608, an artificial synapse 609, an artificial synapse 610, an artificial synapse 611, an artificial synapse 612, an artificial synapse 613, an artificial synapse 614, an artificial synapse 615, an artificial synapse 616, an artificial synapse 617, an artificial synapse 618, and an artificial synapse 619. The artificial neuron corresponds to a neuron in a living body. The artificial synapse corresponds to a synapse in a living body.

The artificial synapse 601 connects the artificial neuron 4 and the artificial neuron 1 to each other. The artificial synapse 601 is an artificial synapse unidirectionally connected as indicated by an arrow of the artificial synapse 601. The artificial neuron 4 is an artificial neuron connected to an input of the artificial neuron 1. The artificial synapse 602 connects the artificial neuron 1 and the artificial neuron 2 to each other. The artificial synapse 602 is an artificial synapse bidirectionally connected as indicated by arrows at both ends of the artificial synapse 602. The artificial neuron 1 is an artificial neuron connected to an input of the artificial neuron 2. The artificial neuron 2 is an artificial neuron connected to an input of the artificial neuron 1.

In the present embodiment, the artificial neuron may be represented by N, and the artificial synapse may be represented by S. In identification of each artificial neuron, a superscript reference sign is used as an identification character. In addition, in the case of representing an arbitrary artificial neuron, i or j may be used as the identification character. For example, Ni represents an arbitrary artificial neuron.

In addition, the artificial synapse may be identified using identification numbers i and j of two artificial neurons connected to the artificial synapse. For example, S41 represents an artificial synapse connecting N1 and N4 to each other. In general, Sij represents an artificial synapse that inputs an output of Ni to Nj. Note that Sji represents an artificial synapse that inputs an output of Nj to Ni.

In FIG. 43, A to J indicate that the state of the robot 100 is defined. The state of the robot 100 includes the emotion of the robot 100, the generation state of internally secreted substances, the situation of the robot 100, and the like. As an example, N4, N6, and N7 are concept artificial neurons defining a concept representing the situation of the robot 100. For example, N4 is a concept artificial neuron to which the situation "the bell rang" is assigned. N6 is a concept artificial neuron to which the situation "charging has started" is assigned. N7 is a concept artificial neuron to which the situation "power storage level is threshold or less" is assigned.

N1, N3, Nb, and Nc are emotion artificial neurons defining emotions of the robot 100. N1 is an emotion artificial neuron to which an emotion of "happy" is assigned. N3 is an emotion artificial neuron to which the emotion of "sorrowful" is assigned. Nb is an emotion artificial neuron to which the emotion of "scared" is assigned. Nc is an emotion artificial neuron to which the emotion of "joyful" is assigned.

N2, N5, and Na are internal secretion artificial neurons defining an internal secretion state of the robot 100. N5 is an internal secretion artificial neuron to which a dopamine generation state is assigned. Dopamine is an example of an internally secreted substance involved in the reward system. That is, N5 is an example of an internal secretion artificial neuron involved in the reward system. N2 is an internal secretion artificial neuron to which a serotonin developmental state is assigned. Serotonin is an example of an internally secreted substance involved in the sleep system. That is, N2 is an example of an internal secretion artificial neuron involved in the sleep system. Na is an internal secretion artificial neuron to which a noradrenaline developmental state is assigned. Noradrenaline is an example of an internally secreted substance involved in the sympathetic nervous system. That is, Na is an internal secretion artificial neuron involved in the sympathetic nervous system.

The definition information 384 in the storing unit 380 stores information defining the state of the robot 100 as described above for each artificial neuron of a plurality of artificial neurons constituting the neural network. In this manner, the neural network 600 includes a concept artificial neuron, an emotion artificial neuron, and an internal secretion artificial neuron. The concept artificial neuron, the emotion artificial neuron, and the internal secretion artificial neuron are artificial neurons explicitly defining meanings such as a concept, emotion, and internal secretion. On the other hand, N8 and N9 are artificial neurons not defining the state of the robot 100. In addition, N8 and N9 are artificial neurons not explicitly defining the meanings such as concept, emotion, and internal secretion.

Parameters of the neural network 600 include Iti, which is an input to each Ni of the neural network, Eti, which is an input to Ni from the outside of the neural network, parameters of Ni, and parameters of Si.

The parameters of Ni include: Sti representing the status of Ni; Vimt representing the internal state of the artificial neuron represented by Ni; Tit representing a threshold of firing of Ni; tf representing the final firing time being the time when Ni was last fired; Vimtf representing the internal state of the artificial neuron Ni at the final firing time; and ati, bti, and hti which are output increase/decrease parameters. The output increase/decrease parameter is an example of a parameter determining the time evolution of the output at the time of firing of the artificial neuron. In the present embodiment, the subscript t represents a parameter that can be updated with the progress of time. In addition, Vimt is information corresponding to the membrane potential of the artificial neuron, and is an example of a parameter representing the internal state of the artificial neuron or output of the artificial neuron.

The parameters of Sij include: BStij representing the coupling coefficient of the artificial synapse of Sij; tcf representing the final synchronized firing time, which is the time when Ni and Nj connected to Sij fired last in synchronization; BSijtcf representing the coupling coefficient at the final synchronized firing time; and atij, btij, and htij which are increase/decrease parameters of the coupling coefficient. The increase/decrease parameter of the coupling coefficient is an example of a parameter determining time evolution of the coupling coefficient after the last synchronized firing of the two artificial neurons connected by the artificial synapse.

The parameter processing unit 340 updates the above-described parameters based on the input from the external input data generation unit 330 and the neural network, and decides the activation state of each artificial neuron. The operation decision unit 350 decides the operation of the robot 100 based on the internal state or the activation state of at least a part of artificial neurons determined by the value of the parameter of at least a part of artificial neurons among the plurality of artificial neurons in the neural network and based on the state defined for at least a part of artificial neurons by the definition information 384. The activation state can be either an activated state or a non-activated state. In the present embodiment, activation may be referred to as "firing", and non-activation may be referred to as "non-firing". As described below, the "firing" state is divided into an "rising phase" and a "falling phase" depending on whether the internal state is rising or not. "Non-firing", "rising phase", and "falling phase" are represented by a status Sti.

FIG. 44 schematically illustrates parameters of the neural network in a table form. Each neuron N has, as parameters, a threshold Tt and increase/decrease parameters ht, at, and bt. In addition, each artificial synapse includes, as parameters, the coupling coefficient BSt and the increase/decrease parameters ht, at, and bt. In FIG. 44, for each Ni, each parameter of all the artificial neurons directly connected to Ni by the artificial synapse, and each parameter of the artificial synapse, are listed in one line.

FIG. 45 is a diagram schematically illustrating an operation flow of the server 300 in a case where the robot 100 is activated or reset. When the server 300 receives that the robot 100 has been activated or reset, the parameter processing unit 340 performs initial setting of parameters of the neural network. For example, the parameter processing unit 340 acquires an initial value of the parameter from the storing unit 380, and generates parameter data of the neural network in a predetermined data structure (S1202). In addition, a parameter value of the neural network at time t0 is set. When the initial setting is completed, a loop related to time t is started in S1204.

In S1210, the parameter processing unit 340 calculates a parameter corresponding to the change caused by the electrical influence of the artificial synapse in the time step tn + 1. Specifically, BStij of arbitrary Sij is calculated.

In S1220, the parameter processing unit 340 calculates a parameter corresponding to the change caused by the chemical influence by the internally secreted substance in the time step tn + 1. Specifically, calculations of changes in the parameters of Ni and Sij influenced by the internal secretion artificial neurons are performed. More specifically, the calculations are performed, in the time step tn + 1, to calculate the increase/decrease parameter and the threshold of the internal state of the artificial neuron Ni influenced by the internal secretion artificial neuron, as well as the increase/decrease parameter and the coupling coefficient of Sij influenced by the internal secretion artificial neuron.

In S1230, the parameter processing unit 340 acquires an input from the outside of the neural network. Specifically, the parameter processing unit 340 acquires the output of the external input data generation unit 330.

In S1240, the parameter processing unit 340 calculates the internal state of Ni in the time step tn + 1. Specifically, Vimtn + 1 and the status Stti are calculated. Subsequently, in S1250, the value of each parameter at time tn + 1 is stored in the parameter 388 of the storing unit 380. In addition, the value of each parameter at time tn + 1 is output to the operation decision unit 350 and the switching control unit 360.

In S1260, the switching control unit 360 determines whether the parameter of Ni at the time step tn + 1 satisfies the switching condition of the recording format of the data to be stored in the recording data 392. When the parameter of Ni at the time step tn + 1 satisfies the switching condition of the recording format, the switching control unit 360 instructs the robot 100 to switch the recording format (S1270). Subsequently, when switching from the first recording format to the second recording format, the recording control unit 370 instructs tagging of information in the second recording format (S1280), and the processing proceeds to S1206. In contrast, when the parameter of Ni in the time step tn + 1 does not satisfy the switching condition of the recording format in S560, the processing proceeds to S506.

In S1206, the parameter processing unit 340 determines whether to end the loop. For example, in a case where the time indicated by the time step reaches a predetermined time or in a case where the sensor information from the robot 100 has not been received for a predetermined time, it is determined to end the loop. When the loop is not to be ended, the processing returns to S1210, and the next time step is further calculated. When the loop is to be ended, this flow is ended.

FIG. 46 is a diagram schematically illustrating calculation of a coupling coefficient of an artificial synapse. Here, a case where constants aij and bij are defined as initial values of the increase/decrease parameter will be described.

In a case where both Ni and Nj have fired at both ends of Sij at the time step of time tn, the parameter processing unit 340 calculates BStn + 1ij at time tn + 1 by calculating as BStn + 1ij = BStnij + atnij × (tn + 1 - tn). In contrast, when neither Si nor Sj has fired in the time step at time tn, the coupling coefficient BStn + 1ij at time tn + 1 is calculated as BStn + 1ij = BStnij + btnij × (tn + 1 - tn). When BStn + 1ij has a negative value, BStn + 1ij is set to 0. In Sij where BSij is a positive value, atij is a positive value, and btij is a negative value. In Sij where BSij is a negative value, atij is a positive value, and btij is a negative value.

As illustrated in FIG. 46, since synchronized firing has occurred in the artificial neurons at both ends at time t0, BStij increases at at0ij per unit time. In addition, since synchronized firing has not occurred at time t1, BStij decreases at |bt1ij| per unit time. In addition, due to the synchronized firing at time t4, BStij increases at at4ij per unit time.

FIG. 47 is a diagram schematically illustrating time evolution of a coupling coefficient in a case where a function htij is defined as an increase/decrease parameter of the coupling coefficient. The htij is defined at an elapsed time Δt (= t - tcf) ≥ 0 from tcf. htij is a function of at least Δt and takes a value of a real number.

A function 1000 illustrated in FIG. 47 is an example of htij. The function 1000 is a function of the coupling coefficients BStcfij and Δt at time tcf. The function 700 monotonically increases in a case where Δt is smaller than a predetermined value, and monotonically decreases, as a gradual decrease, toward 0 in a case where Δt is larger than the predetermined value. The function 1000 indicates a value BStcfij at Δt = 0.

FIG. 47 illustrates a coupling coefficient in a case where a function 700 is defined as an increase/decrease parameter of the coupling coefficient, indicating a coupling coefficient at synchronized firing of Ni and Nj at both ends at time t0. The parameter processing unit 340 calculates BStij at each of times t1 to t6 based on the functions 1000 and Δt. Synchronized firing of Ni and Nj has not occurred within the time range of time t1 to time t6. Therefore, for example, after time t2, the coupling coefficient monotonically decreases.

FIG. 48 schematically illustrates time evolution of the coupling coefficient at synchronized firing of Ni and Nj at time t2. The coupling coefficient is calculated similarly to FIG. 47 in a range of time t0 to time t2. When synchronized firing of Ni and Nj further occurred at time t2, the parameter processing unit 340 calculates a coupling coefficient at each of times, namely, times t3 to t6, in accordance with htij(t - t2, BSt2ij). In this manner, the coupling coefficient increases every time the synchronized firing is repeated. With this configuration, an effect of strengthening artificial synapse connections can be obtained as in the Hebb's rule applied to a living body. On the other hand, when the time duration with no occurrence of synchronized firing is long as illustrated in FIGS. 46 and 47, an effect that the artificial synapse connection is weakened is obtained.

FIG. 49 is a diagram schematically illustrating influence definition information defining a chemical influence given to a parameter. This influence definition information is used for calculation of a change in a parameter in S1220 of FIG. 45. The definition information includes: a condition related to the internal state of the internal secretion artificial neuron; information specifying the artificial neuron or the artificial synapse having an influence; and an expression defining the content of the influence.

In the example of FIG. 49, an internal secretion artificial neuron N2 is an internal secretion artificial neuron to which a drowsiness-inducing internally secreted substance is assigned. The definition information related to the internal secretion artificial neuron N2 prescribes: a condition of "Vmtn2 > Ttn2"; "emotion artificial neurons N1 and N3" as artificial neurons influenced by the internal secretion artificial neuron N2; and "Ttn + 1i = Ttni × 1.1" as a formula determining the content of influence. With this configuration, in a case where Vmtn2 exceeds Ttn2, the parameter processing unit 340 increases the thresholds of the emotion artificial neurons N1 and N3 at time tn + 1 by 10%. With this configuration, for example, it is possible to make it difficult to cause the emotion artificial neuron to fire in a case where drowsiness occurs. For example, by determining a neural network in which the output of the concept artificial neuron N7 defined as "the power storage level is the threshold or less" is connected to the input of the internal secretion artificial neuron N2, it is possible to embody a phenomenon in which emotion is less likely to increase when the power storage level is low.

The internal secretion artificial neuron N5 is an internal secretion artificial neuron to which dopamine is assigned. The first definition information related to the internal secretion artificial neuron N5 prescribes: a condition of "Vmtn5 > Ttn5 and Vmtn4 > Ttn4", Synapses "S49 and S95" as artificial synapses influenced by the internal secretion artificial neuron N5; and an expression of "atn + 1ij = atnij × 1.1" as an expression determining the content of influence. With this configuration, in a case where Vmtn5 exceeds Ttn5 and Vmtn4 exceeds Ttn4, the parameter processing unit 340 increases the increase/decrease parameter of the artificial synapses S49 and S95 at time tn + 1 by 10%.

With this configuration, in a case where the internal secretion artificial neuron of the reward system has fired, when the concept artificial neuron N4 defining the situation "the bell rang" has fired, it is possible to strengthen the connection between the concept artificial neurons N4 and N5 via the implicit artificial neuron N9. This makes it easier for the internal secretion artificial neuron N5 of the reward system to fire when the bell rang.

In addition, second definition information related to the internal secretion artificial neuron N5 prescribes: a condition of "Vmtn5 > Ttn5"; "N1" as an artificial neuron influenced by the internal secretion artificial neuron N5; and a formula "Ttn + 1i = Ttni × 1.1" as a formula determining the content of influence. With this configuration, in a case where Vmtn5 exceeds Ttn5, the parameter processing unit 340 decreases the increase/decrease parameter of the artificial neuron N1 at time tn + 1 by 10%. This makes it easier for the emotion of happy to fire when the internal secretion artificial neuron N5 of the reward system has fired.

With such a definition defining the influence on the internal secretion artificial neuron of the reward system, it is possible to establish a conditioning that the robot 100 takes an action expressing happiness only by ringing a bell after repetition of charging the robot 100 while ringing the bell.

The influence definition information is not limited to the example of FIG. 49. For example, a condition to be defined may be a condition that the internal state of the artificial neuron is a threshold or less. In addition, the condition to be defined may be a condition related to the status of the artificial neuron, for example, a condition related to a rising phase, a falling phase, or non-firing. In addition, the range of influence can be defined as "all artificial synapses connected to a specific artificial neuron" in addition to directly designating an artificial neuron or an artificial synapse. In addition, the formula of influence may be defined as a formula, in a case where the target is an artificial neuron, being a formula of adding a constant to the threshold or multiplying the increase/decrease parameter of the internal state by a constant, in addition to a formula of multiplying the threshold by a constant. In addition, in a case where the target is an artificial synapse, it is allowable to define a formula of multiplying the coupling coefficient by a constant, in addition to multiplying the increase/decrease parameter by a constant.

The influence definition information is stored in the definition information 384 of the storing unit 380. In this manner, the storing unit 380 stores the influence definition information defining the influence of at least one of the internal state and the firing state of the internal secretion artificial neuron on the parameter of at least one of another artificial neuron and another artificial synapse, which are not directly connected to the internal secretion artificial neuron by the artificial synapse. Based on at least one of the internal state and the firing state of the internal secretion artificial neuron and the influence definition information, the parameter processing unit 340 updates the parameter of at least one of the another artificial neuron and the another artificial synapse, which are not directly connected to the internal secretion artificial neuron through the artificial synapse. In addition, the parameter of the another artificial neuron influenced by at least one of the internal state and the firing state of the internal secretion artificial neuron can include at least one of parameters regarding the another artificial neuron, namely, a parameter determining a threshold, a parameter determining a firing state, and a parameter determining time evolution of an output at the time of firing, of the another artificial neuron. In addition, the parameter of the artificial synapse influenced by at least one of the internal state and the firing state of the internal secretion artificial neuron can include at least one of a parameter determining a coupling coefficient of the artificial synapse and a parameter determining time evolution of the coupling coefficient after the latest synchronized firing of two artificial neurons connected via the artificial synapse. The influence definition information includes information determining the influence of the firing state of the internal secretion artificial neuron associated with the reward system on the threshold of the emotion artificial neuron. When the internal secretion artificial neuron has fired, the parameter processing unit 340 updates the threshold of the emotion artificial neuron in accordance with the influence definition information.

FIG. 50 illustrates a flowchart calculating Vtn + 1i and Stn + 1i. The processing of this flowchart can be applied to a part of the processing in S1240 of FIG. 45. In S1300, the parameter processing unit 340 determines whether Stni indicates non-firing.

In a case where Stni indicates non-firing, the parameter processing unit 340 calculates an input Itn + 1i to Ni (S1310). Specifically, when an input from the outside of the neural network is not connected to Ni, the calculation is performed by Itn + 1i = ΣjBStn + 1ji × Vmtnj × f(Stnj). When an input from the outside of the neural network is connected to Ni, it is calculated by Itn + 1i = ΣjBStn + 1ji × Vmtnj × f(Stnj) + Etn + 1i. Here, Etni is an input at time tn from the outside of the neural network.

In addition, f(S) returns 0 when S is a value indicating non-firing, and returns 1 when S is a value indicating a rising phase or a falling phase. This model corresponds to a model in which a synapse transmits an action potential only when a neuron has fired. Note that f(S) = 1 may be returned. This corresponds to a model that transmits the membrane potential regardless of the firing state of the neuron.

In S1312, the parameter processing unit 340 determines whether Itn + 1i exceeds Ttn + 1i. When Itn + 1i exceeds Ttn + 1i, the parameter processing unit 340 calculates Vmtn + 1i based on the increase/decrease parameter and sets Stn + 1i to a value indicating the rising phase or the falling phase in accordance with Vmtn + 1i (S1314), so as to end this flow.

In S1300, when Stni is the rising phase or the falling phase, the parameter processing unit 340 calculates Vmtn + 1i (S1320). In a case where Vmti has reached Vmin by tn + 1, the parameter processing unit 340 sets Stn + 1i to a value indicating non-firing, and in a case where Vmti has not reached Vmin by tn + 1, the parameter processing unit 340 sets Stn + 1i to a value of the rising phase or the falling phase, and ends this flow. The parameter processing unit 340 sets the value of the falling phase to Stn + 1i when Vmti has reached Vmax by tn + i, and sets the value of the rising phase to Stn + 1i when Vmti has not reached Vmax by tn + 1.

In this manner, when Ni is firing, even when the output lowers to the threshold or less, the output of Ni does not depend on the input. Such a period corresponds to an absolute refractory period in a neuron of a living body.

FIG. 51 is a diagram schematically illustrating a calculation example of Vti in a case where Ni does not fire.

Ni indicates non-firing in the time step at time t0. When It1i at time t1 is Tt1i or less, the parameter processing unit 340 calculates Vt1i at time t1 by Vt1i = It1i, and calculates Vti in a period from time t0 to t1 by Vti = It0i. Similarly, the parameter processing unit 340 maintains the value of Vtn calculated at the time step tn until the next time step, and changes the value of Vtn to Itn + 1 at Vtn + 1.

FIG. 52 is a diagram schematically illustrating a calculation example of Vit in a case where Ni fires. FIG. 52 is a calculation example in a case where the constants ai and bi are defined.

Ni indicates non-firing in the time step at time t0. When It1i at time t1 exceeds Tt1i, the parameter processing unit 340 calculates Vt1i at time t1 by Vt1i = It1i, and calculates Vti in a period from time t0 to t1 by Vti = It0i. Here, It1i at time t1 is supposed to be Vmax or less. In a case where It1i at time t1 exceeds Vmax, It1i = Vmax is supposed to be satisfied.

As illustrated in FIG. 52, the parameter processing unit 340 increases Vti by atij per unit time during a period after time t1 until the time Vti reaches Vmax. In addition, the parameter processing unit 340 decides the status Sti of Ni in this period as the rising phase.

In addition, when Vti reaches Vmax, Vti is to be decreased by |bti| per unit time during a period until Vti reaches Vmin. In addition, the parameter processing unit 340 decides the status of Ni in this period as the falling phase. When Vti reaches Vmin, Vt6i at the next point of time is calculated by Vt6i = It6i. In addition, the status after Vti reaches Vmin is decided to be non-firing.

When the status of Ni is in the falling phase, Vmti does not depend on Iti even if calculated Vmti falls below Tti. Even if Vmti falls below Tti, the parameter processing unit 340 calculates Vmti in accordance with the increase/decrease parameter until Vmti reaches Vmin.

FIG. 53 is a diagram schematically illustrating time evolution of a coupling coefficient in a case where a function hti is defined as an increase/decrease parameter of Ni. In general, hti is defined at an elapsed time Δt (= t - tf) ≥ 0 from a firing time tf. hti is at least a function of Δt. hti takes a real number value, and a value range of hti is Vmin or more and Vmax or less.

A function 1300 illustrated in FIG. 53 is an example of hti. The function 1300 is a function of Vmtfi and Δt at time tf. The function 1300 monotonically increases in a case where Δt is smaller than a predetermined value, and monotonically decreases in a case where Δt is larger than the predetermined value. The function 1300 indicates a value Vmtfi at Δt = 0.

FIG. 53 illustrates an output in a case where a function 1400 is defined as an increase/decrease parameter of the internal state and Ni has fired at time t1. The parameter processing unit 340 calculates Vmti at each of the times t1 to t5 based on the function 1400, Δt, and Vmfi. Since Vmti has reached Vmin at time t5, Vmi = It6i is established at time t6.

FIG. 54 is a diagram illustrating an example of a rule 1400 stored in a recording format switching rule 390 in a format of a table. The rule 1400 defines an operation of switching the information recording format, that is "switching to a low-compression format" when at least a first condition that Vmti of any of N1, N3, Nb, and Nc exceeds a threshold is satisfied. With this configuration, in a case where information is recorded in the high-compression format, and when a state in which the first condition is not satisfied has turned to a state in which the first condition is satisfied, the switching control unit 360 determines to switch the recording format of the information to the low-compression format. An example of the threshold is a value obtained by multiplying Vmax of each Nj by a constant 0.9. The threshold may be higher than Tit.

The rule 1400 also defines an operation of switching the data recording format, that is, "switching to the low-compression format" when at least a second condition that the total value of Vmti of N5 and Na exceeds the threshold is satisfied. With this configuration, in a case where information is recorded in the high-compression format, and when a state in which the second condition is not satisfied has turned to a state in which the second condition is satisfied, the switching control unit 360 determines to switch the recording format of the information to the low-compression format. An example of the threshold is a value obtained by multiplying the total value of Vmax of each Nj by a constant 0.9. The threshold may be higher than the total value of Tit of each Nj.

N1, N3, Nb, and Nc are emotion artificial neurons in which emotions of "happy", "sorrowful", "scared", and "joyful" are defined, respectively. Accordingly, the intensity of the emotion is decided based on the internal state of the emotion artificial neuron in the parameter processing unit 340, and the recording format can be switched to the low-compression format in accordance with an event in which the decided intensity of the emotion exceeds the predetermined threshold.

N5 and Na are internal secretion artificial neurons in which internally secreted substances of "dopamine" and "noradrenaline" are defined, respectively. The total value of the parameters of the internal state of these internal secretion artificial neurons is an example of an index representing the intensity of emotion, "excitement". Accordingly, the intensity of the emotion is decided based on the internal state of the internal secretion artificial neuron in the parameter processing unit 340, and the recording format can be switched to the low-compression format in accordance with an event in which the decided intensity of the emotion exceeds the predetermined threshold.

In addition, the rule 1400 defines an operation of switching the data recording format, that is, "switching to the high-compression format" when a third condition that Vmti of any of N1, N3, Nb, and Nc is the first threshold or less and the total value of Vmti of N5 and Na is the second threshold or less is satisfied. Accordingly, in a case where information is recorded in the low-compression format, and when a state in which the third condition is not satisfied turned to a state in which the third condition is satisfied, the switching control unit 360 determines to switch the recording format of the information to the high-compression format. In this manner, the recording format can be switched to the high-compression format in accordance with an event in which the intensity of the emotion becomes a predetermined threshold or less.

The first threshold of the third condition is a value obtained by multiplying Vmax of each Nj by a constant 0.8. The second threshold of the third condition is a value obtained by multiplying the total value of Vmax of each Nj by a constant 0.8. In this manner, the description is an exemplary case where the first threshold of the third condition is smaller than the threshold of the first condition and the second threshold of the third condition is smaller than the threshold of the second condition. However, the first threshold may be the same as the threshold of the first condition, and the second threshold may be the same as the threshold of the second condition. The first threshold of the third condition may be higher than Tit of each Nj. In addition, the second threshold of the third condition may be higher than the total value of Tit of each Nj. The threshold of each condition is not limited to these examples, and can be determined by adopting various values.

According to the system 5, the robot 100 continuously transmits information in a high-compression format such as skeleton data to the server 300 and causes the server 300 to record the transmitted information during a period in which the robot 100 is not in a significantly high emotional state. The information such as continuous skeleton data recorded in the server 300 can be used at the time of analyzing the memory of the robot 100. When the emotion of the robot 100 has been significantly raised, the robot 100 starts transmitting the full HD video data and the voice data, and causes the server 300 to record information in a low-compression format including the full HD video data and the voice data in addition to the skeleton data during a period in which the highly emotional state with a certain value or more continues. Subsequently, for example, in a case where the user 10 requests the robot 100 to provide a video of memories of the robot 100, the robot 100 requests the server 300 to transmit full HD video data and voice data, and provides the video data and the voice data received from the server 300 to the user 10.

In this manner, according to the system 5, the high-quality video data of the scene that has made the robot 100 highly emotional can be accumulated in the server 300. On the other hand, in a case where the robot 100 is not highly emotional, simplified information such as skeleton data can be accumulated in the server 300. In this manner, like a human, the robot 100 can leave its clear memories at the time of becoming highly emotional, and can leave simplified memories at the time of not becoming highly emotional.

While the present embodiment uses "happy", "sorrowful", "scared", "joyful", and "excited" as emotions, the emotions handled by the system 5 are not limited thereto. In addition, in the present embodiment, "dopamine", "serotonin", and "noradrenaline" have been described as internally secreted substances, but the internally secreted substances handled by the system 5 are not limited thereto.

### [Action corresponding to emotion]

The robot 100 may take an action to control the emotion value when recording the tagged information. The robot 100 emulates a tendency that a human takes an action corresponding to an emotion. For example, the robot 100 can take an action to avoid an event to cause negative emotions ("angry", "sorrowful", etc.). This is emulation of an action of a human for avoiding or eliminating stress. In addition, the robot 100 may take an action, for example, for increasing a positive emotion ("joyful", "happy", etc.). This is emulation of an action of a human sharing an event causing a positive emotion with another person.

As described above, the recording control unit 370 processes at least part of the information continuously detected by the sensor to generate information, and controls to record the generated information.

The operation decision unit 350 decides the operation of the robot 100 for controlling the emotion value based on the emotion value representing the emotion of the robot 100 or the information detected by the sensor. The operation decision unit 350 can decide the operation of the robot 100 at a timing at which the recording control unit 370 records information (for example, immediately before recording, during recording, or immediately after recording).

The operation decision unit 350 makes an operation decision at a timing of recording information in parallel with or interrupting other operation decisions described so far. In addition, the operation decision unit 350 decides the operation at the timing of recording information in accordance with the condition table and the operation table, which are included in the operation decision rule 382.

The operation decision unit 350 refers to the condition table and determines whether a condition corresponding to the type of emotion is satisfied. In a case where the condition is satisfied, the operation decision unit 350 further refers to the condition table and specifies whether to increase or decrease the emotion value of the corresponding emotion.

FIG. 55 is a diagram illustrating an example of a condition table. As illustrated in FIG. 55, the condition table stores the type, condition, and increase/decrease of the emotion in association with each other.

Furthermore, the operation decision unit 350 refers to the operation table and acquires an operation for increasing or decreasing the emotion value of each emotion type. The operation decision unit 350 decides the acquired operation as the operation of the robot 100.

FIG. 56 is a diagram illustrating an operation table. As illustrated in FIG. 56, the operation table stores types of emotions, increases/decreases of emotion, and operations in association with each other.

For example, in a case where a condition that "the emotion value is a threshold or more" is satisfied regarding the type of the emotion of "angry", the operation decision unit 350 decides, based on the condition table, an operation of "decreasing" the emotion value of "angry". At this time, the operation decision unit 350 refers to the operation table and specifies that the operation for decreasing the emotion value of "angry" is "turning off the power supply". In this case, the operation decision unit 350 decides an operation of "turning off the power supply" on the robot 100 in order to reduce the emotion value of "angry". It is conceivable that turning off the power supply on the robot 100 would stop the change in their emotion value, but here, the operation of decreasing the emotion value includes an operation of stopping an increase in the emotion value.

Note that, as illustrated in FIG. 56, the operation of decreasing the emotion value of "angry" includes not only "turning off the power supply" but also "moving to another place". In this manner, there may be a plurality of operations of similarly controlling (increasing or decreasing) the emotion value of the same emotion. In this case, the operation decision unit 350 may randomly determine one operation from a plurality of operations, or may decide one operation in accordance with a predetermined rule. Note that "moving to another place" is an operation for moving away from the cause of increasing the emotion value of "angry" (for example, a person who harms the robot 100).

The decision of the operation by the operation decision unit 350 is not limited to the example described here. The operation decision unit 350 can decide the operation as follows in accordance with the condition table of FIG. 15 and the operation table of FIG. 16.

For example, in a case where the increase rate (increase amount per unit time) of the emotion value of "angry" is a threshold or more, the operation decision unit 350 decides an operation for decreasing the emotion value.

In addition, for example, regarding the emotion of "angry", in a case where information to be recorded is the same as that when a condition is desired to be satisfied in the past, the operation decision unit 350 decides an operation for decreasing the emotion value. For example, it is assumed that, when the first video data is recorded in the past, the emotion value of "angry" becomes a threshold or more, and the operation decision unit 350 performs an operation for decreasing the emotion value of "angry". In addition, it is assumed that the second video data to be currently recorded has the content similar to those of the first video data. For example, the content of the video data includes a scene in which the user hits the robot 100. At this time, the operation decision unit 350 determines that stress needs to be avoided regardless of the emotion value, and decides an operation for decreasing the emotion value of "angry".

On the other hand, for example, in a case where the emotion value of "joyful" is a threshold or more, the operation decision unit 350 decides an operation for increasing the emotion value. In addition, for example, in a case where the increase rate of the emotion value of "joyful" is a threshold or more, the operation decision unit 350 decides an operation for increasing the emotion value. The operation for increasing the emotion value of "joyful" is, for example, "singing a song" (outputting a voice including vocal music).

In this manner, the operation decision unit 350 can decide an operation for increasing the emotion value of the positive emotion such as "joyful", in contrast to deciding an operation for decreasing the emotion value of the negative emotion such as "angry".

In addition, the combination of the condition and the operation is not limited to those illustrated in FIGS. 15 and 16. For example, the operation decision unit 350 can decide the operation as follows.

For example, in a case where the emotion value of "angry" is a threshold or more and the emotion value of "sorrowful" is a threshold or more, or in a case where the emotion value of "sorrowful" is approaching the emotion value of "angry", the operation decision unit 350 decides an operation for decreasing the emotion value of at least one of "angry" and "sorrowful". The emotion value of "sorrowful" approaching the emotion value of "angry" means that, for example, the emotion value of "sorrowful" is less than the emotion value of "angry", and an increase rate of the emotion value of "sorrowful" is a threshold or more.

In addition, for example, the robot 100 stores, as a blacklist, an image of the face of a surrounding user when the emotion value of "angry" has become the threshold or more in the past. In a case where it is recognized from the image around the robot 100 that the user included in the blacklist approaches the robot 100, the operation decision unit 350 decides an operation of moving from the place, thereby avoiding in advance a situation in which the emotion value of "angry" increases.

In addition, for example, the robot 100 stores surrounding weather (for example, severe thunderstorms) when the emotion value of "fear" became a threshold or more in the past. Subsequently, when the weather around the robot 100 is predicted to be the stored weather, the operation decision unit 350 decides an action of turning off the power supply. The operation decision unit 350 may predict the weather from ambient temperature and humidity, images of clouds, etc., or may predict the weather based on weather forecast information obtained from an external server or the like.

The above describes that the operation decision unit 350 decides an operation of decreasing the emotion value of the negative emotion ("angry", "sorrowful", etc.) and decides an operation of increasing the emotion value of the positive emotion ("joyful", "delighted", etc.). On the other hand, the operation decision unit 350 may decide an operation of increasing the emotion value of the negative emotion or may decide an operation of decreasing the emotion value of the positive emotion.

For example, when the emotion of the user is "sorrowful" and the emotion value of "sorrowful" of the robot 100 is less than the threshold, the operation decision unit 350 decides an action of increasing the emotion value of "sorrowful".

In addition, for example, when the emotion of the user is "sorrowful" and the robot 100 has the emotion value of "joyful" indicating a threshold or more, the operation decision unit 350 decides an action of decreasing the emotion value of "joyful".

This makes it possible for the user and the robot 100 to share emotions, leading to improvement of the satisfaction level of the user.

In addition, as the action for decreasing the emotion value of the negative emotion, the operation decision unit 350 may decide an operation for removing a phenomenon that increases the emotion value of the negative emotion. For example, in a case where the emotion of "angry" of the robot 100 is increased by the user hitting the robot 100, the operation decision unit 350 decides an operation of making a statement requesting the user to stop hitting.

In addition, the operation decision unit 350 may decide an operation of making the robot 100 temporarily sleep instead of the operation of turning off the power supply of the robot 100. During sleep, the robot 100 does not perform any operation other than sleep, and returns from sleep after a certain period of time has elapsed. During the sleep, the emotion value of the robot 100 does not increase or decrease.

By deciding the control of one or more devices constituting the robot 100, the operation decision unit 350 can decide the operation of the robot. The devices constituting the robot 100 include the control target 252, the sensor unit 200, the display unit 157, etc. That is, the devices constituting the robot 100 include motors that move limbs, etc., various sensors including a camera, a speaker, a display that displays an image, a power supply, and the like.

The operation decision unit 350 can decide the control of the power supply that supplies power to the robot 100 to decide the operation of "turning off the power supply". In addition, by deciding the control of a motor for moving a device for movement (for example, a wheel) provided in the robot 100, the operation decision unit 350 can decide an operation of "moving to another place".

Furthermore, by deciding the control of the motor that moves the arms of the robot 100, the operation decision unit 350 can decide an operation of "shaking the shoulders".

In addition, by deciding the control of the sensitivity of the sensor of the robot 100, the operation decision unit 350 can decide an operation of changing the degree of concern of the robot 100 about the surroundings of the robot 100. For example, the operation decision unit 350 can decide an operation of "being uninterested" by decreasing the sensitivity of the voice sensor of the robot 100.

Furthermore, by deciding the control of the motor that moves the eyeballs of the robot 100, the operation decision unit 350 can decide an operation of "shifting the eyes". By deciding the control of the motor that moves the arms and the legs, the operation decision unit 350 can decide the operation using the limbs.

FIG. 57 is a flowchart illustrating a flow of processing of deciding an operation at a timing of recording information.

First, the recording control unit 370 starts recording processing (step S2101). Here, the operation decision unit 350 determines whether a condition for increasing or decreasing a specific emotion value is satisfied (step S2102). For example, the operation decision unit 350 refers to the condition table and determines whether the condition is satisfied.

When the condition is satisfied in step S2103 (step S2103, Yes), the operation decision unit 350 decides an operation for increasing or decreasing the emotion value, and causes the robot 100 to execute the decided operation (step S2104). Subsequently, the recording control unit 370 records information (step S2105) and ends the recording processing (step S2106).

In a case where the condition is not satisfied in step S2103 (step S2103, No), the recording control unit 370 records information (step S2105) and ends the recording processing (step S2106).

In the example of FIG. 57, the operation decision unit 350 performs processing of deciding the operation during a period from the start of the recording processing to the end of the recording processing by the recording control unit 370. On the other hand, the timing at which the operation decision unit 350 performs the processing of deciding the operation is not limited to the timing described with reference to FIG. 57.

The operation decision unit 350 may perform processing of deciding the operation before the recording control unit 370 starts the recording processing. In addition, the operation decision unit 350 may perform processing of deciding the operation after the recording control unit 370 finishes the recording processing.

Furthermore, the function of the server 300 may be implemented by one or more computers. At least a part of the functions of the server 200 may be implemented by a virtual machine. In addition, at least a part of the functions of the server 300 may be implemented in a cloud. Among the functions of the server 300, the functions of the components other than the storing unit 380 can be implemented by the CPU operating based on the program. For example, at least a part of the processing described as the operation of the server 300 can be implemented by the processor controlling each hardware (for example, a hard disk, memory, or the like) of the computer in accordance with the program. In this manner, at least a part of the processing of the server 300 can be implemented by the cooperative operation of hardware and the program, the hardware including the processor, the hard disk, the memory, etc., and this cooperative operation is achieved by the control of each piece of hardware by the processor operating in accordance with the program. That is, the program can cause the computer to function as each component of the server 300. Similarly, among the components of the robot 100, the functions of the components other than the control target 252 and the sensor unit 200 can be implemented by the CPU operating based on a program. That is, the program can cause the computer to function as each component of the robot 100. The computer may load a program for controlling the execution of the above-described processing, operate in accordance with the loaded program, and execute the processing. The computer can load the program from a computer-readable recording medium storing the program. In addition, the program may be supplied to the computer through a communication link, and the computer may load the program supplied through the communication link.

In the embodiment described above, the server 300 different from the robot 100 is responsible for the processing of the neural network. In addition, a server 300 different from the robot 100 stores information such as video data. However, the robot 100 itself may perform the function of the server 300, such as processing of the neural network. In addition, the robot 100 itself may store information such as video data. The robot 100 is an example of a device to be a control target to be controlled by the server 300. The device to be a control target to be controlled is not limited to the robot 100, and various devices such as home electric appliances, vehicles, and toys can be applied as the control target.

While the present invention has been described using the embodiments, the technical scope of the present invention is not limited to the scope described in the above embodiments. It is apparent to those skilled in the art that various modifications or improvements can be made to the above embodiments. It is apparent from the description of the claims that modes to which such changes or improvements have been added can also be included in the technical scope of the present invention.

It should be noted that the order of execution of each processing such as operations, procedures, steps, and stages in the devices, systems, programs, and methods illustrated in the claims, the specification, and the drawings can be implemented in any order unless "before", "prior to", or the like is explicitly stated, and unless the output of the previous processing is to be used in the subsequent processing. Descriptions using "First,", "Next,", and the like used for convenience in the operation flows in the claims, specification, and the drawings are not intended to indicate that it is essential to perform operations in the order described.

Regarding the above embodiments, the following supplementary notes are further disclosed.

### (Supplementary note 1)

A providing device including:
an acquisition unit that acquires at least one of information related to character setting and information related to a user;
a generation unit that generates information related to the character using a trained model that is designed to output information related to the character when at least one of the information related to the setting acquired by the acquisition unit and the information related to the user has been input; and
a providing unit that provides the information related to the character generated by the generation unit.

### Reference Signs List

- 1: CONTROL SYSTEM
- 5: SYSTEM
- 10, 11, 12: USER
- 20: COMMUNICATION NETWORK
- 100, 101, 102: ROBOT (ELECTRONIC DEVICE)
- 152: PROCESSING UNIT
- 158: COMMUNICATION UNIT
- 200: SENSOR UNIT
- 201: MICROPHONE
- 202: 3D DEPTH SENSOR
- 203: 2D CAMERA
- 204: DISTANCE SENSOR
- 205: ACCELERATION SENSOR
- 206: THERMAL SENSOR
- 207: TOUCH SENSOR
- 208: BIOMETRIC SENSOR
- 210: SENSOR MODULE UNIT
- 211: VOICE EMOTION RECOGNITION UNIT
- 212: UTTERANCE COMPREHENSION UNIT
- 213: EXPRESSION RECOGNITION UNIT
- 214: FACE RECOGNITION UNIT
- 220: STORING UNIT
- 221: REACTION RULE
- 222: HISTORY DATA
- 223: EMOTION RECOGNITION MODEL
- 224: EMOTION PREDICTION MODEL
- 225: CHARACTER DATA
- 230: USER STATE RECOGNITION UNIT
- 231: EMOTION ESTIMATION UNIT
- 232: EMOTION DECISION UNIT
- 233: EMOTION RECOGNITION UNIT
- 234: ACTION RECOGNITION UNIT
- 235: PREDICTION UNIT
- 236: ACTION DECISION UNIT
- 238: STORAGE CONTROL UNIT
- 250: ACTION CONTROL UNIT
- 252: CONTROL TARGET
- 260: POWER CONTROL UNIT
- 280: COMMUNICATION PROCESSING UNIT
- 290: EVENT DETECTION UNIT
- 300: SERVER
- 302: PROCESSING UNIT
- 308: COMMUNICATION UNIT
- 310: INITIAL VALUE SETTING UNIT
- 330: EXTERNAL INPUT DATA GENERATION UNIT
- 340: PARAMETER PROCESSING UNIT
- 350: OPERATION DECISION UNIT
- 360: SWITCHING CONTROL UNIT
- 370: RECORDING CONTROL UNIT
- 380: STORING UNIT
- 382: OPERATION DECISION RULE
- 384: DEFINITION INFORMATION
- 386: PARAMETER INITIAL VALUE
- 388: PARAMETER
- 390: RECORDING FORMAT SWITCHING RULE
- 392: RECORDING DATA
- 400: COOPERATIVE DEVICE
- 500: PROVIDING DEVICE
- 510: ACQUISITION UNIT
- 520: CONTROL UNIT
- 521: TRAINED MODEL GENERATOR
- 522: GENERATION UNIT
- 530: PROVIDING UNIT
- 540: STORAGE UNIT
- 541: TRAINED MODEL
- 600: NEURAL NETWORK
- 700, 900: EMOTION MAP
- 1200: COMPUTER
- 1210: HOST CONTROLLER
- 1212: CPU
- 1214: RAM
- 1216: GRAPHICS CONTROLLER
- 1218: DISPLAY DEVICE
- 1220: INPUT/OUTPUT CONTROLLER
- 1222: COMMUNICATION INTERFACE
- 1224: STORAGE DEVICE
- 1226: DVD DRIVE
- 1227: DVD-ROM
- 1230: ROM
- 1240: INPUT/OUTPUT CHIP
- 2901: DETECTOR
- 2902: COLLECTOR
- 2903: OUTPUT CONTROLLER
- 2911: HANDLING INFORMATION

## Claims

1. An electronic device comprising
a storage unit that stores, as data for deciding an emotion of each user, a relationship among an expression, a voice, a gesture, biometric information, and the emotion, for each user as a database.

2. The electronic device according to claim 1, further comprising
a decision unit that decides the emotion of the user by using sensor information and the database.

3. The electronic device according to claim 2, further comprising
a control unit that decides its own action corresponding to the emotion of the user, and controls a control target based on the decided own action.

4. The electronic device according to claim 3,
wherein the control unit decides its own action corresponding to a combination of the emotion of the user and its own emotion.

5. The electronic device according to claim 3,
wherein, in a case where an emotion value indicating positive/negative of the emotion of the user is a negative value, the control unit decides an action of increasing the emotion value of the user.

6. The electronic device according to claim 3,
wherein, having received, from the user, a voice requesting to increase the emotion value, the control unit decides an action of increasing the emotion value of the user.

7. The electronic device according to claim 1,
wherein the electronic device is either mounted on a stuffed toy or connected, by a wireless or wired connection, to a control target device mounted on the stuffed toy.

8. An electronic device comprising
an estimation unit that estimates the emotion of the user based on sensor information and a state of the user.

9. An electronic device comprising
a prediction unit that predicts a future emotional state of the user from a change in a past emotional state of the user based on an emotion prediction model.

10. An electronic device comprising
a prediction unit that analyzes emotions of a plurality of users existing in a same space and predicts an event to be caused by interaction between the users based on the analyzed emotions of each of the users.

11. An action control system comprising
an output controller that controls an electronic device having a text generation model to perform an action that promotes a positive emotional experience for the user by using an emotion database unique to each user.

12. An electronic device comprising
a control unit that recognizes an action of a user, decides its own action using history data being updated based on the recognized action of the user and information related to the user, and controls a control target based on the decided own action.

13. An electronic device comprising
a control unit that recognizes an action of a user, decides its own action based on the recognized action of the user and information related to the user, stored in a storing unit and that has undergone predetermined privacy protection measures and security measures, and controls a control target based on the decided own action.

14. An electronic device comprising:
a sensing unit that senses an emotional state of a user; and
a power control unit that controls power consumption based on the sensed emotional state of the user.

15. An electronic device comprising
an emotion recognition unit that recognizes an emotion of a user based on an emotion recognition model generated for each user using information related to an operation of the user as input data.

16. An electronic device comprising:
a recognition unit that recognizes a state of a user;
an estimation unit that estimates an emotion of the user based on the state of the user recognized by the recognition unit; and
a control unit that controls a control target so as to express an emotion corresponding to the emotion of the user estimated by the estimation unit in alignment with the state of the user recognized by the recognition unit.

17. A control system, being a control system that controls an action of an electronic device, the control system comprising:
a recording control unit that processes at least part of information continuously detected by a sensor to generate information, and records the generated information; and
an operation decision unit that decides an operation of the electronic device for controlling an emotion value representing an emotion of the electronic device, based on the emotion value or information detected by the sensor.
